# EUROPEAN PATENT APPLICATION

(11) **EP 1 630 186 A1**
(43) Date of publication of application: **01.03.2006**
(21) Application number: 04733981.7
(22) Date of filing: 19.05.2004
(51) Int. Cl.: C08G 18/62, C08L 101/10, C08L 71/02, C09J 201/00, C09K 3/10, F16K 15/14, C09J 175/00

(54) **CURING COMPOSITION**

(30) Priority: 29.05.2003 JP 2003153299
(71) Applicant: Kaneka Corporation, Kita-ku Osaka-shi, Osaka 530-8288 (JP)
(72) Inventor: HASEGAWA, Nobuhiro Osaka-Factory, Kaneka Co., Settsu-shi, Osaka 5660072 (JP); NAKAGAWA, Yoshiki Osaka-Factory, Kaneka Co., Settsu-shi, Osaka 5660072 (JP)
(74) Representative: Hart Davis, Jason
(86) International application number: PCT/JP2004/007157
(87) International publication number: WO 2004/106400

(57) **Abstract**

The present invention provides a curable composition containing (A) a vinyl polymer (I) having a crosslinkable functional group and (B) an organic polymer (II) having a group reactive with an isocyanato group and having a different main chain structure from that of the component (A). It is possible to provide a composition having balanced physical properties in which characteristics of both the polymer (I) as the component (A) and the polymer (II) as the components (B) are exploited. Specifically, the present invention provides cured objects having high strength at break, and good heat resistance, weatherability, and oil resistance.

## Description

### Technical Field

The present invention relates to a curable composition containing a vinyl polymer having a crosslinkable functional group and an organic polymer having a group reactive with an isocyanato group.

### Background Art

As the functional group-containing curable composition, for example, moisture-curing liquid polymers which have crosslinkable silyl groups and whose main chain comprises a polysiloxane, a polyoxypropylene, or a polyisobutylene have been already known. However, with respect to curable compositions including such polymers, there are some issues that remain to be improved. In the polysiloxane-based composition, although excellent weatherability, heat resistance, low-temperature resistance, flexibility, etc. are exhibited, there remain problems with staining due to bleeding of the low-molecular component and paintability. In the polyoxypropylene-based composition, although excellent flexibility, paintability, and resistance to staining are exhibited, in some cases, weatherability is not sufficient. In the polyisobutylene-based composition, although the composition is characterized by its high weatherability and moisture permeation resistance, the viscosity is relatively high, which may result in a difficulty in handling, and some consideration is needed to produce a one-component product.

Furthermore, polymers having an alkenyl group as the functional group are also used as curable compositions. It is known that use of a hydrosilyl group-containing compound as a curing agent can provide cured objects that are excellent in heat resistance, durability, and curing properties in the inner regions. As the main chain of such an alkenyl group-containing polymer, various polymers are known, and examples thereof include polyether polymers, such as polyethylene oxide, polypropylene oxide, and polytetramethylene oxide; hydrocarbon polymers, such as polybutadiene, polyisoprene, polychloroprene, polyisobutylene, and hydrogenated products thereof; polyester polymers, such as polyethylene terephthalate, polybutylene terephthalate, and polycaprolactone; and silicone polymers, such as polydimethylsiloxane.

With respect to curable compositions including such polymers, there are also issues that remain to be improved. For example, in the polyether-based cured objects, depending on the application, heat resistance and weatherability may be insufficient. In the hydrocarbon-based cured objects, such as polybutadiene-based or polyisoprene-based cured objects, because of internal double bonds remaining in the main chain, depending on the application, heat resistance and weatherability may be slightly insufficient. In the polyisobutylene-based cured objects which do not contain internal double bonds, although excellent weatherability is exhibited, the viscosity is relatively high, in some cases resulting in a difficulty in handling. In the polyester-based cured objects, depending on the application, weatherability may be insufficient. In the silicone-based cured object, although exceptional weatherability, heat resistance, low-temperature resistance, and workability are exhibited, there remain problems in paint adhesion, staining properties, etc.

On the other hand, various types of functional group-containing vinyl polymers have been known. Examples of the synthetic processes which have been disclosed include a process for synthesizing an alkenyl group-terminated (meth)acrylic polymer in which an alkenyl group-containing disulfide is used as a chain transfer agent (refer to Patent Document 1); a process in which a vinyl polymer having hydroxyl groups at both ends is synthesized using a hydroxyl group-containing disulfide, and then an alkenyl group-terminated (meth)acrylic polymer is produced through the reactivity of the hydroxyl groups (refer to Patent Document 2); and a process in which a vinyl polymer having hydroxyl groups at both ends is synthesized using a hydroxyl group-containing polysulfide, and then a silyl group-terminated (meth)acrylic polymer is synthesized through the reactivity of the hydroxyl groups (refer to Patent Document 3).

Furthermore, on the other hand, an acrylic rubber polymer into which an active chlorine group or an epoxy group is introduced has been used as an acrylic rubber composition for molding, and thereby molded objects having high heat resistance and oil resistance have been obtained. In order to meet the needs for further improvement in heat resistance, a technique for introducing a vinyl group-containing organosilicon group has been proposed (refer to Patent Document 4).

Curable compositions containing the polymers containing alkenyl groups or crosslinkable silyl groups at their side chains obtained by the processes described above are used for paint having high weatherability and the like.

In these processes, although polymers can be easily produced, it is difficult to ensure introduction of functional groups at both ends of the polymers, and the cured objects therefrom have insufficient rubber properties, such as elongation. Thus, it has not been possible to obtain curable compositions having satisfactory characteristics. In order to ensure introduction of functional groups at both ends, a large amount of chain transfer agent must be used, giving rise to a problem in the production step. Furthermore, in these processes, since ordinary radical polymerization is used, it is difficult to control the molecular weight and the molecular weight distribution (ratio of weight-average molecular weight to number-average molecular weight) of the resulting polymer.

If a vinyl polymer having a crosslinkable functional group at its molecular end can be produced by a simple method, it is possible to obtain cured objects having physical properties that are superior to those of the polymer having a crosslinkable group at its side chain. Consequently, production methods therefor have been studied by many researchers. However, it has not been easy to produce such a polymer on an industrial scale. In order to overcome this problem, processes for producing functional group-terminated (meth)acrylic polymers have been developed. In particular, with respect to a polymer synthesized using living radical polymerization, the molecular weight and the molecular weight distribution can be freely controlled, and a functional group can be quantitatively introduced at its end. As a result, such a polymer has excellent weatherability, heat resistance, oil resistance, etc., and can be used for curable compositions having good mechanical properties that cannot be obtained by the polyether-based polymers, the hydrocarbon-based polymers, or the polyester-based polymers described above (refer to Patent Document 5).

However, with respect to the vinyl polymer synthesized using living radical polymerization, depending on the substituent at the side chain, in some case, the substituent at the side chain is large compared with the main chain, and thus the number of intermolecular entanglements is low, which may result in a difficulty in obtaining physical properties of cured objects that are expected from the molecular weight. In such a case, considerable reinforcement may be necessary using a filler or the like.

In order to improve the strength of curable compositions containing functional group-containing polymers, several methods have been disclosed, for example, a method of blending with an epoxy resin and a method of blending with a polyether-based polymer (refer to Patent Document 6).

However, none of the disclosed documents described above makes reference to a curable composition containing a vinyl polymer having a crosslinkable functional group and an organic polymer having a group reactive with an isocyanato group, which is disclosed in the present invention. Furthermore, none provides solutions for improvement in strength after the composition is cured.
[Patent Document 1]
   Japanese Unexamined Patent Application Publication Nos. 01-247403 and 05-255415
[Patent Document 2]
   Japanese Unexamined Patent Application Publication No. 05-262808
[Patent Document 3]
   Japanese Unexamined Patent Application Publication No. 05-211922
[Patent Document 4]
   Japanese Unexamined Patent Application Publication No. 61-127711 and Japanese Examined Patent Application Publication No. 02-001859
[Patent Document 5]
   Japanese Unexamined Patent Application Publication Nos. 09-272714, 11-005815, 11-043512, 11-080571, 11-116617, 11-130931, 12-086999, 12-191912, 2000-038404, 2000-044626, and 2000-072804
[Patent Document 6]
   Japanese Unexamined Patent Application Publication Nos. 11-100433 and 11-116763

With respect to the curable compositions containing vinyl polymers represented by (meth)acrylic polymers having the characteristics described above, in general, excellent heat resistance and weatherability and good oil resistance are exhibited, and it is possible to obtain curable compositions having various physical properties by selecting the main chain. However, such curable compositions are slightly inferior in elongation at break and strength.

On the other hand, with respect to organic polymers having active hydrogen represented by polyether polyurethanes, in general, very high mechanical strength can be obtained because of their strong cohesion. However, such organic polymers tend to be inferior in heat resistance and weatherability.

It is an object of the present invention to provide a curable composition having balanced physical properties in which both characteristics of a vinyl polymer having a crosslinkable functional group and characteristics of an organic polymer having a group reactive with an isocyanato group are exploited. That is, the object of the invention is to provide a curable composition which improves strength at break of a cured object therefrom and which has good heat resistance, weatherability, and oil resistance of a cured product.

### Disclosure of Invention

The present inventors have conducted intensive research to solve the problems described above and have found that use of a curable composition containing a vinyl polymer having a crosslinkable functional group and an organic polymer having a group reactive with an isocyanato group can solve the problems described above. The present invention has thus been achieved.

Namely, the present invention relates to a curable composition containing a vinyl polymer having a crosslinkable functional group and an organic polymer having a group reactive with an isocyanato group.

The vinyl polymer (I) is not particularly limited. Preferably, the ratio (Mw/Mn) of the weight-average molecular weight (Mw) to the number-average molecular weight (Mn) determined by gel permeation chromatography is less than 1.8.

Furthermore, although not particularly limited thereto, the main chain of the vinyl polymer (I) is preferably produced by polymerizing mainly a monomer selected from the group consisting of (meth)acrylic monomers, acrylonitrile monomers, aromatic vinyl monomers, fluorine-containing vinyl monomers, and silicon-containing vinyl monomers, more preferably a (meth)acrylic monomer, still more preferably an acrylic monomer, and even more preferably an acrylate monomer. For general construction use, the main chain is most preferably produced by polymerizing a butyl acrylate monomer in view of the requirements of physical properties, such as the low viscosity of the resulting blend and the low modulus, high elongation, weatherability, and heat resistance of the resulting cured object. On the other hand, in the application in which oil resistance, heat resistance, high strength, etc. are required, such as in use around automobile engines and machines, the main chain is preferably produced by polymerizing an ethyl acrylate monomer. Furthermore, with low-temperature resistance and the like in mind, the main chain is more preferably produced by copolymerizing an ethyl acrylate monomer as a main component, a 2-methoxyethyl acrylate monomer, and a butyl acrylate monomer. In consideration of the physical properties, such as oil resistance and low-temperature characteristics, the ratio of monomers copolymerized may be changed. Additionally, (meth)acrylic represents acrylic and/or methacrylic.

Furthermore, although not limited thereto, the main chain of the vinyl polymer (I) is produced preferably by living radical polymerization, and more preferably by atom transfer radical polymerization. Furthermore, although not limited thereto, the atom transfer radical polymerization is preferably carried out using, as a catalyst, a transition metal complex with an element selected from Groups 7, 8, 9, 10, and 11 of the periodic table as a central metal. More preferably, the metal complex is selected from the group consisting of copper complexes, nickel complexes, ruthenium complexes, and iron complexes. Particularly preferably, the metal complex is a copper complex.

The crosslinkable functional group of the vinyl polymer (I) is preferably located at an end of the main chain, although not limited thereto. Besides the crosslinkable functional group, a similar functional group may be included in the main chain. However, in the case in which rubber elasticity is required in the crosslinked, cured object and in other cases, preferably, the functional group is only located at the end of the main chain.

The number of crosslinkable functional groups in the vinyl polymer (I) is not particularly limited. In order to obtain cured objects with higher crosslinkability, the average number of crosslinkable functional groups is preferably one or more, more preferably 1.1 to 4.0, and still more preferably 1.2 to 3.5.

In the organic polymer (II), the group reactive with the isocyanato group is not particularly limited, but may be an active hydrogen or an epoxy group that can generate an active hydrogen. The group reactive with the isocyanato group is preferably at least one selected from the group consisting of a hydroxyl group, an amino group, a carboxyl group, and an epoxy group. Furthermore, the organic polymer (II) may be a urethane prepolymer prepared by reaction of a polyol with an organic polyisocyanate.

Preferably, the main chain of the organic polymer (II) is at least one selected from the group consisting of polyether polymers, polyester polymers, and vinyl polymers each produced by polymerizing mainly a monomer selected from the group consisting of (meth)acrylic monomers, acrylonitrile monomers, aromatic vinyl monomers, fluorine-containing vinyl monomers, and silicon-containing vinyl monomers.

When the main chain is the vinyl polymer, the main chain is preferably a (meth)acrylic polymer, more preferably a (meth)acrylic polymer produced by continuous polymerization, still more preferably an acrylic polymer, and even more preferably an acrylate.

### Best Mode for Carrying Out the Invention

The present invention relates to curable compositions. More particularly, the invention relates to a curable composition containing the following two components: a vinyl polymer having a crosslinkable functional group and an organic polymer having a group reactive with an isocyanato group.

Curable compositions of the present invention will be described in detail below.

### <<Vinyl polymer (I)>>

### <Main chain>

The present inventors have made many inventions regarding various vinyl polymers terminated with crosslinkable functional groups, production processes therefor, curable compositions, and applications thereof (refer to Japanese Unexamined Patent Application Publication Nos. 11-080249, 11-080250, 11-005815, 11-116617, 11-116606, 11-080571, 11-080570, 11-130931, 11-100433, 11-116763, 9-272714, 9-272715, etc.). The vinyl polymer (I) of the present invention is not particularly limited. All of the polymers disclosed in the inventions described above can be suitably used as the vinyl polymer (I).

The vinyl monomer constituting the main chain of the vinyl polymer (I) of the present invention is not particularly limited, and various types of vinyl monomer can be used. Examples of the vinyl monomer include (meth)acrylic monomers, such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adducts of (meth)acrylic acid, trifluoromethylmethyl (meth)acrylate, 2-trifluoromethylethyl (meth)acrylate, perfluoroethylmethyl (meth)acrylate, 2-perfluoroethylethyl (meth)acrylate, perfluoroethylperfluorobutylmethyl, (meth)acrylate, 2-perfluoroethyl-2-perfluorobutylethyl (meth)acrylate, perfluoroethyl (meth)acrylate, perfluoromethyl (meth)acrylate, diperfluoromethylmethyl (meth)acrylate, 2,2-diperfluoromethylethyl (meth)acrylate, perfluoromethylperfluoroethylmethyl (meth)acrylate, 2-perfluoromethyl-2-perfluoroethylethyl (meth)acrylate, 2-perfluorohexylmethyl (meth)acrylate, 2-perfluorohexylethyl (meth)acrylate, 2-perfluorodecylmethyl (meth)acrylate, 2-perfluorodecylethyl (meth)acrylate, 2-perfluorohexadecylmethyl (meth)acrylate, and 2-perfluorohexadecylethyl (meth)acrylate; aromatic vinyl monomers, such as styrene, vinyltoluene, α-methylstyrene, chlorostyrene, styrenesulfonic acid, and salts thereof; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid, and monoalkyl esters and dialkyl esters of fumaric acid; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; acrylonitrile monomers, such as acrylonitrile and methacrylonitrile; amido group-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, and allyl alcohol. These monomers may be used alone or two or more of these monomers may be copolymerized.

The main chain of the vinyl polymer is preferably produced by polymerizing mainly at least one monomer selected from the group consisting of (meth)acrylic monomers, acrylonitrile monomers, aromatic vinyl monomers, fluorine-containing vinyl monomers, and silicon-containing vinyl monomers. Here, the term "mainly" means that among the monomer units constituting the vinyl polymer, the amount of the at least one monomer described above is 50 mole percent or more, and preferably 70 mole percent or more.

Among these monomers, in view of physical properties of the resulting product, etc., preferred are styrene monomers and (meth)acrylic monomers. More preferred are acrylate monomers and methacrylate monomers, and particularly preferred are acrylate monomers. For general construction use, butyl acrylate monomers are still more preferable in view of the requirements of physical properties, such as the low viscosity of the resulting blend and the low modulus, high elongation, weatherability, and heat resistance of the resulting cured object. On the other hand, in the application that requires oil resistance and the like, such as in the automobile application, copolymers mainly composed of ethyl acrylate are still more preferable. With respect to the polymers mainly composed of ethyl acrylate, although oil resistance is excellent, low-temperature characteristics (low-temperature resistance) tend to be slightly poor. In order to improve the low-temperature characteristics, ethyl acrylate may be partially replaced by butyl acrylate. However, as the percentage of butyl acrylate is increased, the good oil resistance becomes impaired. Therefore, in the application requiring oil resistance, the percentage is set preferably at 40 mole percent or less and more preferably at 30 mole percent or less. Furthermore, in order to improve low-temperature characteristics, etc., without impairing oil resistance, use of 2-methoxyethyl acrylate, 2-ethoxyethyl acrylate, or the like in which oxygen is introduced to the alkyl group at the side chain is also preferable. However, heat resistance tends to be poor due to the introduction of the alkoxy group with the ether bond at the side chain. Therefore, when heat resistance is required, the percentage thereof is set preferably at 40 mole percent or less. Depending on the various applications and desired purposes, in consideration of required physical properties, such as oil resistance, heat resistance, and low-temperature characteristics, the percentage is changed, and thus suitable polymers can be obtained. Examples of polymers having well-balanced physical properties, such as oil resistance, heat resistance, low-temperature characteristics, include, but are not limited to, a copolymer of ethyl acrylate/butyl acrylate/2-methoxyethyl acrylate (40 to 50/20 to 30/40 to 20, in terms of molar ratio).

In the present invention, these preferred monomers may be copolymerized or block-copolymerized with other monomers. In such a case, preferably, the content of these preferred monomers is 40% by weight. Additionally, in the expression described above, for example, (meth)acrylic acid represents acrylic acid and/or methacrylic acid.

The molecular-weight distribution, i.e., the ratio (Mw/Mn) of the weight-average molecular weight (Mw) to the number-average molecular weight (Mn) determined by gel permeation chromatography, of the vinyl polymer of the present invention is not particularly limited, but is preferably less than 1.8, more preferably 1.7 or less, still more preferably 1.6 or less, even more preferably 1.5 or less, particularly preferably 1.4 or less, and most preferably 1.3 or less. In the present invention, GPC is usually performed using chloroform as the mobile phase and a polystyrene gel column. The number-average molecular weight, etc., are calculated on the basis of a polystyrene standard sample.

The number-average molecular weight of the vinyl polymer of the present invention is not particularly limited, but is preferably 500 to 1,000,000, more preferably 1,000 to 100,000, and still more preferably 5,000 to 50,000, when determined by gel permeation chromatography.

### <Synthesis method of main chain>

In the present invention, the synthesis method of the vinyl polymer is not limited, but is preferably controlled radical polymerization, more preferably living radical polymerization, and particularly preferably atom transfer radical polymerization. These polymerization methods will be described below.

### Controlled radical polymerization

Radical polymerization can be classified into two categories, namely, "ordinary radical polymerization" in which a monomer having a specific functional group and a vinyl monomer are simply copolymerized using an azo compound, a peroxide, or the like as a polymerization initiator, and "controlled radical polymerization" in which a specific functional group can be introduced at a controlled position, for example, a terminus.

The "ordinary radical polymerization" is a simple method. However, in this method, the monomer having the specific functional group is introduced into the polymer only at random. Consequently, in order to produce a polymer having a high functionality factor, a considerable amount of the monomer must be used. If the amount of the monomer used is small, the percentage of the polymer into which the specific functional group is not introduced increases, which is disadvantageous. Furthermore, since free radical polymerization is performed, only a polymer having a broad molecular-weight distribution and a high viscosity is produced, which is also disadvantageous.

The "controlled radical polymerization" can be further classified into two categories, namely, "chain transfer polymerization" in which polymerization is performed using a chain transfer agent having a specific functional group, and consequently, a functional group-terminated vinyl polymer is produced; and "living radical polymerization" in which the propagation end of the polymer propagates without causing termination reaction or the like, and consequently, a polymer having a molecular weight substantially as designed can be produced.

In the "chain transfer polymerization", a polymer having a high functionality factor can be produced. However, a considerable amount of chain transfer agent having a specific functional group is required relative to the initiator, giving rise to economic problems including treatment. Furthermore, as in the "ordinary radical polymerization", since free radical polymerization is performed, only a polymer having a broad molecular-weight distribution and a high viscosity is produced, which is disadvantageous.

Unlike these polymerization methods, in the "living radical polymerization", termination reaction does not easily occur, a polymer having a narrow molecular-weight distribution (Mw/Mn of about 1.1 to 1.5) can be produced, and the molecular weight can be freely controlled by the monomer-initiator charge ratio, although the "living radical polymerization" is radical polymerization which is considered to be difficult to control because the polymerization rate is high and the termination reaction due to coupling between radicals and the like easily occurs.

Consequently, in the "living radical polymerization", a polymer having a narrow molecular-weight distribution and a low viscosity can be produced, and furthermore, a monomer having a specific functional group can be introduced into substantially any position of the polymer. Thus, the "living radical polymerization" is more preferable as the method for producing the vinyl polymer having a specific functional group.

In the narrow sense, the term "living polymerization" refers to polymerization in which molecular chains grow with the termini always being active. In the ordinary sense, the living polymerization also includes pseudo-living polymerization in which molecular chains grow with deactivated termini and activated termini being in equilibrium. The latter definition applies to the present invention.

Recently, the "living radical polymerization" has been actively studied by various groups. Examples thereof include polymerization using a cobalt porphyrin complex as shown in Journal of American Chemical Society (J. Am. Chem. Soc.), 1994, 116, 7943; polymerization using a radical scavenger, such as a nitroxide compound, as shown in Macromolecules 1994, 27, 7228; and "atom transfer radical polymerization" (ATRP) using an organic halide or the like as an initiator and a transition metal complex as a catalyst.

Among the "living radical polymerization methods", the "atom transfer radical polymerization" in which a vinyl monomer is polymerized using an organic halide or a halogenated sulfonyl compound as an initiator and a transition metal complex as a catalyst has the characteristics of the "living radical polymerization" described above and is also characterized in that the chain is terminated with a halogen or the like that is relatively advantageous to functional group conversion reaction, and great freedom on the design of the initiator and the catalyst is provided. Thus, the "atom transfer radical polymerization" is further more preferable as the method for producing the vinyl polymer having a specific functional group. Examples of the atom transfer radical polymerization method include methods by Matyjaszewski et al., disclosed in Journal of American Chemical Society (J. Am. Chem. Soc.) 1995, 117, 5614, Macromolecules 1995, 28, 7901, Science, 1996, 272, 866, and PCT Publication Nos. WO96/30421, WO97/18247, WO98/01480, and WO98/40415; and methods by Sawamoto et al., disclosed in Macromolecules 1995, 28, 1721 and Japanese Unexamined Patent Application Publication Nos. 9-208616 and 8-41117.

In the present invention, among these living radical polymerization methods, any method may be used without limitation. Preferably, atom transfer radical polymerization is used.

Prior to a detailed description of living radical polymerization, polymerization using a chain transfer agent will be described, which is one of controlled radical polymerization methods and can be used for the production of vinyl polymers that will be described below. The radical polymerization using a chain transfer agent (telomer) is not particularly limited. As the method for producing a vinyl polymer having the terminal structure suitable in the present invention, the following two methods are exemplified.

Namely, in a first method, a halogen-terminated polymer is produced using a halogenated hydrocarbon as a chain transfer agent as disclosed in Japanese Unexamined Patent Application Publication No. 4-132706. In a second method, a hydroxyl group-terminated polymer is produced using a hydroxyl group-containing mercaptan, a hydroxyl group-containing polysulfide, or the like as a chain transfer agent as disclosed in Japanese Unexamined Patent Application Publication No. 61-271306, Japanese Patent No. 2594402, or Japanese Unexamined Patent Application Publication No. 54-47782.

Living radical polymerization methods will be described below.

First, a method in which a radical scavenger, such as a nitroxide compound, is used will be described. In this polymerization method, a nitroxy free radical (=N-O·), which is generally stable, is used as the radical scavenger. Preferred examples of such a compound include, but are not limited to, nitroxy free radicals derived from cyclic hydroxyamines, such as 2,2,6,6-substituted-1-piperidinyloxy radicals and 2,2,5,5-substituted-1-pyrrolidinyloxy radicals. As the substituent, an alkyl group having not more than 4 carbon atoms, such as a methyl group or ethyl group, is suitable. Specific examples of the nitroxy free radical compounds include, but are not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-tert-butylaminoxy radical. Instead of nitroxy free radicals, other stable free radicals, such as galvinoxyl free radical, may be used.

The radical scavenger is used in combination with a radical generator. It is considered that a reaction product from the scavenger and the radical generator serves as a polymerization initiator to allow the polymerization of addition-polymerizable monomers to proceed. Although the ratio between both is not particularly limited, the radical generator is suitably used in an amount of 0.1 to 10 moles per mole of the radical scavenger.

Various compounds can be used as the radical generator. A peroxide capable of generating a radical under polymerization temperature conditions is preferably used. Examples of the peroxide include, but are not limited to, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl) peroxydicarbonate; and alkyl peresters, such as tert-butyl peroxyoctoate and tert-butyl peroxybenzoate. In particular, benzoyl peroxide is preferable. Furthermore, instead of peroxides, other radical generators, such as radical-generating azo compounds, e.g., azobisisobutyronitrile, may be used.

As reported in Macromolecules 1995, 28, 2993, instead of combined use of a radical scavenger and a radical generator, alkoxyamine compounds such as those illustrated below may be used as initiators.

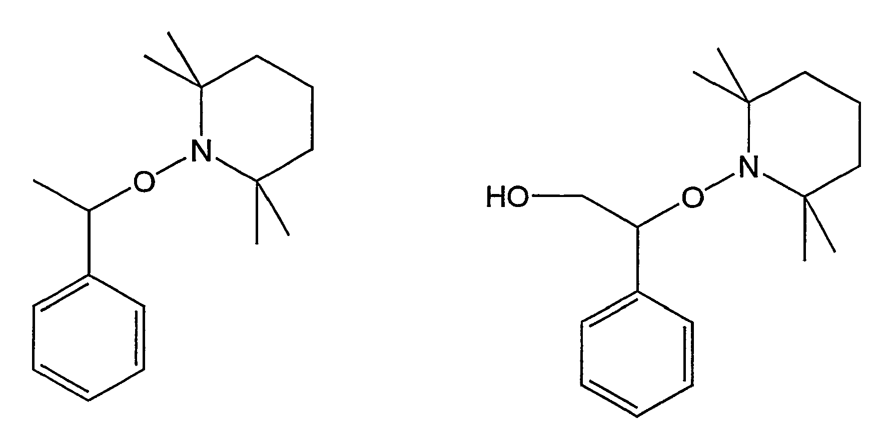

When an alkoxyamine compound is used as the initiator and the compound has a functional group, for example, a hydroxyl group or the like, such as the one illustrated above, a functional group-terminated polymer is obtained. If this is used in the method of the present invention, a functional group-terminated polymer is obtained.

The polymerization conditions, such as the monomer, solvent, and polymerization temperature, used in the polymerization method using a radical scavenger, such as the nitroxide compound, are not particularly limited, but may be the same as those used in the atom transfer radical polymerization which will be described below.

### Atom transfer radical polymerization

The atom transfer radical polymerization method, which is more preferable as the living radical polymerization in the present invention, will now be described.

In the atom transfer radical polymerization, an organic halide, in particular, an organic halide having a highly reactive carbon-halogen bond (e.g., a carbonyl compound having a halogen at the α-position or a compound having a halogen at the benzyl position), a halogenated sulfonyl compound, or the like is used as an initiator.

Specific examples are as follows:
C₆H₅-CH₂X, C₆H₅-C(H) (X)CH₃, and C₆H₅-C(X) (CH₃)₂
(wherein C₆H₅ represents a phenyl group, and X represents chlorine, bromine, or iodine);
R¹-C(H)(X)-CO₂R₂, R¹-C(CH₃)(X)-CO₂R², R¹-C(H)(X)-C(O)R², and R¹-C(CH₃)(X)-C(O)R²,
(wherein R¹ and R² each represent a hydrogen atom or an alkyl, aryl, or aralkyl group having 1 to 20 carbon atoms, and X represents chlorine, bromine, or iodine); and
R¹-C₆H₄-SO₂X
(wherein R¹ represents a hydrogen atom or an alkyl, aryl, or aralkyl group having 1 to 20 carbon atoms, and X represents chlorine, bromine, or iodine).

An organic halide or halogenated sulfonyl compound having a functional group other than the functional group which initiates polymerization may be used as an initiator in the atom transfer radical polymerization. In such a case, a vinyl polymer having the functional group at one end of the main chain and the propagating terminal structure of atom transfer radical polymerization at the other end of the main chain is produced. Examples of such a functional group include an alkenyl group, a crosslinkable silyl group, a hydroxyl group, an epoxy group, an amino group, and an amido group.

The alkenyl group-containing organic halide is not particularly limited, and examples thereof include those having a structure represented by general formula (1):

R⁴R⁵C(X)-R⁶-R⁷-C(R³)=CH₂ (1)

(wherein R³ represents hydrogen or a methyl group; R⁴ and R⁵ each represent hydrogen or a monovalent alkyl, aryl, or aralkyl group having 1 to 20 carbon atoms, and R⁴ and R⁵ may be bonded together at their respective free ends; R⁶ represents -C(O)O- (ester group), -C(O)- (keto group), or an o-, m-, or p-phenylene group; R⁷ represents a direct bond or a divalent organic group having 1 to 20 carbon atoms, which may contain one or more ether bonds; and X represents chlorine, bromine, or iodine).

Specific examples of each of the substituents R⁴ and R⁵ include hydrogen, a methyl group, an ethyl group, an n-propyl group, an isopropyl group, a butyl group, a pentyl group, and a hexyl group. R⁴ and R⁵ may be bonded together at their respective free ends to form a ring structure.

Specific examples of the alkenyl group-containing organic halide represented by general formula (1) are as follows:
XCH₂C(O)O(CH₂)ₙCH=CH₂, H₃CC(H) (X)C(O)O(CH₂)ₙCH=CH₂, (H₃C)₂C(X)C(O)O(CH₂)ₙCH=CH₂, CH₃CH₂C(H) (X)C(O)O(CH₂)ₙCH=CH₂, and 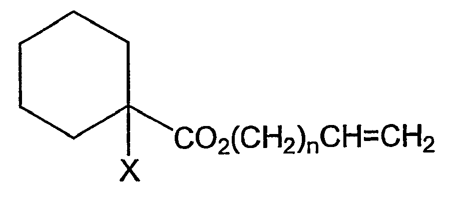
(wherein X represents chlorine, bromine, or iodine, and n is an integer of 0 to 20);
XCH₂C(O)O(CH₂)ₙO(CH₂)ₘCH=CH₂, H₃CC(H) (X)C(O)O(CH₂)ₙO(CH₂)ₘCH=CH₂, (H₃C)₂C(X)C(O)O(CH₂)ₙO(CH₂)ₘCH=CH₂,
CH₃CH₂C(H) (X)C(O)O(CH₂)ₙO(CH₂)ₘCH=CH₂, and 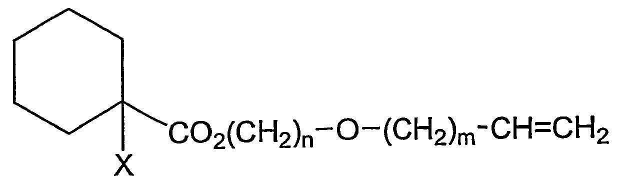
(wherein X represents chlorine, bromine, or iodine, n is an integer of 1 to 20, and m is an integer of 0 to 20);
o, m, p-XCH₂-C₆H₄-(CH₂)ₙ-CH=CH₂,
o, m, p-CH₃C(H) (X)-C₆H₄-(CH₂)ₙ-CH=CH₂, and
o, m, p-CH₃CH₂C(H) (X)-C₆H₄-(CH₂)ₙ-CH=CH₂
(wherein X represents chlorine, bromine, or iodine, and n is an integer of 0 to 20);
o, m, p-XCH₂-C₆H₄-(CH₂)ₙ-O-(CH₂)ₘ-CH=CH₂,
o, m, p-CH₃C(H) (X)-C₆H₄-(CH₂)ₙ-O-(CH₂)ₘ-CH=CH₂, and
o, m, p-CH₃CH₂C(H) (X)-C₆H₄-(CH₂)ₙ-O-(CH₂)ₘCH=CH₂
(wherein X represents chlorine, bromine, or iodine, n is an integer of 1 to 20, and m is an integer of 0 to 20);
o, m, p-XCH₂-C₆H₄-O-(CH₂)ₙ-CH=CH₂,
o, m, p-CH₃C(H) (X)-C₆H₄-O-(CH₂)ₙ-CH=CH₂, and
o, m, p-CH₃CH₂C(H) (X)-C₆H₄-O-(CH₂)ₙ-CH=CH₂
(wherein X represents chlorine, bromine, or iodine, and n is an integer of 1 to 20); and
o, m, p-XCH₂-C₆H₄-O-(CH₂)ₙ-O-(CH₂)ₘ-CH=CH₂,
o, m, p-CH₃C(H) (X)-C₆H₄-O-(CH₂)ₙ-O-(CH₂)ₘ-CH=CH₂, and
o, m, p-CH₃CH₂C(H) (X)-C₆H₄-O-(CH₂)ₙ-O-(CH₂)ₘ-CH=CH₂,
(wherein X represents chlorine, bromine, or iodine, n is an integer of 1 to 20, and m is an integer of 0 to 20).

Other examples of the alkenyl group-containing organic halide include compounds represented by general formula (2):

H₂C=C(R³)-R⁷-C(R⁴) (X)-R⁸-R⁵ (2)

(wherein R³, R⁴, R⁵, R⁷, and X are the same as those described above, and R⁸ represents a direct bond, -C(O)O-(ester group), -C(O)- (keto group), or an o-, m-, or p-phenylene group).

R⁷ represents a direct bond or a divalent organic group having 1 to 20 carbon atoms (which may contain one or more ether bonds). When R⁷ is a direct bond, the halide is an allyl halide in which a vinyl group is bonded to the carbon atom to which a halogen is bonded. In such a case, since the carbon-halogen bond is activated by the neighboring vinyl group, R⁸ is not necessarily a C(O)O group, a phenylene group, or the like, and may be a direct bond. When R⁷ is not a direct bond, R⁸ is preferably a C(O)O group, a C(O) group, or a phenylene group so that the carbon-halogen bond is activated.

Specific examples of the compound represented by general formula (2) are as follows:
CH₂=CHCH₂X, CH₂=C(CH₃)CH₂X, CH₂=CHC(H) (X)CH₃, CH₂=C(CH₃)C(H) (X)CH₃, CH₂=CHC(X) (CH₃)₂, CH₂=CHC(H) (X)C₂H₅, CH₂=CHC(H) (X)CH(CH₃)₂, CH₂=CHC(H) (X)C₆H₅, CH₂=CHC(H) (X)CH₂C₆H₅, CH₂=CHCH₂C(H) (X)-CO₂R, CH₂=CH(CH₂)₂C(H) (X)-CO₂R, CH₂=CH(CH₂)₃C(H) (X)-CO₂R, CH₂=CH(CH₂)₈C(H) (X)-CO₂R, CH₂=CHCH₂C(H) (X)-C₆H₅, CH₂=CH(CH₂)₂C(H) (X)-C₆H₅, and CH₂=CH(CH₂)₃C(H) (X) -C₆H₅
(wherein X represents chlorine, bromine, or iodine, and R represents an alkyl, aryl, or aralkyl group having 1 to 20 carbon atoms).

Specific examples of the alkenyl group-containing halogenated sulfonyl compound are as follows:
o-, m-, p-CH₂=CH-(CH₂)ₙ-C₆H₄-SO₂X and
c-, m-, p-CH₂=CH-(CH₂)ₙ-O-C₆H₄-SO₂X
(wherein X represents chlorine, bromine, or iodine, and n is an integer of 0 to 20).

The crosslinkable silyl group-containing organic halide is not particularly limited, and examples thereof include a compound having a structure represented by general formula (3) :

R⁴R⁵C(X)-R⁶-R⁷-C(H) (R³)CH₂-[Si (R⁹)_{2-b}(Y)_{b}O]ₘ-Si(R¹⁰)₃₋ₐ(Y)ₐ (3)

(wherein R³, R⁴, R⁵, R⁶, R⁷, and X are the same as those described above; R⁹ and R¹⁰ each represent an alkyl, aryl, or aralkyl group having 1 to 20 carbon atoms, or (R')₃SiO-(wherein R' represents a monovalent hydrocarbon group having 1 to 20 carbon atoms, and three R's may be the same or different); when two or more R⁹s or R¹⁰s are present, they may be the same or different; Y represents a hydroxyl group or a hydrolyzable group; when two or more Ys are present, they may be the same or different; **a** is 0, 1, 2, or 3; **b** is 0, 1, or 2; **m** is an integer of 0 to 19; and the relationship **a** + **mb** ≥ 1 is satisfied).

Specific examples of the compound represented by general formula (3) are as follows:
XCH₂C(O)O(CH₂)ₙSi(OCH₃)₃, CH₃C(H) (X)C(O)O(CH₂)ₙSi(OCH₃)₃, (CH₃)₂C(X)C(O)O(CH₂)ₙSi(OCH₃)₃, XCH₂C(O)O(CH₂)ₙSi(CH₃) (OCH₃)₂, CH₃C(H) (X)C(O)O(CH₂)ₙSi(CH₃) (OCH₃)₂, and
(CH₃)₂C(X)C(O)O(CH₂)ₙSi(CH₃) (OCH₃)₂
(wherein X represents chlorine, bromine, or iodine, and n is an integer of 0 to 20);
XCH₂C(O)O(CH₂)ₙO(CH₂)ₘSi(OCH₃)₃,
H₃CC(H) (X)C(O)O(CH₂)ₙO(CH₂)ₘSi(OCH₃)₃,
(H₃C)₂C(X)C(O)O(CH₂)ₙO(CH₂)ₘSi(OCH₃)₃,
CH₃CH₂C(H) (X)C(O)O(CH₂)ₙO(CH₂)ₘSi(OCH₃)₃,
XCH₂C(O)O(CH₂)ₙO(CH₂)ₘSi(CH₃) (OCH₃)₂,
H₃CC(H) (X)C(O)O(CH₂)ₙO(CH₂)ₘ-Si(CH₃) (OCH₃)₂,
(H₃C)₂C(X)C(O)O(CH₂)ₙO(CH₂)ₘ-Si(CH₃) (OCH₃)₂, and
CH₃CH₂C(H) (X)C(O)O(CH₂)ₙO(CH₂)ₙ-Si(CH₃) (OCH₃)₂
(wherein X represents chlorine, bromine, or iodine, n is an integer of 1 to 20, and m is an integer of 0 to 20);
o, m, p-XCH₂-C₆H₄-(CH₂)₂Si(OCH₃)₃,
o, m, p-CH₃C(H) (X)-C₆H₄-(CH₂)₂Si(OCH₃)₃,
o, m, p-CH₃CH₂C(H) (X)-C₆H₄-(CH₂)₂Si(OCH₃)₃,
o, m, p-XCH₂-C₆H₄-(CH₂)₃Si(OCH₃)₃,
o, m, p-CH₃C(H) (X)-C₆H₄-(CH₂)₃Si(OCH₃)₃,
o, m, p-CH₃CH₂C(H) (X)-C₆H₄-(CH₂)₃Si(OCH₃)₃,
o, m, p-XCH₂-C₆H₄-(CH₂)₂-O-(CH₂)₃Si(OCH₃)₃,
o, m, p-CH₃C(H) (X)-C₆H₄-(CH₂)₂-O-(CH₂)₃Si(OCH₃)₃,
o, m, p-CH₃CH₂C(H) (X)-C₆H₄-(CH₂)₂-O-(CH₂)₃Si(OCH₃)₃,
o, m, p-XCH₂-C₆H₄-O-(CH₂)₃Si(OCH₃)₃,
o, m, p-CH₃C(H) (X)-C₆H₄-O-(CH₂)₃Si(OCH₃)₃,
o, m, p-CH₃CH₂C(H) (X)-C₆H₄-O-(CH₂)₃-Si(OCH₃)₃, and
o, m, p-XCH₂-C₆H₄-O-(CH₂)₂-O-(CH₂)₃-Si(OCH₃)₃,
o, m, p-CH₃C(H) (X)-C₆H₄-O-(CH₂)₂-O-(CH₂)₃Si(OCH₃)₃, and
o, m, p-CH₃CH₂C(H) (X)-C₆H₄-O-(CH₂)₂-O-(CH₂)₃Si(OCH₃)₃
(wherein X represents chlorine, bromine, or iodine).

Other examples of the crosslinkable silyl group-containing organic halide include compounds having a structure represented by general formula (4):

(R¹⁰)₃₋ₐ(Y)ₐSi-[OSi(R⁹)_{2-b}(Y) _{b}]ₘ-CH₂-C(H) (R³)-R⁷-C(R⁴) (X) -R⁸-R⁵ (4)

(wherein R³, R⁴, R⁵, R⁷, R⁸, R⁹, R¹⁰, a, b, m, X, and Y are the same as those described above).

Specific examples of such a compound are as follows: (CH₃O)₃SiCH₂CH₂C(H) (X) C₆H₅, (CH₃O)₂(CH₃)SiCH₂CH₂C(H) (X)C₆H₅, (CH₃O)₃Si(CH₂)₂C(H) (X)-CO₂R, (CH₃O)₂(CH₃)Si(CH₂)₂C(H) (X)-CO₂R, (CH₃O)₃Si(CH₂)₃C(H) (X)-CO₂R, (CH₃O)₂(CH₃)Si(CH₂)₃C(H) (X)-CO₂R, (CH₃O)₃Si(CH₂)₄C(H) (X)-CO₂R, (CH₃O)₂(CH₃)Si(CH₂)₄C(H) (X)-CO₂R, (CH₃O)₃Si(CH₂)₉C(H) (X)-CO₂R, (CH₃O)₂(CH₃)Si(CH₂)₉C(H) (X)-CO₂R, (CH₃O)₃Si(CH₂)₃C(H) (X)-C₆H₅, (CH₃O)₂(CH₃)Si(CH₂)₃C(H) (X)-C₆H₅, (CH₃O)₃Si(CH₂)₄C(H) (X)-C₆H₅, and (CH₃O)₂(CH₃)Si(CH₂)₄C(H) (X)-C₆H₅
(wherein X represents chlorine, bromine, or iodine, and R represents an alkyl, aryl, or aralkyl group having 1 to 20 carbon atoms).

The hydroxyl group-containing organic halide or halogenated sulfonyl compound is not particularly limited, and examples thereof include compounds represented by the following formula:
HO-(CH₂)ₙ-OC(O)C(H) (R) (X)
(wherein X represents chlorine, bromine, or iodine, R represents a hydrogen atom or an alkyl, aryl, or aralkyl group having 1 to 20 carbon atoms, and n is an integer of 1 to 20).

The amino group-containing organic halide or halogenated sulfonyl compound is not particularly limited, and examples thereof include compounds represented by the following formula:
H₂N-(CH₂)ₙ-OC(O)C(H) (R) (X)
(wherein X represents chlorine, bromine, or iodine, R represents a hydrogen atom or an alkyl, aryl, or aralkyl group having 1 to 20 carbon atoms, and n is an integer of 1 to 20).

The epoxy group-containing organic halide or halogenated sulfonyl compound is not particularly limited, and examples thereof include compounds represented by the following formula: 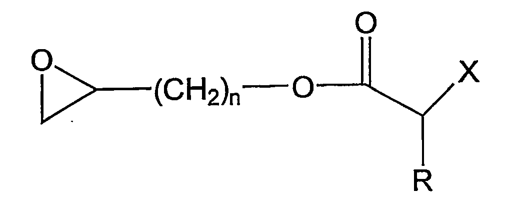
(wherein X represents chlorine, bromine, or iodine, R represents a hydrogen atom or an alkyl, aryl, or aralkyl group having 1 to 20 carbon atoms, and n is an integer of 1 to 20).

In order to produce a polymer having at least two propagating terminal structures per molecule, preferably, an organic halide or halogenated sulfonyl compound having at least two initiation sites is used as an initiator.
Specific examples thereof are as follows: 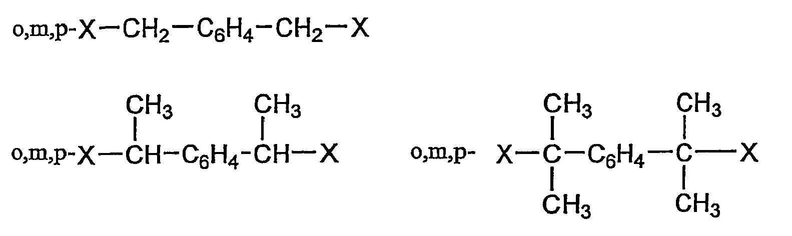
(wherein C₆H₄ is a phenylene group, and X represents chlorine, bromine, or iodine); 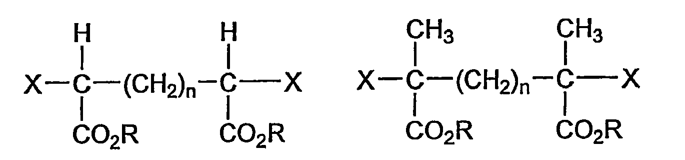 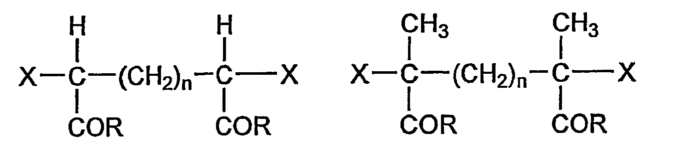
(wherein R represents an alkyl, aryl, or aralkyl group having 1 to 20 carbon atoms, n is an integer of 0 to 20, and X represents chlorine, bromine, or iodine); 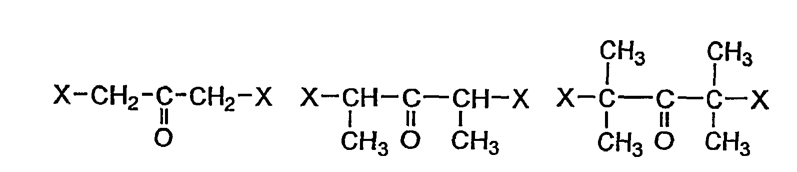 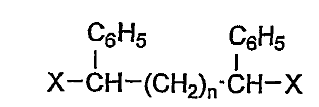
(wherein X represents chlorine, bromine, or iodine, and n is an integer of 0 to 20); 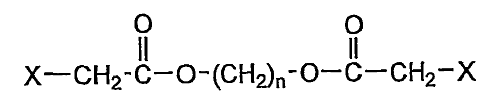 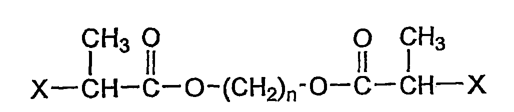 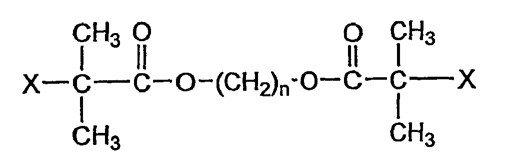
(wherein n is an integer of 1 to 20, and X represents chlorine, bromine, or iodine); and 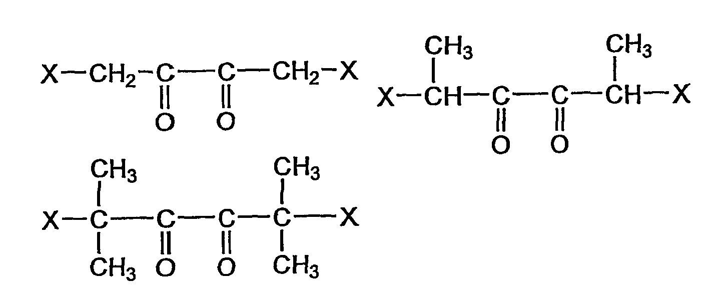 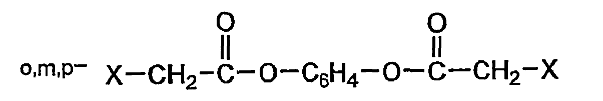 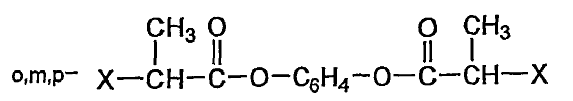 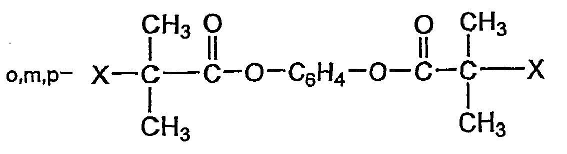
o,m,p- X-SO₂-C₆H₄-SO₂-X
(wherein X represents chlorine, bromine, or iodine).

The vinyl monomer used in this polymerization is not particularly limited, and all of the vinyl monomers exemplified above can be suitably used.

The transition metal complex used as a polymerization catalyst is not particularly limited, but preferably is a metal complex with an element selected from Groups 7, 8, 9, 10, and 11 of the periodic table as the central metal. More preferred are complexes of zero-valent copper, monovalent copper, divalent ruthenium, divalent iron, and divalent nickel. Among them, copper complexes are still more preferred. Specific examples of the monovalent copper compound include cuprous chloride, cuprous bromide, cuprous iodide, cuprous cyanide, cuprous oxide, and cuprous perchlorate. When a copper compound is used, in order to enhance the catalytic activity, 2,2'-bipyridyl or a derivative thereof, 1,10-phenanthroline or a derivative thereof, or a polyamine, such as tetramethylethylenediamine, pentamethyldiethylenetriamine, or hexamethyltris(2-aminoethyl)amine, is added as a ligand. A preferred ligand is a nitrogen-containing compound, a more preferred ligand is a chelate-type nitrogen-containing compound, and a still more preferred ligand is N,N,N',N",N"-pentamethyldiethylenetriamine. A complex (RuCl₂(PPh₃)₃) of divalent ruthenium chloride with tristriphenylphosphine is also suitable as the catalyst. When a ruthenium compound is used as the catalyst, an aluminum alkoxide is added as an activator. Furthermore, a complex (FeCl₂(PPh₃)₂) of divalent iron with bistriphenylphosphine, a complex (NiCl₂(PPh₃)₂) of divalent nickel with bistriphenylphosphine, or a complex (NiBr₂(PBu₃)₂) of divalent nickel with bistributylphosphine is also suitable as the catalyst.

The polymerization can be carried out in the absence of a solvent or in the presence of any of various types of solvent. Examples of the solvent which may be used include hydrocarbon solvents, such as benzene and toluene; ether solvents, such as diethyl ether and tetrahydrofuran; halogenated hydrocarbon solvents, such as methylene chloride and chloroform; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; and carbonate solvents, such as ethylene carbonate and propylene carbonate. These solvents may be used alone or in combination of two or more.

The polymerization can be carried out in a range of 0°C to 200°C, although not limited thereto, and preferably in a range of 50°C to 150°C.

The atom transfer radical polymerization of the present invention also includes reverse atom transfer radical polymerization. In the reverse atom transfer radical polymerization, a common radical initiator, such as a peroxide, is allowed to act on an ordinary atom transfer radical polymerization catalyst in the highly oxidized state caused by generation of radicals, for example, on Cu (II') when Cu (I) is used as a catalyst, thus producing the same equilibrium as that in atom transfer radical polymerization (refer to Macromolecules 1999, 32, 2872).

### <Active hydrogen>

In the present invention, an active hydrogen is defined as a functional group containing active hydrogen reactive with an isocyanato group. Examples thereof include, but are not limited to, a hydroxyl group, an amino group, an imino group, a carboxyl group, an epoxy group, a mercapto group, and a thiocarboxyl group. The sentence "the crosslinkable functional group of the vinyl polymer (I) is an active hydrogen" means that the crosslinkable functional group is a functional group such as the one exemplified above.

Furthermore, examples of the crosslinkable functional group other than an active hydrogen include a crosslinkable silyl group, an alkenyl group, and a group having a polymerizable carbon-carbon double bond.

### <Functional group>

### Number of crosslinkable functional groups

The number of crosslinkable functional groups in the vinyl polymer (I) is not particularly limited. From the standpoints of curability of the resulting composition and physical properties of the resulting cured object, the average number of crosslinkable functional groups is preferably at least one, more preferably 1.1 to 4.0, and still more preferably 1.2 to 3.5.

### Position of crosslinkable functional roup

When the cured object obtained from the curable composition of the present invention is particularly required to have rubber-like properties, preferably, at least one crosslinkable functional group is positioned at an end of the molecular chain because the molecular weight between crosslinking points, which greatly affects rubber elasticity, can be increased. More preferably, all crosslinkable functional groups are positioned at the ends of the molecular chain.

Methods for producing the vinyl polymer having at least one crosslinkable functional group at its molecular end, in particular, a (meth)acrylic polymer, are disclosed in Japanese Examined Patent Application Publication Nos. 3-14068 and 4-55444, Japanese Unexamined Patent Application Publication No. 6-211922, etc. However, since these methods are free radical polymerization methods in which the above-described "chain transfer polymerization" is performed, the resulting polymers generally have a broad molecular-weight distribution (Mw/Mn) of 2 or more and a high viscosity although they have crosslinkable functional groups at the ends of the molecular chains in relatively high proportions. Therefore, in order to obtain a vinyl polymer having a narrow molecular-weight distribution and a low viscosity and having crosslinkable functional groups at the ends of the molecular chain in high proportions, the above-described "living radical polymerization" is preferably used.

The functional groups will be described below.

### Crosslinkable silyl group

In the present invention, the crosslinkable silyl group can be exemplified by groups represented by general formula (5):

-[Si(R⁹)_{2-b}(Y)_{b}O]ₘ-Si(R¹⁰)₃₋ₐ(Y)ₐ (5)

{wherein R⁹ and R¹⁰ each represent an alkyl group having 1 to 20 carbon atoms, an aryl group having 6 to 20 carbon atoms, an aralkyl group having 7 to 20 carbon atoms, or a triorganosiloxy group represented by (R')₃SiO- (wherein R' represents a monovalent hydrocarbon group having 1 to 20 carbon atoms, and three R's may be the same or different); when two or more R⁹s or R¹⁰s are present, they may be the same or different; Y represents a hydroxyl group or a hydrolyzable group; when two or more Ys are present, they may be the same or different; **a** represents 0, 1, 2, or 3; **b** represents 0, 1, or 2; **m** is an integer of 0 to 19; and the relationship **a** + **mb** ≥ 1 is satisfied}.

Examples of the hydrolyzable group include a hydrogen atom, an alkoxy group, an acyloxy group, a ketoximate group, an amino group, an amido group, an aminooxy group, a mercapto group, and an alkenyloxy group, which are commonly used groups. Among these, an alkoxy group, an amido group, and an aminooxy group are preferred, and from the standpoints of mild hydrolyzability and ease of handling, an alkoxy group is particularly preferred. With respect to alkoxy groups, those having a smaller number of carbon atoms have higher reactivity. The reactivity decreases in the order of methoxy > ethoxy > propoxy ..., and an alkoxy group can be selected depending on the purpose and application.

One to three hydrolyzable groups or hydroxyl groups can be bonded to one silicon atom, and (**a** + Σ**b**) is preferably in a range of 1 to 5. When two or more hydrolyzable groups or hydroxyl groups are bonded in the crosslinkable silyl group, they may be the same or different. The number of silicon atoms constituting the crosslinkable silyl group is one or more. When silicon atoms are linked by siloxane bonding or the like, the number of silicon atoms is preferably 20 or less. In particular, a crosslinkable silyl group represented by general formula (6):

-Si(R¹⁰)₃₋ₐ(Y)ₐ (6)

(wherein R¹⁰ and Y are the same as those described above, and **a** is an integer of 1 to 3) is preferable because of ease in availability.

Although not particularly limited, in consideration of curability, **a** is preferably 2 or more.

As the crosslinkable silyl group-containing vinyl polymer, a polymer having a hydrolyzable silicon group in which two hydrolyzable groups are bonded to one silicon atom is often used. However, when such a polymer is used in the application of adhesives or the like, or used at low temperatures, and in particular, when a very high curing rate is required, the curing rate of the polymer is insufficient. Furthermore, when flexibility is desired after curing, the crosslinking density must be decreased. As a result, because of insufficient crosslinking density, stickiness (surface tackiness) may occur. In such a case, a group in which **a** is 3 (e.g., trimethoxy functional group) is preferable.

A polymer having a group in which **a** is 3 (e.g., trimethoxy functional group) has a higher curing rate than a polymer having a group in which **a** is 2 (e.g., dimethoxy functional group). In some cases, a polymer having a group in which **a** is 2 exhibits superior storage stability and mechanical properties (elongation, etc.). In order to achieve a balance between curability and physical properties, a polymer having a group in which **a** is 2 (e.g., dimethoxy functional group) and a polymer having a group in which **a** is 3 (e.g., trimethoxy functional group) may be used together.

For example, when Ys are the same, as **a** increases, the reactivity of Y increases. By variously selecting Y and **a,** it is possible to control curability and mechanical properties and the like of the resulting cured object. Selection can be performed depending on desired applications and purposes.

### Alkenyl group

In the present invention, the alkenyl group is not limited, but is preferably represented by general formula (7):

H₂C=C(R¹¹)- (7)

(wherein R¹¹ represents a hydrogen atom or a hydrocarbon group having 1 to 20 carbon atoms).

In general formula (7), R¹¹ represents a hydrogen atom or a hydrocarbon group having 1 to 20 carbon atoms. Specific examples of the group are as follows:
-(CH₂)ₙ-CH₃, -CH(CH₃)-(CH₂)ₙ-CH₃, -CH(CH₂CH₃)-(CH₂)ₙ-CH₃, -CH(CH₂CH₃)₂, -C(CH₃)₂-(CH₂)ₙ-CH₃, -C(CH₃) (CH₂CH₃)-(CH₂)ₙ-CH₃, -C₆H₅, -C₆H₅(CH₃), -C₆H₅(CH₃)₂, -(CH₂)ₙ-C₆H₅, -(CH₂)ₙ-C₆H₅(CH₃), and -(CH₂)ₙ-C₆H₅(CH₃)₂
(wherein n is an integer of 0 or more, and the total number of carbon atoms in each group is 20 or less).

Among them, a hydrogen atom is preferable.

Furthermore, although not limited, preferably, the alkenyl group of the polymer (I) is not activated by a carbonyl group, an alkenyl group, or an aromatic ring which is conjugated with the carbon-carbon double bond thereof.

The form of bonding between the alkenyl group and the main chain of the polymer is not particularly limited. Preferably, the alkenyl group and the main chain are bonded to each other by a carbon-carbon bond, an ester bond, an ether bond, a carbonate bond, an amide bond, a urethane bond, or the like.

### Amino group

Examples of the amino group in the present invention include, but are not limited to:
-NR¹²₂
(wherein R¹² represents hydrogen or a monovalent organic group having 1 to 20 carbon atoms; and two R¹²s may be the same or different and may be bonded together at their respective free ends to form a ring structure, at least one R¹² being preferably hydrogen to satisfy the requirement of being a crosslinkable functional group).

There is no problem even if the amino group is an ammonium salt represented by:
-(NR¹²₃)⁺X⁻
(wherein R¹² is the same as that described above, and X⁻ represents a counter anion).

In the above formulae, R¹² represents hydrogen or a monovalent organic group having 1 to 20 carbon atoms, for example, hydrogen, an alkyl group having 1 to 20 carbon atoms, an aryl group having 6 to 20 carbon atoms, or an aralkyl group having 7 to 20 carbon atoms. Two R¹²s may be the same or different and may be bonded together at their respective free ends to form a ring structure.

### Group having polymerizable carbon-carbon double bond

The group having a polymerizable carbon-carbon double bond in the present invention is preferably a group represented by general formula (8):

-OC(O)C(R¹³)=CH₂ (8)

(wherein R¹³ represents hydrogen or a monovalent organic group having 1 to 20 carbon atoms). More preferably, R¹³ is hydrogen or a methyl group.

In general formula (8), specific examples of R¹³ include, but are not limited to, -H, -CH₃, -CH₂CH₃, -(CH₂)ₙCH₃ (wherein n is an integer of 2 to 19), -C₆H₅, -CH₂OH, and -CN. Preferably, R¹³ is -H or -CH₃.

### Method for introducing crosslinkable functional group

Methods for introducing the crosslinkable functional group into the vinyl polymer (I) of the present invention will be described below, although the method is not limited thereto.

First, methods for introducing a crosslinkable silyl group, an alkenyl group, and a hydroxyl group by conversion to the terminal functional group will be described. Since these functional groups each can be a precursor to the others, a description will be made in the backward order from the crosslinkable silyl group.

Examples of synthesis methods of the vinyl polymer having at least one crosslinkable silyl group include the followings:
(A) Method in which a crosslinkable silyl group-containing hydrosilane compound is added to a vinyl polymer having at least one alkenyl group in the presence of a hydrosilylation catalyst;
(B) Method in which a vinyl polymer having at least one hydroxyl group is allowed to react with a compound having groups reactive with the hydroxyl group, such as a compound having a crosslinkable silyl group and an isocyanato group per molecule;
(C) Method in which a compound having both a polymerizable alkenyl group and a crosslinkable silyl group per molecule is subjected to reaction in the synthesis of a vinyl polymer by radical polymerization;
(D) Method in which a crosslinkable silyl group-containing chain transfer agent is used in the synthesis of a vinyl polymer by radical polymerization; and
(E) Method in which a vinyl polymer having at least one highly reactive carbon-halogen bond is allowed to react with a compound having a crosslinkable silyl group and a stable carbanion per molecule.

The vinyl polymer having at least one alkenyl group used in method (A) can be produced by various methods. Examples of the synthesis method will be described below, although not limited thereto.
(A-a) Method in which a compound having both a polymerizable alkenyl group and an alkenyl group with low polymerizability per molecule, such as the one represented by general formula (9) below, is used as a second monomer in the synthesis of a vinyl polymer by radical polymerization.

   H₂C=C(R¹⁴)-R¹⁵-R¹⁶-C(R¹⁷)=CH₂ (9)

   (wherein R¹⁴ represents hydrogen or a methyl group; R¹⁵ represents -C(O)O- or an o-, m-, or p-phenylene group; R¹⁶ represents a direct bond or a divalent organic group having 1 to 20 carbon atoms, which may contain one or more ether bonds; and R¹⁷ represents hydrogen, an alkyl group having 1 to 20 carbon atoms, an aryl group having 6 to 20 carbon atoms, or an aralkyl group having 7 to 20 carbon atoms).
   The timing of subjecting the compound having both a polymerizable alkenyl group and an alkenyl group with low polymerizability per molecule to reaction is not particularly limited. However, when rubber-like properties are expected in living radical polymerization in particular, such a compound is preferably subjected to reaction as the second monomer at the final stage of the polymerization reaction or after the completion of reaction of a predetermined monomer.
(A-b) Method in which a compound having at least two alkenyl groups with low polymerizability, e.g., 1,5-hexadiene, 1,7-octadiene, or 1,9-decadiene, is subjected to reaction at the final stage of the polymerization reaction or after the completion of reaction of a predetermined monomer in the synthesis of a vinyl polymer by living radical polymerization.
(A-c) Method in which a vinyl polymer having at least one highly reactive carbon-halogen bond is allowed to react with an alkenyl group-containing organometallic compound, e.g., an organotin such as allyltributyltin or allyltrioctyltin, for substitution of the halogen.
(A-d) Method in which a vinyl polymer having at least one highly reactive carbon-halogen bond is allowed to react with a stabilized, alkenyl group-containing carbanion, such as the one represented by general formula (10) below, for substitution of the halogen.

   M⁺C⁻(R¹⁸) (R¹⁹)-R²⁰-C(R¹⁷)=CH₂ (10)

   (In the formula, R¹⁷ is the same as that described above; R¹⁸ and R¹⁹ each represent an electron-withdrawing group for stabilizing the carbanion C⁻, or one of R¹⁸ and R¹⁹ represents the electron-withdrawing group and the other represents hydrogen, an alkyl group having 1 to 10 carbon atoms, or a phenyl group; R²⁰ represents a direct bond or a divalent organic group having 1 to 10 carbon atoms, which may contain one or more ether bonds; and M⁺ represents an alkali metal ion or a quaternary ammonium ion.)
   As the electron-withdrawing group represented by R¹⁸ and R¹⁹, -CO₂R, -C(O)R, and -CN are particularly preferable.
(A-e) Method in which a vinyl polymer having at least one highly reactive carbon-halogen bond is treated with an elemental metal, such as zinc, or an organometallic compound to prepare an enolate anion, and then the enolate anion is allowed to react with an alkenyl group-containing electrophilic compound, e.g., an alkenyl group-containing compound having a leaving group, such as a halogen or an acetyl group, an alkenyl group-containing carbonyl compound, an alkenyl group-containing isocyanate compound, or an alkenyl group-containing acid halide.
(A-f) Method in which a vinyl polymer having at least one highly reactive carbon-halogen bond is allowed to react with an alkenyl group-containing oxy anion or carboxylate anion, such as the one represented by general formula (11) or (12) below, for substitution of the halogen.

   H₂C=C(R¹⁷)-R²¹-O⁻M⁺ (11)

   (In the formula, R¹⁷ and M⁺ are the same as those described above, and R²¹ represents a divalent organic group having 1 to 20 carbon atoms, which may contain one or more ether bonds.)

   H₂C=C(R¹⁷)-R²²-C(O)O⁻M⁺ (12)

   (In the formula, R¹⁷ and M⁺ are the same as those described above, and R²² represents a direct bond or a divalent organic group having 1 to 20 carbon atoms, which may contain one or more ether bonds.)
   Examples of the method for synthesizing the vinyl polymer having at least one highly reactive carbon-halogen bond include, but are not limited to, the atom transfer radical polymerization method using an organic halide or the like as an initiator and a transition metal complex as a catalyst as described above.
   The vinyl polymer having at least one alkenyl group can also be obtained from a vinyl polymer having at least one hydroxyl group. Examples of the synthesis method will be described below, although not limited thereto.
(A-g) Method in which the hydroxyl group of a vinyl polymer having at least one hydroxyl group is treated with a base, such as sodium methoxide, and then allowed to react with an alkenyl group-containing halide, such as allyl chloride.
(A-h) Method in which the hydroxyl group of a vinyl polymer having at least one hydroxyl group is allowed to react with an alkenyl group-containing isocyanate compound, such as allyl isocyanate.
(A-i) Method in which the hydroxyl group of a vinyl polymer having at least one hydroxyl group is allowed to react with an alkenyl group-containing acid halide, such as (meth)acrylic acid chloride in the presence of a base, such as pyridine.
(A-j) Method in which the hydroxyl group of a vinyl polymer having at least one hydroxyl group is allowed to react with an alkenyl-group containing carboxylic acid, such as acrylic acid, in the presence of an acid catalyst.

In the present invention, when a halogen does not directly participate in the method for introducing the alkenyl group, as in methods (A-a) and (A-b), preferably, the vinyl polymer is synthesized by living radical polymerization. In view that easier control is enabled, method (A-b) is more preferable.

When the alkenyl group is introduced by conversion of the halogen of the vinyl polymer having at least one highly reactive carbon-halogen bond, preferably, a vinyl polymer having at least one highly reactive carbon-halogen bond at an end is used, the vinyl polymer being obtained by radical polymerization (atom transfer radical polymerization) of a vinyl monomer using an organic halide or halogenated sulfonyl compound having at least one highly reactive carbon-halogen bond as an initiator and a transition metal complex as a catalyst. In view that easier control is enabled, method (A-f) is more preferable.

Furthermore, the crosslinkable silyl group-containing hydrosilane compound is not particularly limited. Typical examples thereof include compounds represented by general formula (13):

H-[Si(R⁹)_{2-b}(Y)_{b}O]ₘ-Si(R¹⁰)₃₋ₐ(Y)ₐ (13)

{wherein R⁹ and R¹⁰ each represent an alkyl group having 1 to 20 carbon atoms, an aryl group having 6 to 20 carbon atoms, an aralkyl group having 7 to 20 carbon atoms, or a triorganosiloxy group represented by (R')₃SiO- (wherein R' represents a monovalent hydrocarbon group having 1 to 20 carbon atoms, and three R's may be the same or different); when two or more R⁹s or R¹⁰s are present, they may be the same or different; Y represents a hydroxyl group or a hydrolyzable group; when two or more Ys are present, they may be the same or different; **a** is 0, 1, 2, or 3; **b** is 0, 1, or 2; **m** is an integer of 0 to 19; and the relationship **a** + **mb** ≥ 1 is satisfied}.

Among these hydrosilane compounds, in particular, a crosslinkable group-containing compound represented by general formula (14):

H-Si(R¹⁰)₃₋ₐ(Y)ₐ (14)

(wherein R¹⁰ and Y are the same as those described above, and **a** is an integer of 1 to 3) is preferable from the standpoint of ease of availability.

When the crosslinkable silyl group-containing hydrosilane compound is added to the alkenyl group, a transition metal catalyst is usually used. Examples of the transition metal catalyst include elemental platinum, solid platinum dispersed in a carrier, such as alumina, silica, or carbon black, chloroplatinic acid, complexes of chloroplatinic acid and alcohols, aldehydes, ketones, or the like, platinum-olefin complexes, and platinum(0)-divinyltetramethyldisiloxane complexes. Examples of the catalyst other than platinum compounds include RhCl(PPh₃)₃, RhCl₃, RuCl₃, IrCl₃, FeCl₃, AlCl₃, PdCl₂·H₂O, NiCl₂, and TiCl₄.

Examples of the method for producing the vinyl polymer having at least one hydroxyl group used in methods (B) and (A-g) to (A-j) will be described below, although not limited thereto.
(B-a) Method in which a compound having both a polymerizable alkenyl group and a hydroxyl group per molecule, such as the one represented by general formula (15) below, is subjected to reaction as a second monomer in the synthesis of a vinyl polymer by radical polymerization.

   H₂C=C(R¹⁴)-R¹⁵-R¹⁶-OH (15)

   (In the formula, R¹⁴, R¹⁵, and R¹⁶ are the same as those described above.)
   The timing of subjecting the compound having both a polymerizable alkenyl group and a hydroxyl group per molecule to reaction is not particularly limited. However, when rubber-like properties are desired in living radical polymerization in particular, such a compound is preferably subjected to reaction as the second monomer at the final stage of the polymerization reaction or after the completion of reaction of a predetermined monomer.
(B-b) Method in which an alkenyl alcohol, such as 10-undecenol, 5-hexenol, or allyl alcohol, is subjected to reaction at the final stage of the polymerization reaction or after the completion of reaction of a predetermined monomer in the synthesis of a vinyl polymer by living radical polymerization.
(B-c) Method in which a vinyl monomer is radically polymerized using a large amount of a hydroxyl group-containing chain transfer agent, such as a hydroxyl group-containing polysulfide, for example, as described in Japanese Unexamined Patent Application Publication No. 5-262808.
(B-d) Method in which a vinyl monomer is radically polymerized using hydrogen peroxide or a hydroxyl group-containing initiator, for example, as described in Japanese Unexamined Patent Application Publication No. 6-239912 or 8-283310.
(B-e) Method in which a vinyl monomer is radically polymerized using an alcohol in excess, for example, as described in Japanese Unexamined Patent Application Publication No. 6-116312.
(B-f) Method in which the halogen of a vinyl polymer having at least one highly reactive carbon-halogen bond is subjected to hydrolysis or reaction with a hydroxyl group-containing compound to introduce a hydroxyl group into the terminus, for example, by a process described in Japanese Unexamined Patent Application Publication No. 4-132706.
(B-g) Method in which a vinyl polymer having at least one highly reactive carbon-halogen bond is allowed to react with a stabilized, hydroxyl group-containing carbanion, such as the one represented by general formula (16) below, for substitution of the halogen.

   M⁺C⁻(R¹⁸) (R¹⁹)-R²⁰-OH (16)

   (In the formula, R¹⁸, R¹⁹, and R²⁰ are the same as those described above.)
   As the electron-withdrawing group represented by R¹⁸ and R¹⁹, -CO₂R, -C(O)R, and -CN are particularly preferable.
(B-h) Method in which a vinyl polymer having at least one highly reactive carbon-halogen bond is treated with an elemental metal, such as zinc, or an organometallic compound to prepare an enolate anion, and then the enolate anion is allowed to react with an aldehyde or a ketone.
(B-i) Method in which a vinyl polymer having at least one highly reactive carbon-halogen bond is allowed to react with a hydroxyl group-containing oxy anion or carboxylate anion, such as the one represented by general formula (17) or (18) below, for substitution of the halogen.

   HO-R²¹-O-M⁺ (17)

   (In the formula, R²¹ and M⁺ are the same as those described above.)

   HO-R²²-C(O)O⁻M⁺ (18)

   (In the formula, R²² and M⁺ are the same as those described above.)
(B-j) Method in which a compound having both an alkenyl group with low polymerizability and a hydroxyl group per molecule, as a second monomer, is subjected to reaction at the final stage of the polymerization reaction or after the completion of reaction of a predetermined monomer in the synthesis of a vinyl polymer by living radical polymerization.

Such a compound is not particularly limited, and examples thereof include a compound represented by general formula (19):

H₂C=C(R¹⁴)-R²¹-OH (19)

(wherein R¹⁴ and R²¹ are the same as those described above).

Although the compound represented by general formula (19) is not particularly limited, from the standpoint of ease of availability, an alkenyl alcohol, such as 10-undecenol, 5-hexenol, or allyl alcohol, is preferable.

In the present invention, when a halogen does not directly participate in the method for introducing the hydroxyl group, as in methods (B-a) to (B-e) and (B-j), preferably, the vinyl polymer is synthesized by living radical polymerization. In view that easier control is enabled, method (B-b) is more preferable.

When the hydroxyl group is introduced by conversion of the halogen of the vinyl polymer having at least one highly reactive carbon-halogen bond, preferably, a vinyl polymer having at least one highly reactive carbon-halogen bond at an end is used, the vinyl polymer being obtained by radical polymerization (atom transfer radical polymerization) of a vinyl monomer using an organic halide or halogenated sulfonyl compound as an initiator and a transition metal complex as a catalyst. In view that easier control is enabled, method (B-i) is more preferable.

Examples of the compound having groups reactive with the hydroxyl group, such as a crosslinkable silyl group and an isocyanato group, per molecule include γ-isocyanatopropyltrimethoxysilane, γ-isocyanatopropylmethyldimethoxysilane, and γ-isocyanatopropyltriethoxysilane. A commonly known catalyst used for urethane formation reaction may be used if necessary.

Examples of the compound having both a polymerizable alkenyl group and a crosslinkable silyl group per molecule used in method (C) include compounds represented by general formula (20) below, for example, trimethoxysilylpropyl (meth)acrylate and methyldimethoxysilylpropyl (meth) acrylate.

H₂C=C(R¹⁴)-R¹⁵-R²³-[Si(R⁹)_{2-b}(Y)_{b}O]ₘ-Si(R¹⁰)₃₋ₐ(Y)ₐ (20)

(In the formula, R⁹, R¹⁰, R¹⁴, R¹⁵, Y, a, b, and m are the same as those described above; and R²³ represents a direct bond or a divalent organic group having 1 to 20 carbon atoms, which may contain one or more ether bonds.)

The timing of subjecting the compound having both a polymerizable alkenyl group and a crosslinkable silyl group per molecule to reaction is not particularly limited. However, when rubber-like properties are desired in living radical polymerization in particular, such a compound is preferably subjected to reaction as the second monomer at the final stage of the polymerization reaction or after the completion of reaction of a predetermined monomer.

Examples of the crosslinkable silyl group-containing chain transfer agent used in the chain transfer polymerization process in method (D) include crosslinkable silyl group-containing mercaptans and crosslinkable silyl group-containing hydrosilanes as disclosed in Japanese Examined Patent Application Publication Nos. 3-14068 and 4-55444.

One example of the synthesis method of the vinyl polymer having at least one highly reactive carbon-halogen bond used in method (E) is the atom transfer radical polymerization in which an organic halide or the like is used as an initiator and a transition metal complex is used as a catalyst, although not limited thereto. Examples of the compound having a crosslinkable silyl group and a stabilized carbanion per molecule include compounds represented by general formula (21):

m⁺C⁻(R¹⁸) (R¹⁹)-R²⁴-C(H) (R²⁵)-CH₂-[Si(R⁹)_{2-b}(Y)_{b}O]ₘ-Si(R¹⁰)₃₋ₐ(Y)ₐ (21)

(wherein R⁹, R¹⁰, R¹⁸, R¹⁹, Y, a, b, and m are the same as those described above; R²⁴ represents a direct bond or a divalent organic group having 1 to 10 carbon atoms, which may contain one or more ether bonds; and R²⁵ represents hydrogen, an alkyl group having 1 to 10 carbon atoms, an aryl group having 6 to 10 carbon atoms, or an aralkyl group having 7 to 10 carbon atoms).

As the electron-withdrawing group represented by R¹⁸ and R¹⁹, -CO₂R, -C(O)R, and -CN are particularly preferable.

### Epoxy group

In the present invention, a reactive functional group-terminated vinyl polymer is produced by the following steps, although not limited thereto:
(1) polymerizing a vinyl monomer by living radical polymerization to produce a vinyl polymer; and
(2) allowing the resulting vinyl polymer to react with a compound having both a reactive functional group and an ethylenically unsaturated group.

In another method for producing a reactive functional group-terminated vinyl polymer, at the final stage of atom transfer radical polymerization, allyl alcohol is subjected to reaction, and then the epoxy ring is formed using the hydroxyl group and the halogen group.

### Amino group

One example of the method for producing a vinyl polymer having at least one amino group at the end of the main chain includes the following steps:
(1) preparing a vinyl polymer having at least one halogen group at the end of the main chain; and
(2) converting the terminal halogen to a substituent containing an amino group using an amino group-containing compound.

Examples of the amino group-containing substituent include, but are not limited to, groups represented by general formula (22):

-O-R²⁶-NR¹²₂ (22)

(wherein R²⁶ represents a divalent organic group having 1 to 20 carbon atoms, which may contain one or more ether bonds or ester bonds; R¹² represents hydrogen or a monovalent organic group having 1 to 20 carbon atoms; and two R¹²s may be the same or different and may be bonded together at their respective free ends to form a ring structure).

In general formula (22), R²⁶ represents a divalent organic group having 1 to 20 carbon atoms, which may contain one or more ether bonds or ester bonds. Examples thereof include an alkylene group having 1 to 20 carbon atoms, an arylene group having 6 to 20 carbon atoms, and an aralkylene group having 7 to 20 carbon atoms. Preferred is
-C₆H₄R²⁷-
(wherein C₆H₄ represents a phenylene group; and R²⁷ represents a direct bond or a divalent organic group having 1 to 14 carbon atoms, which may contain one or more ether bonds or ester bonds), or
-C(O)-R²⁸-
(wherein R²⁸ represents a direct bond or a divalent organic group having 1 to 19 carbon atoms, which may contain one or more ether bonds or ester bonds).

By conversion of the terminal halogen of the vinyl polymer, an amino group can be introduced into the end of the polymer. The substitution method is not particularly limited, but is preferably a nucleophilic substitution reaction using an amino group-containing compound as a nucleophile from the standpoint of easy control of the reaction. Examples of such a nucleophile include compounds represented by the following general formula (23) and having both a hydroxyl group and an amino group:

HO-R²⁶-NR¹²₂ (23)

(wherein R²⁶ represents a divalent organic group having 1 to 20 carbon atoms, which may contain one or more ether bonds or ester bonds; R¹² represents hydrogen or a monovalent organic group having 1 to 20 carbon atoms; and two R¹²s may be the same or different and may be bonded together at their respective free ends to form a ring structure).

In general formula (23), R²⁶ represents a divalent organic group having 1 to 20 carbon atoms, which may contain one or more ether bonds or ester bonds. Examples thereof include an alkylene group having 1 to 20 carbon atoms, an arylene group having 6 to 20 carbon atoms, and an aralkylene group having 7 to 20 carbon atoms. Among the compounds having both a hydroxyl group and an amino group, preferred are aminophenols in which R²⁶ is represented by
-C₆H₄-R²⁷-
(wherein C₆H₄ represents a phenylene group; and R²⁷ represents a direct bond or a divalent organic group having 1 to 14 carbon atoms, which may contain one or more ether bonds or ester bonds), and amino acids in which R²⁶ is represented by
-C(O)-R²⁸-
(wherein R²⁸ represents a direct bond or a divalent organic group having 1 to 19 carbon atoms, which may contain one or more ether bonds or ester bonds).

Specific examples of the compounds include ethanolamine; o, m, or p-aminophenol; o, m, or p-NH2-C6H4-CO2H; glycine, alanine, and aminobutanoic acid.

A compound having both an amino group and an oxy anion can also be used as a nucleophile. Examples of such a compound include, but are not limited to, compounds represented by general formula (24):

M⁺O⁻-R²⁶-NR¹²₂ (24)

(wherein R²⁶ represents a divalent organic group having 1 to 20 carbon atoms, which may contain one or more ether bonds or ester bonds; R¹² represents hydrogen or a monovalent organic group having 1 to 20 carbon atoms; two R¹²s may be the same or different and may be bonded together at their respective free ends to form a ring structure; and M⁺ represents an alkali metal ion or a quaternary ammonium ion).

In general formula (24), M⁺ is a counter cation to the oxy anion and represents an alkali metal ion or a quaternary ammonium ion. Examples of the alkali metal ion include lithium ion, sodium ion, and potassium ion. Preferred is sodium ion or potassium ion. Examples of the quaternary ammonium ion include tetramethylammonium ion, tetraethylammonium ion, trimethylbenzylammonium ion, trimethyldodecylammonium ion, tetrabutylammonium ion, and dimethylpyperidinium ion.

Among the compounds having both an amino group and an oxy anion, from the standpoints of easy control of the substitution reaction and ease of availability, salts of aminophenols represented by general formula (25) below or salts of amino acids represented by general formula (26) below are preferable.

M⁺O⁻-C₆H₄R²⁷-NR¹²₂ (25)

M⁺O⁻-C(O)-R²⁸-NR¹²₂ (26)

(wherein C₆H₄ represents a phenylene group; R²⁷ represents a direct bond or a divalent organic group having 1 to 14 carbon atoms, which may contain one or more ether bonds or ester bonds; R²⁸ represents a direct bond or a divalent organic group having 1 to 19 carbon atoms, which may contain one or more ether bonds or ester bonds; R¹² represents hydrogen or a monovalent organic group having 1 to 20 carbon atoms; two R¹²s may be the same or different and may be bonded together at their respective free ends to form a ring structure; and M⁺ is the same as that described above.)

The oxy anion-containing compound represented by general formula (24), (25), or (26) can be easily obtained by allowing a compound represented by general formula (23) to react with a basic compound.

Various compounds can be used as the basic compound. Examples thereof include sodium methoxide, potassium methoxide, lithium methoxide, sodium ethoxide, potassium ethoxide, lithium ethoxide, sodium tert-butoxide, potassium tert-butoxide, sodium carbonate, potassium carbonate, lithium carbonate, sodium hydrogen carbonate, sodium hydroxide, potassium hydroxide, sodium hydride, potassium hydride, methyllithium, ethyllithium, n-butyllithium, tert-butyllithium, lithium diisopropylamide, and lithium hexamethyldisilazide. The amount of the base used is not particularly limited, but is usually 0.5 to 5 equivalents, and preferably 0.8 to 1.2 equivalents, relative to the precursor described above.

Examples of the solvent which may be used in the reaction between the precursor and the base include hydrocarbon solvents, such as benzene and toluene; ether solvents, such as diethyl ether and tetrahydrofuran; halogenated hydrocarbon solvents, such as methylene chloride and chloroform; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; carbonate solvents, such as ethylene carbonate and propylene carbonate; amide solvents, such as dimethylformamide and dimethylacetamide; and sulfoxide solvents, such as dimethyl sulfoxide. These solvents may be used alone or in combination of two or more.

The oxy anion-containing compound in which M⁺ is a quaternary ammonium ion can be obtained by preparing the corresponding compound in which M⁺ is an alkali metal ion, and allowing this compound to react with a quaternary ammonium halide. Examples of the quaternary ammonium halide include tetramethylammonium halides, tetraethylammonium halides, trimethylbenzylammonium halides, trimethyldodecylammonium halides, and tetrabutylammonium halides.

Various types of solvent may be used for the substitution reaction of the terminal halogen of the polymer. Examples thereof include hydrocarbon solvents, such as benzene and toluene; ether solvents, such as diethyl ether and tetrahydrofuran; halogenated hydrocarbon solvents, such as methylene chloride and chloroform; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; carbonate solvents, such as ethylene carbonate and propylene carbonate; amide solvents, such as dimethylformamide and dimethylacetamide; and sulfoxide solvents, such as dimethyl sulfoxide. These solvents may be used alone or in combination of two or more.

The reaction temperature can be set at 0°C to 150°C. The amount of the amino group-containing compound used is not particularly limited, but is usually 1 to 5 equivalents, and preferably 1 to 1.2 equivalents, relative to the terminal halogen of the polymer.

In order to accelerate the nucleophilic substitution reaction, a basic compound may be added to the reaction mixture. Examples of such a basic compound include, in addition to those already exemplified above, alkylamines, such as trimethylamine, triethylamine and tributylamine; polyamines, such as tetramethylethylenediamine and pentamethyldiethylenetriamine; and pyridine compounds, such as pyridine and picoline.

When the amino group in the amino group-containing compound used for the nucleophilic substitution reaction affects the nucleophilic substitution reaction, the amino group is preferably protected with an appropriate substituent. Examples of such a substituent include a benzyloxycarbonyl group, a tert-butoxycarbonyl group, and a 9-fluorenylmethoxycarbonyl group.

In another possible method, the terminal halogen of the vinyl polymer is substituted with an azide anion, and then reduction is performed with LAH or the like.

### Group having polymerizable carbon-carbon double bond

Examples of the method for introducing a polymerizable carbon-carbon double bond into the polymer (I) of the present invention include, but are not limited to, the followings:
(i) Method in which a halogen group of a vinyl polymer is substituted with a compound having a radically polymerizable carbon-carbon double bond. Specific examples include a method in which a vinyl polymer having a structure represented by general formula (27):

   -CR²⁹R³⁰X (27)

   (wherein R²⁹ and R³⁰ each represent a group bonded to an ethylenically unsaturated group of a vinyl monomer; and X represents chlorine, bromine or iodine) is allowed to react with a compound represented by general formula (28):

   M⁺⁻OC(O)C(R¹³)=CH₂ (28)

   (wherein R¹³ represents hydrogen or an organic group having 1 to 20 carbon atoms; and M⁺ represents an alkali metal or quaternary ammonium ion).
(ii) Method in which a hydroxyl group-containing vinyl polymer is allowed to react with a compound represented by general formula (29):

   XC(O)C(R¹³)=CH₂ (29)

   (wherein R¹³ represents hydrogen or an organic group having 1 to 20 carbon atoms; and X represents chlorine, bromine, or a hydroxyl group).
(iii) Method in which a hydroxyl group-containing vinyl polymer is allowed to react with a diisocyanate compound, and the residual isocyanato group is allowed to react with a compound represented by general formula (30):

   HO-R³¹-OC(O)C(R¹³)=CH₂ (30)

   (wherein R¹³ represents hydrogen or an organic group having 1 to 20 carbon atoms; and R³¹ represents a divalent organic group having 2 to 20 carbon atoms).

These methods will be described in detail below.

Method (i) will be described below.
(i) Method in which a vinyl polymer having a terminal structure represented by general formula (27):

   -CR²⁹R³⁰X (27)

   (wherein R²⁹ and R³⁰ each represent a group bonded to an ethylenically unsaturated group of a vinyl monomer; and X represents chlorine, bromine or iodine) is allowed to react with a compound represented by general formula (28):

   M⁺-OC(O)C(R¹³)=CH₂ (28)

   (wherein R¹³ represents hydrogen or an organic group having 1 to 20 carbon atoms; and M⁺ represents an alkali metal or quaternary ammonium ion).
   The vinyl polymer having a terminal structure represented by general formula (27) is produced by the above-described method in which a vinyl monomer is polymerized using an organic halide or a halogenated sulfonyl compound as an initiator and a transition metal complex as a catalyst, or a method in which a vinyl monomer is polymerized using a halide as a chain transfer agent, preferably by the former method.
   The compound represented by general formula (28) is not particularly limited. Specific examples of R¹³ include -H, -CH3, -CH2CH3, -(CH2)nCH3 (wherein n is an integer of 2 to 19), -C6H5, -CH2OH, and -CN. Preferably, R¹³ is -H or -CH3. M⁺ is a counter cation to the oxy anion, and for example, represents an alkali metal ion, such as lithium ion, sodium ion, or potassium ion, or a quaternary ammonium ion. Examples of the quaternary ammonium ion include tetramethylammonium ion, tetraethylammonium ion, tetrabenzylammonium ion, trimethyldodecylammonium ion, tetrabutylammonium ion, and dimethylpyperidinium ion. Preferred is sodium ion or potassium ion. The oxy anion of general formula (28) is used preferably in an amount of 1 to 5 equivalents, and more preferably 1.0 to 1.2 equivalents, relative to the halogen group of general formula (27). The solvent to be used in carrying out this reaction is not particularly limited, but is preferably a polar solvent because the reaction is a nucleophilic substitution reaction. Examples of the polar solvent which may be used include tetrahydrofuran, dioxane, diethyl ether, acetone, dimethyl sulfoxide, dimethylformamide, dimethylacetamide, hexamethylphosphoric triamide, and acetonitrile. The temperature for carrying out the reaction is not particularly limited, but is usually 0°C to 150°C, and preferably in a range of room temperature to 100°C so that the polymerizable terminal group can be retained.
   Method (ii) will be described below.
(ii) Method in which a hydroxyl group-containing vinyl polymer is allowed to react with a compound represented by general formula (29):

   XC(O)C(R¹³)=CH₂ (29)

   (wherein R¹³ represents hydrogen or an organic group having 1 to 20 carbon atoms; and X represents chlorine, bromine, or a hydroxyl group).

The compound represented by general formula (29) is not particularly limited. Specific examples of R¹³ include -H, -CH₃, -CH₂CH₃, -(CH₂)ₙCH₃ (wherein n is an integer of 2 to 19), -C₆H₅, -CH₂OH, and -CN. Preferably, R¹³ is -H or -CH₃.

A vinyl polymer having a hydroxyl group, preferably at its terminus, is produced by the above-described method in which a vinyl monomer is polymerized using an organic halide or a halogenated sulfonyl compound as an initiator and a transition metal complex as a catalyst, or a method in which a vinyl monomer is polymerized using a hydroxyl group-containing compound as a chain transfer agent, preferably by the former method. Such a method for producing a hydroxyl group-containing vinyl polymer is not particularly limited. Examples of the method include the followings:
(a) Method in which a compound having both a polymerizable alkenyl group and a hydroxyl group per molecule represented by general formula (31):

   H₂C=C(R³²)-R³³-R³⁴-OH (31)

   (wherein R³² represents an organic group having 1 to 20 carbon above, preferably hydrogen or a methyl group, and may be the same or different; R³³ represents -C(O)O- (ester group), or an o-, m-, or p-phenylene group; R³⁴ represents a direct bond or a divalent organic group having 1 to 20 carbon atoms, which may contain one or more ether bonds; when R³³ is an ester group, the compound is a (meth)acrylate compound; and when R³³ is a phenylene group, the compound is a styrene compound) is subjected to reaction as a second monomer in the synthesis of a vinyl polymer by living radical polymerization.
   The timing of subjecting the compound having both a polymerizable alkenyl group and a hydroxyl group per molecule to reaction is not particularly limited. However, when rubber-like properties are desired in particular, such a compound is preferably subjected to reaction as the second monomer at the final stage of the polymerization reaction or after the completion of reaction of a predetermined monomer.
(b) Method in which a compound having both an alkenyl group with low polymerizability and a hydroxyl group per molecule is subjected to reaction as a second monomer at the final stage of the polymerization reaction or after the completion of reaction of a predetermined monomer in the synthesis of a vinyl polymer by living radical polymerization.
   Examples of such a compound include, but are not limited to, compounds represented by general formula (32):

   H₂C=C(R³²)-R³⁵-OH (32)

   (wherein R³² is the same as that described above; and R³⁵ represents a divalent organic group having 1 to 20 carbon atoms, which may contain one or more ether bonds).
   Although the compound represented by general formula (32) is not particularly limited, from the standpoint of ease of availability, an alkenyl alcohol, such as 10-undecenol, 5-hexenol, or allyl alcohol, is preferable.
(c) Method in which the halogen of a vinyl polymer having at least one carbon-halogen bond produced by atom transfer radical polymerization, such as the one represented by general formula (27), is subjected to hydrolysis or reaction with a hydroxyl group-containing compound to introduce a hydroxyl group into the terminus, for example, by a process described in Japanese Unexamined Patent Application Publication No. 4-132706.
(d) Method in which a vinyl polymer having at least one carbon-halogen bond produced by atom transfer radical polymerization, such as the one represented by general formula (27), is allowed to react with a stabilized, hydroxyl group-containing carbanion, such as the one represented by general formula (33) below, for substitution of the halogen.

   M⁺C⁻(R³⁶) (R³⁷)-R³⁵-OH (33)

   (In the formula, R³⁵ is the same as that described above; R³⁶ and R³⁷ each represent an electron-withdrawing group for stabilizing the carbanion C⁻, or one of R³⁶ and R³⁷ represents the electron-withdrawing group and the other represents hydrogen, an alkyl group having 1 to 10 carbon atoms, or a phenyl group; examples of the electron-withdrawing groups represented by R³⁶ and R³⁷ include -CO₂R (ester group), -C(O)R (keto group), -CON(R₂) (amido group), -COSR (thioester group), -CN (nitrile group), and -NO₂ (nitro group), the substituent R being an alkyl group having 1 to 20 carbon atoms, an aryl group having 6 to 20 carbon atoms, or an aralkyl group having 7 to 20 carbon atoms, and preferably an alkyl group having 1 to 10 carbon atoms or a phenyl group; and R³⁶ and R³⁷ each particularly preferably represent -CO₂R, -C(O)R, or -CN.)
(e) Method in which a vinyl polymer having at least one carbon-halogen bond produced by atom transfer radical polymerization, such as the one represented by general formula (27), is treated with an elemental metal, such as zinc, or an organometallic compound to prepare an enolate anion, and then the enolate anion is allowed to react with an aldehyde or a ketone.
(f) Method in which a vinyl polymer having at least one polymer terminal halogen, preferably a halogen represented by general formula (27), is allowed to react with a hydroxyl group-containing oxy anion represented by general formula (34) below or the like or a hydroxyl group-containing carboxylate anion represented by general formula (35) below or the like to substitute a hydroxyl group-containing substituent for the halogen.

   HO-R³⁵-O⁻M⁺ (34)

   (In the formula, R³⁵ and M⁺ are the same as those described above.)

   HO-R³⁵-C(O)O⁻M⁺ (35)

   (In the formula, R³⁵ and M⁺ are the same as those described above.)
   In the present invention, when a halogen does not directly participate in the method for introducing the hydroxyl group, as in methods (a) and (b), in view of easier control, method (b) is more preferable.
   Furthermore, when the hydroxyl group is introduced by conversion of the halogen of a vinyl polymer having at least one carbon-halogen bond, as in methods (c) to (f), in view of easier control, method (f) is more preferable.
   Method (iii) will be described below.
(iii) Method in which a hydroxyl group-containing vinyl polymer is allowed to react with a diisocyanate compound, and the residual isocyanato group is allowed to react with a compound represented by general formula (36):

   HO-R³¹-OC(O)C(R¹³)=CH₂ (36)

   (wherein R¹³ represents hydrogen or an organic group having 1 to 20 carbon atoms; and R³¹ represents a divalent organic group having 2 to 20 carbon atoms).

The compound represented by general formula (36) is not particularly limited. Specific examples of R¹³ include -H, -CH₃, -CH₂CH₃, -(CH₂)ₙCH₃ (wherein n is an integer of 2 to 19), -C₆H₅, -CH₂OH, and -CN. Preferably, R¹³ is -H or -CH₃. As a specific compound, there may be mentioned 2-hydroxypropyl methacrylate.

The hydroxyl group-terminated vinyl polymer is as described above.

The diisocyanate compound is not particularly limited, and any known diisocyanate compound may be used. Examples thereof include isocyanate compounds, such as tolylene diisocyanate, 4,4'-diphenylmethane diisocyanate, hexamethylene diisocyanate, xylylene diisocyanate, metaxylylene diisocyanate, 1,5-naphthalene diisocyanate, hydrogenated diphenylmethane diisocyanate, hydrogenated tolylene diisocyanate, hydrogenated xylylene diisocyanate, and isophorone diisocyanate. These may be used alone or in combination of two or more. Blocked isocyanates may also be used.

In view of higher weatherability, preferably, a diisocyanate compound having no aromatic ring, such as hexamethylene diisocyanate or hydrogenated diphenylmethane diisocyanate, is used.

### <<Organic polymer (II) having group reactive with isocyanato group and having different main chain structure from that of component (A)>>

The organic polymer (II) having a group reactive with an isocyanato group in the present invention may be an organic polymer having an active hydrogen reactive with an isocyanato group or an epoxy group that can generate an active hydrogen. Alternatively, the organic plymer (II) may be a urethane prepolymer prepared by reaction of an active hydrogen-containing compound with an organic polyisocyanate.

In the present invention, an active hydrogen is defined as a functional group containing active hydrogen reactive with an isocyanato group. Examples thereof include, but are not limited to, a hydroxyl group, an amino group, an imino group, a carboxyl group, a mercapto group, and a thiocarboxyl group. When a plurality of active hydrogens are present, they may be the same or different.

Additionally, since an epoxy group generates a hydroxyl group by the action of another active hydrogen compound, the epoxy group is reactive with an isocyanato group as in the active hydrogen, and thus can be considered as an equivalent. Namely, a plurality of epoxy groups and other active hydrogens may be present; only the epoxy group may be present; or a plurality of epoxy groups or an epoxy group and the other active hydrogen may be the same or different.

When the cured object obtained from the curable composition of the present invention is particularly required to have rubber-like properties, preferably, one to three active hydrogens are contained in the molecule, although not particularly limited thereto, because the molecular weight between crosslinking points, which greatly affects rubber elasticity, can be increased. The number of active hydrogens may be one or less, or three or more. In such a case, at least one active hydrogen is preferably positioned at an end of the molecular chain. More preferably, all crosslinkable functional groups are positioned at the ends of the molecular chain, although not limited thereto.

In the present invention, the term "different main chain structure" means that there are differences in constitutional monomer species, molecular weight, branch structure, position of functional group, polymerization method, such as living polymerization or random polymerization, etc. That is, in the present invention, the organic polymer (II) having a different main chain structure from that of the vinyl polymer (I), i.e., the component (A), usually corresponds to at least any one of the followings:
Case in which the number-average molecular weight determined by GPC of the organic polymer (II) is a half or less than or two or more times that of the vinyl polymer (I).
Case in which the difference in the Mw/Mn value determined by GPC between the organic polymer (II) and the vinyl polymer (I) is 0.5 or more.
Case in which there is a difference in the monomer species charged for polymerization between the vinyl polymer (I) and the organic polymer (II).
Case in which there is a 1% by weight or more difference in compositional ratio of the monomer species charged for polymerization between the vinyl polymer (I) and the organic polymer (II).
Case in which there is a difference in monomer sequence distribution between the vinyl polymer (I) and the organic polymer (II). Examples of the sequence distribution include random, block, and gradient.
Case in which there is a difference in branch structure between the vinyl polymer (I) and the organic polymer (II). Examples of the branch structure include linear, graft, star, and hyperbranched. Under the same category of branch structure, if there is a difference in the number of branches or branch length, the two polymers are considered to have different main chain structures.

Although not particularly limited thereto, examples of the organic polymer (II) having a different main chain structure from that of the component (A) include a case in which the vinyl polymer (I), i.e., the component (A), is a crosslinkable functional group-containing acrylic acid ethyl ester obtained by living polymerization, while the organic polymer (II), i.e., the component (B), is a hydroxyl group-containing polyether polymer or an amino group-containing acrylic acid ethyl ester obtained by random polymerization.

Examples of the main chain structure of the organic polymer (II) of the present invention include, but are not limited to, polyethers, such as polypropylene polyol, polyethylene polyol, and polytetramethylene ether glycol; polyesters, such as adipic acid-based polyester polyols, phthalic acid-based polyester polyols, and polycaprolactone polyester polyols; polyolefins, such as polybutadiene polyol, hydrogenated polybutadiene polyol, and hydrogenated isoprene polyol; and vinyl-based compounds, such as acrylic polyols which are copolymers from hydroxyl group-containing acrylic monomers, such as hydroxy methacrylate, (meth)acrylates, styrene, and the like. Other examples of the organic polymer (II) of the present invention include, but are not limited to, special polyester polyols, such as aromatic polyester polyols and polycarbonate polyols; and flame-retardant polyols, such as polymer polyols, epoxy polyols, halogen and phosphorus-containing polyols, and phenolic polyols.

Polyols will be described in more detail below. Polyols are various types of polyhydroxy compounds generally used for production of urethane compounds, and examples thereof include polyether polyols, polyester polyols, polymer polyols, and hydroxyl group-terminated polybutadiene. Polyether polyols are products formed by addition polymerization of at least one alkylene oxide, such as ethylene oxide, propylene oxide, butylene oxide, or tetrahydrofuran, and a compound having at least two active hydrogens. Examples of the compound having at least two active hydrogens include polyhydric alcohols, amines, alkanolamines, and polyhydric phenols. Examples of polyhydric alcohols include ethylene glycol, propylene glycol, butanediol, diethylene glycol, glycerol, hexanetriol, trimethylolpropane, and pentaerythritol. Examples of amines include ethylenediamine and hexamethylenediamine. Examples of alkanolamines include ethanolamine and propanolamine. Examples of polyhydric phenols include resorcin and bisphenol. Examples of polyester polyols include polyhydric alcohol-polybasic carboxylic acid condensates, hydroxycarboxylic acid-polyhydric alcohol condensates, and lactone polymers. Examples of the polyhydric alcohol used for the above include the compounds exemplified under the section of the polyether polyols. Examples of the polybasic carboxylic acid include adipic acid, glutaric acid, azelaic acid, fumaric acid, maleic acid, phthalic acid, terephthalic acid, dimer acids, and pyromellitic acid. As the hydroxycarboxylic acid-polyhydric alcohol condensates, also useful are castor oil, reaction products of castor oil and ethylene glycol, and reaction products of castor oil and propylene glycol. Furthermore, lactone polymers are produced by ring opening polymerization of ε-caprolactam, α-methyl-ε-caprolactam, ε-methyl-ε-caprolactone, or the like using an appropriate polymerization initiator. Examples of polymer polyols include those obtained by graft polymerization of ethylenically unsaturated compounds, such as acrylonitrile, styrene, and (meth)acrylates, into the polyether polyols or polyester polyols; 1,2- or 1,4-polybutadiene polyols; and hydrogenated products thereof. The polyols exemplified above may be used alone or in combination of two or more. Furthermore, the average molecular weight is preferably about 100 to 10,000, and more preferably about 500 to 5,000. In polymers having a narrow molecular-weight distribution or the like, in some cases, the average molecular weight is preferably 10,000 to 50,000 from the standpoint of rubber elasticity or the like.

In the present invention, a polyurethane prepolymer is produced, for example, by a method in which an active hydrogen-containing compound and an excess amount of a polyisocyanate compound are allowed to react with each other under nitrogen flow, at normal pressure and a reaction temperature of 70°C to 90°C, for a reaction time of 1 to 3 hours, although not limited thereto. With respect to the reactive components, the equivalent ratio NCO/OH is usually set at 1.2 to 1.9, and preferably 1.4 to 1.7. If the ratio becomes less than 1.2, the viscosity of the urethane prepolymer significantly increases. If the ratio exceeds 1.9, although the viscosity is low, foaming resulting from CO₂ tends to occur remarkably during moisture curing.

### <<Polyisocyanate compound>>

In the curable composition used in the present invention, a polyisocyanate compound may be used as a curing agent for the organic polymer (II) having a group reactive with an isocyanato group. As the polyisocyanate compound, any of various known compounds that are usually used for production of polyurethane resins may be used. Examples thereof include, but are not limited to, isocyanate compounds, such as 2,4-trilene diisocyanate, 4,4'-diphenylmethane diisocyanate, polyphenylmethane polyisocyanate (Polymeric MDI), ethylene diisocyanate, propylene diisocyanate, 1,4-tetramethylene diisocyanate, 1,6-hexamethylene diisocyanate, m-xylylene diisocyanate, p-xylylene diisocyanate, p-phenylene diisocyanate, tolidine diisocyanate, p-tetramethylxylylene diisocyanate, m-tetramethylxylylene diisocyanate, triphenylmethane triisocyanate, isophorone diisocyanate, lysine diisocyanate, 1,6,11-undecane triisocyanate, carbodiimide-modified diphenylmethane diisocyanate, 4,4-diisocyanate-3,3-dimethylphenyl, diphenyldimethylmethane-4,4'-diisocyanate, 1,3- or 1,4-cyclohexyl diisocyanate, bis(isocyanatomethyl)cyclohexane, isopropylbenzene-2,4-diisocyanate, polymethylene polyphenyl isocyanate, tris-4-phenyl isocyanate thiophosphate, 3,3',4,4'-diphenylmethane tetraisocyanate, propylene glycol or triol-tolylene diisocyanate adducts, an adduct of 1 mole of trimethylolpropane with 3 moles of tolylene diisocyanate, prepolymers of the active hydrogen-containing polymer and the polyisocyanate, cyclohexanephenylene diisocyanate, chlorophenylene diisocyanate, 1,5-naphthalene diisocyanate, hydrogenated diphenylmethane diisocyanate (4,4-dicyclohexylmethane diisocyanate), 1-methyl-2,4-diisocyanate cyclohexane, 1-methyl-2,6-diisocyanate cyclohexane, hydrogenated tolylene diisocyanate, and hydrogenated xylylene diisocyanate; biuret polyisocyanate compounds, such as Sumidur N (manufactured by Sumitomo Bayer Urethane Co., Ltd.); isocyanurate ring-containing polyisocyanate compounds, such as Desmodur IL and HL (manufactured by Bayer A. G.) and Coronate EH (manufactured by Nippon Polyurethane Industry Co., Ltd.); adduct polyisocyanate compounds, such as Sumidur L (manufactured by Sumitomo Bayer Urethane Co., Ltd.), and adduct polyisocyanate compounds, such as Coronate HL (manufactured by Nippon Polyurethane Industry Co., Ltd.). These may be used alone or in combination of two or more. Furthermore, blocked isocyanates may also be used.

With respect to the amount of the polyisocyanate compound added, the equivalent ratio of the NCO group to the active hydrogen group (NCO group/active hydrogen group) is preferably 0.5 to 3.0, more preferably 0.7 to 2.0, and most preferably 0.8 to 1.5. The ratio may be set appropriately depending on the application and the like. Furthermore, in order to promote curing, according to need, a catalyst, such as di-n-dibutyltin dilaurate, stannous octoate, triethylenediamine, diethylenediamine, triethylamine, a metal naphthenate, or a metal octylate, may be used.

### <<Curable composition>>

In the curable composition of the present invention, there may be a case in which a curing catalyst and a curing agent are required. Depending on the desired physical properties, various types of compounding agents may be added to the curable composition.

### <Curing catalyst/curing agent>

When the crosslinkable functional group in the vinyl polymer (I) is the same as the group reactive with the isocyanato group in the organic polymer (II), the same curing catalyst/curing agent can be used. Even if both groups are different, in some cases, it is possible to use the same curing catalyst/curing agent. Additionally, as the curing catalyst/curing agent for the organic polymer (II), the catalysts and polyisocyanate compounds described under the section of the polyisocyanate compounds may be used.

The curing catalyst/curing agent will be described in detail below for each of the respective crosslinkable functional groups of the vinyl polymer (I).

### In the case of crosslinkable silyl group

Crosslinkable silyl group-containing polymers are crosslinked and cured by forming siloxane bonds in the presence or absence of any of known various types of condensation catalyst. Depending on the molecular weights and main chain structures of the polymers, cured objects with a wide variety of properties, for example, from rubber-like properties to resin-like properties, can be produced.

Examples of such a condensation catalyst include tetravalent tin compounds, such as dibutyltin dilaurate, dibutyltin diacetate, dibutyltin diethylhexanoate, dibutyltin dioctoate, dibutyltin dimethylmaleate, dibutyltin diethylmaleate, dibutyltin dibutylmaleate, dibutyltin diisooctylmaleate, dibutyltin ditridecylmaleate, dibutyltin dibenzylmaleate, dibutyltin maleate, dioctyltin diacetate, dioctyltin distearate, dioctyltin dilaurate, dioctyltin diethylmaleate, and dioctyltin diisooctylmaleate; divalent tin compounds, such as tin octylate, tin naphthenate, and tin stearate; monoalkyltins, such as monobutyltin compounds (e.g., monobutyltin tris octoate and monobutyltin triisopropoxide) and monooctyltin compounds; titanate esters, such as tetrabutyl titanate and tetrapropyl titanate; organoaluminum compounds, such as aluminum trisacetylacetonate, aluminum trisethylacetoacetate, and diisopropoxyaluminum ethylacetoacetate; metal salts of carboxylic acids (e.g., 2-ethylhexanoic acid, neodecanoic acid, versatic acid, oleic acid, and naphthenic acid), such as bismuth carboxylate, iron carboxylate, titanium carboxylate, lead carboxylate, vanadium carboxylate, zirconium carboxylate, calcium carboxylate, potassium carboxylate, barium carboxylate, manganese carboxylate, cerium carboxylate, nickel carboxylate, cobalt carboxylate, zinc carboxylate, and aluminum carboxylate, and reaction products and mixtures of these compounds and amine compounds (e.g., laurylamine) which will be described below; chelate compounds, such as zirconium tetraacetylacetonate and titanium tetraacetylacetonate; aliphatic primary amines, such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines, such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine, and butylstearylamine; aliphatic tertiary amines, such as triamylamine, trihexylamine, and trioctylamine; aliphatic unsaturated amines, such as triallylamine and oleylamine; aromatic amines, such as laurylaniline, stearylaniline, and triphenylamine; other amines, such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, and 1,8-diazabicyclo(5,4,0)undecene-7 (DBU), or salts of these amine compounds with carboxylic acids or the like; reaction products and mixtures of amine compounds and organotin compounds, such as a reaction product and a mixture of laurylamine and tin octylate; low-molecular-weight polyamide resins obtained from excess polyamines and polybasic acids; reaction products of excess polyamines with epoxy compounds; and γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(β-aminoethyl)aminopropyltrimethoxysilane, N-(β-aminoethyl)aminopropylmethyldimethoxysilane, N-(β-aminoethyl)aminopropyltriethoxysilane, N-(β-aminoethyl)aminopropylmethyldiethoxysilane, N-(β-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane. Other examples include silanol condensation catalysts, such as amino group-containing silane coupling agents, i.e., modified derivatives of the compounds described above (e.g., amino-modified silyl polymers, silylated amino polymers, unsaturated amino silane complexes, phenylamino long-chain alkylsilanes, and aminosilylated silicones), and other known silanol condensation catalysts, such as acidic catalysts and basic catalysts.

These catalysts may be used alone or in combination of two or more. The condensation catalyst is used in an amount of preferably about 0.1 to 20 parts (parts by weight, hereinafter the same) and more preferably 1 to 10 parts, based on 100 parts of the vinyl polymer having at least one crosslinkable silyl group. If the amount of the silanol condensation catalyst used is lower than the range described above, the curing rate may decrease and the curing reaction may not sufficiently proceed. On the other hand, if the amount of the silanol condensation catalyst used exceeds the range, heat generation or foaming occurs locally during curing, and it becomes difficult to obtain satisfactory cured objects, and the pot life is excessively shortened, which is undesirable in view of workability. Although not particularly limited, tin-based curing catalysts are preferably used to control curability.

In the curable composition of the present invention, in order to further enhance the activity of a condensation catalyst, as well as an amine compound, the amino group-containing silane coupling agent may be used as a cocatalyst. The amino group-containing silane coupling agent refers to a compound that contains a group including a silicon atom to which a hydrolyzable group is bonded (hereinafter referred to as a "hydrolyzable silicon group") and an amino group. As the hydrolyzable group, of which examples have been described above, a methoxy group, an ethoxy group, or the like is preferable in view of the hydrolysis rate. The number of hydrolyzable groups is preferably two or more, in particular, three or more.

The amine compound is used in an amount of preferably about 0.01 to 50 parts by weight, and more preferably 0.1 to 20 parts by weight, based on 100 parts by weight of the organic polymer of the vinyl polymer (I). If the amount of the amine compound used is less than 0.01 parts by weight, the curing rate may decrease and the curing reaction may not sufficiently proceed. On the other hand, if the amount of the amine compound used exceeds 30 parts by weight, the pot life may be excessively shortened, which is undesirable in view of workability.

These amine compounds may be used alone or in combination of two or more.

Furthermore, a silicon compound which does not contain an amino group or a silanol group and which is represented by general formula (37):

R⁴⁹ₐSi(OR⁵⁰)₄₋ₐ (37)

(wherein R⁴⁹ and R⁵⁰ each independently represent a substituted or unsubstituted hydrocarbon group having 1 to 20 carbon atoms; and **a** is any one of 0, 1, 2, and 3) may be incorporated as a cocatalyst.

Preferred examples of the silicon compound include, but are not limited to, those represented by general formula (37) in which R⁴⁹ is an aryl group having 6 to 20 carbon atoms, such as phenyltrimethoxysilane, phenylmethyldimethoxysilane, phenyldimethylmethoxysilane, diphenyldimethoxysilane, diphenyldiethoxysilane, and triphenylmethoxysilane, because of high effect of accelerating curing reaction of the composition. In particular, diphenyldimethoxysilane and diphenyldiethoxysilane are most preferable because of low cost and ease of availability.

The silicon compound is used in an amount of preferably about 0.01 to 20 parts by weight, and more preferably 0.1 to 10 parts, based on 100 parts by weight of the vinyl polymer. If the amount of the silicon compound used is lower than the range described above, the effect of accelerating the curing reaction may be decreased. On the other hand, if the amount of the silicon compound used exceeds the range, the hardness and tensile strength of the cured object may be decreased.

The types and amounts of use of the curing catalyst and curing agent can be selected depending on the type of Y and the number **a** of the vinyl polymer represented by general formula (1) or (6) in the present invention. The curability, mechanical and physical properties, etc. in the present invention can be controlled depending on purposes and applications. When Y is an alkoxy group, reactivity increases as the number of carbon atoms decreases. Furthermore, as the number **a** increases, reactivity increases, and thus a small amount can provide sufficient curing.

### In the case of alkenyl group

In the case of crosslinking using the alkeyl group, the crosslinking is preferably performed by hydrosilylation reaction using a hydrosilyl group-containing compound as a curing agent and using a hydrosilylation catalyst, although not limited thereto.

As the hydrosilyl group-containing compound, any hydrosilyl group-containing compound that can be cured by crosslinking with the alkenyl group-containing polymer can be used without limitations. Examples thereof include linear polysiloxanes represented by general formula (38) or (39):

R⁵¹₃SiO-[S1(R⁵¹)₂O]ₐ-[Si(H) (R⁵²)O]_{b}-[Si(R⁵²) (R⁵³)O]_{c}-SiR⁵¹₃ (38)

HR⁵¹₂SiO-[Si(R⁵¹)₂O]ₐ-[Si(H) (R⁵²)O]_{b}-[Si(R⁵²) (R⁵³)O]_{c}-SiR⁵¹₂H (39)

(wherein R⁵¹ and R⁵² each represent an alkyl group having 1 to 6 carbon atoms or a phenyl group; R⁵³ represents an alkyl or aralkyl group having 1 to 10 carbon atoms; a is an integer satisfying the relationship 0 ≤ a ≤ 100; b is an integer satisfying the relationship 2 ≤ b ≤ 100; and c is an integer satisfying the relationship 0 ≤ c ≤ 100.); and cyclic siloxanes represented by general formula (40): 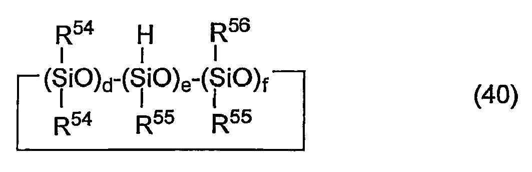
(wherein R⁵⁴ and R⁵⁵ each represent an alkyl group having 1 to 6 carbon atoms or a phenyl group; R⁵⁶ represents an alkyl or aralkyl group having 1 to 10 carbon atoms; d is an integer satisfying the relationship 0 ≤ d ≤ 8, e is an integer satisfying the relationship 2 ≤ e ≤ 10, and f is an integer satisfying the relationship 0 ≤ f ≤ 8; and 3 ≤ d + e + f ≤ 10).

These may be used alone or in combination of two or more. Among these siloxanes, in view of compatibility with (meth)acrylic polymers, preferred are phenyl group-containing linear siloxanes represented by general formula (41) or (42) below and cyclic siloxanes represented by general formula (43) or (44) below.

(CH₃)₃SiO-[Si(H) (CH₃)O]_{g}-[Si(C₆H₅)₂O]ₕ-Si(CH₃)₃ (41)

(CH₃)₃SiO-[Si(H) (CH₃)O]_{g}-[Si(CH₃){CH₂C(H) (R⁵⁷)C₆H₅}O]ₕ-Si(CH₃)₃ (42)

(In the formula, R⁵⁷ represents hydrogen or a methyl group; g is an integer satisfying the relationship 2 ≤ g ≤ 100; h is an integer satisfying the relationship 0 ≤ h ≤ 100; and C₆H₅ represents a phenyl group.) 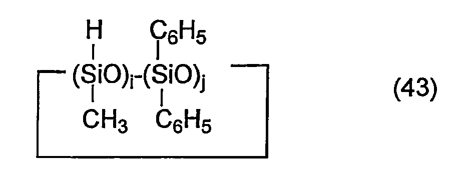 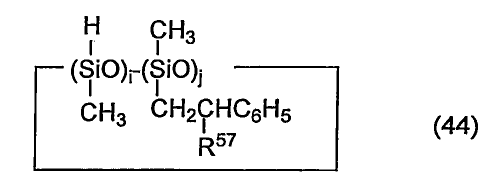
(In the formula, R⁵⁷ represents hydrogen or a methyl group; i is an integer satisfying the relationship 2 ≤ i ≤ 10, j is an integer satisfying the relationship 0 ≤ j ≤ 8; 3 ≤ i + j ≤ 10; and C₆H₅ represents a phenyl group.)

Further usable as the hydrosilyl group-containing compound is a compound produced by subjecting a low molecular weight compound containing at least two alkenyl groups per molecule to addition reaction with a hydrosilyl group-containing compound represented by any one of general formulae (38) to (44) such that the hydrosilyl group partially remains even after reaction. As the compound containing at least two alkenyl groups per molecule, various compounds can be used. Examples thereof include hydrocarbon compounds, such as 1,4-pentadiene, 1,5-hexadiene, 1,6-heptadiene, 1,7-octadiene, 1,8-nonadiene, and 1,9-decadiene; ether compounds, such as O,O'-diallyl bisphenol A and 3,3'-diallyl bisphenol A; ester compounds, such as diallyl phthalate, diallyl isophthalate, triallyl trimellitate, and tetraallyl pyromellitate; and carbonate compounds, such as diethylene glycol diallyl carbonate.

The above compounds can be produced by slowly adding dropwise the alkenyl group-containing compound described above to an excess of the hydrosilyl group-containing compound represented by any one of general formulae (38) (44) in the presence of a hydrosilylation catalyst. Among such compounds, in view of availability of starting materials, ease of removal of the siloxane used in excess, and compatibility with the vinyl polymer (I), the followings are preferred. 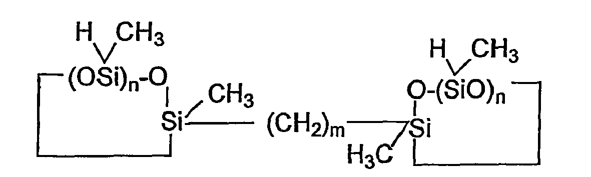 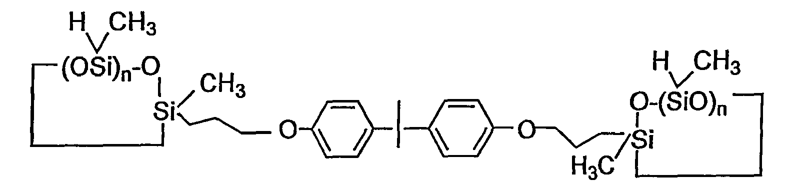 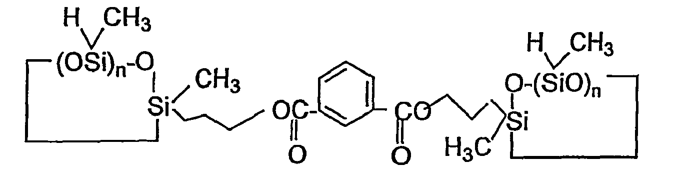 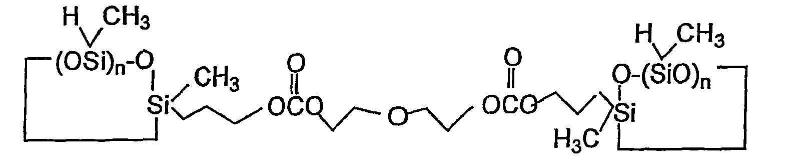
(wherein n is an integer of 2 to 4, and m is an integer of 5 to 10).

The polymer and the curing agent can be mixed at any ratio. In view of curability, the molar ratio of the alkenyl group to the hydrosilyl group is preferably in a range of 5 to 0.2, and more preferably 2.5 to 0.4. If the molar ratio exceeds 5, curing becomes insufficient, and only a tacky cured object with small strength is produced. If the molar ratio is less than 0.2, a large amount of active hydrosilyl group remains in the cured object even after curing, resulting in cracks and voids, and thus it is not possible to produce a cured object that is homogeneous and strong.

The curing reaction between the polymer and the curing agent proceeds by mixing the two components, followed by heating. A hydrosilylation catalyst can be used to accelerate the reaction. Examples of such a hydrosilylation catalyst include, but are not limited to, radical initiators, such as organic peroxides and azo compounds, and transition metal catalysts.

Examples of radical initiators include, but are not limited to, dialkyl peroxides, such as di-tert-butyl peroxide, 2,5-dimethyl-2,5-di(tert-butylperoxy)hexane, 2,5-dimethyl-2,5-di(tert-butylperoxy)-3-hexyne, dicumyl peroxide, tert-butylcumyl peroxide, and α,α'-bis(tert-butylperoxy)isopropyl benzene; diacyl peroxides, such as benzoyl peroxide, p-chlorobenzoyl peroxide, m-chlorobenzoyl peroxide, 2,4-dichlorobenzoyl peroxide, and lauroyl peroxide; peresters, such as tert-butyl peroxybenzoate; peroxydicarbonates, such as diisopropyl peroxydicarbonate and di-2-ethylhexyl peroxydicarbonate; and peroxyketals, such as 1,1-di(tert-butylperoxy)cyclohexane and 1,1-di(tert-butylperoxy)-3,3,5-trimethylcyclohexane.

Examples of the transition metal catalyst include, but are not limited to, elemental platinum, solid platinum dispersed in a carrier, such as alumina, silica, or carbon black, chloroplatinic acid, complexes of chloroplatinic acid and alcohols, aldehydes, ketones, or the like, platinum-olefin complexes, and platinum(0)-divinyltetramethyldisiloxane complexes. Examples of the catalyst other than platinum compounds include RhCl(PPh₃)₃, RhCl₃, RuCl₃, IrCl₃, FeCl₃, AlCl₃, PdCl₂·H₂O, NiCl₂, and TiCl₄. These catalysts may be used alone or in combination of two or more. Although the amount of the catalyst is not particularly limited, the catalyst is used preferably in an amount of 10⁻¹ to 10⁻⁸ mol, and more preferably 10⁻³ to 10⁻⁶ mol, per mole of the alkenyl group of the vinyl polymer (I). If the amount is less than 10⁻⁸ mol, curing does not proceed satisfactorily. Furthermore, since the hydrosilylation catalyst is expensive, it is not preferred to use the hydrosilylation catalyst in an amount exceeding 10⁻¹ mol.

The curing temperature is not particularly limited. Curing is performed usually at 0°C to 200°C, preferably at 30°C to 150°C, and more preferably at 80°C to 150°C.

### In the case of hydroxyl group

The hydroxyl group-containing polymer of the present invention is homogeneously cured using a compound having at least two functional groups reactive with the hydroxyl group as a curing agent. Examples of the curing agent include polyvalent isocyanate compounds containing at least two isocyanato groups per molecule; aminoplast resins, such as methylolated melamines, and alkyl ethers or low condensation products thereof; and polyfunctional carboxylic acids and halides thereof. When cured objects are produced using these curing agents, appropriate curing catalysts can be used respectively.

### In the case of amino group

The amino group-containing polymer of the present invention is homogeneously cured using a compound having at least two functional groups reactive with the amino group as a curing agent. Examples of the curing agent include polyvalent isocyanate compounds containing at least two isocyanato groups per molecule; aminoplast resins, such as methylolated melamines, and alkyl ethers or low condensation products thereof; and polyfunctional carboxylic acids and halides thereof. When cured objects are produced using these curing agents, appropriate curing catalysts can be used respectively.

### In the case of epoxy group

The curing agent for the epoxy group-containing polymer of the present invention is not particularly limited. Examples thereof include aliphatic amines, alicyclic amines, and aromatic amines; acid anhydrides; polyamides; imidazoles; amineimides; urea; melamine and its derivatives; salts of polyamines; phenolic resins; polymercaptans, polysulfides; and photo- and ultraviolet-curing agents, such as aromatic diazonium salts, diaryliodonium salts, triarylsulfonium salts, and triarylselenium salts.

### In the case of polymerizable carbon-carbon double bond

The polymer having a polymerizable carbon-carbon double bond can be cured by polymerization reaction of the polymerizable carbon-carbon double bond.

As the crosslinking method, curing by active energy rays or curing by heat may be mentioned. In the active energy ray-curable composition, the photopolymerization initiator is preferably a radical photopolymerization initiator or an anionic photopolymerization initiator. In the thermosetting composition, the thermal polymerization initiator is preferably selected from the group consisting of azo initiators, peroxides, persulfate salts, and redox initiators.

The crosslinking reactions will be described in detail below.

When the polymer having the polymerizable carbon-carbon double bond is crosslinked, a polymerizable monomer and/or oligomer and various additives may be used together depending on the purpose. As the polymerizable monomer and/or oligomer, a monomer and/or oligomer having a radically polymerizable group or a monomer and/or oligomer having an anionically polymerizable group is preferable. Examples of the radically polymerizable group include an acrylic functional group such as a (meth)acrylic group, a styrene group, an acrylonitrile group, a vinyl ester group, an N-vinylpyrrolidone group, an acrylamido group, a conjugated diene group, a vinyl ketone group, and a vinyl chloride group. In particular, those having a (meth)acrylic group that is analogous to the polymer of the present invention are preferable. Examples of the anionically polymerizable group include a (meth)acrylic group, a styrene group, an acrylonitrile group, an N-vinylpyrrolidone group, an acrylamido group, a conjugated diene group, and a vinyl ketone group. In particular, those having an acrylic functional group are preferable.

Specific examples of the monomer include (meth)acrylate monomers, cyclic acrylates, N-vinylpyrrolidone, styrene monomers, acrylonitrile, N-vinylpyrrolidone, acrylamide monomers, conjugated diene monomers, and vinyl ketone monomers. Examples of the (meth)acrylate monomer include n-butyl (meth)acrylate, 2-ethylhexyl (meth)acrylate, isooctyl (meth)acrylate, isononyl (meth)acrylate, and compounds represented by the formulae below.

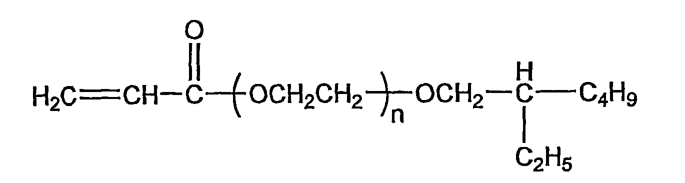

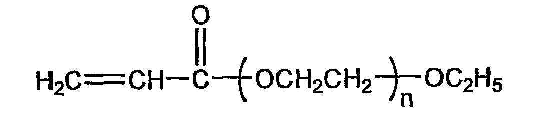

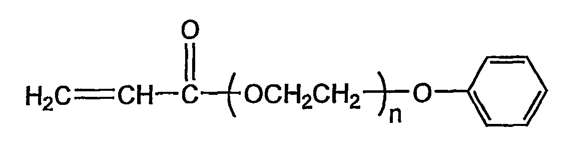

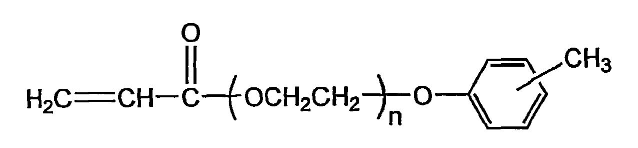

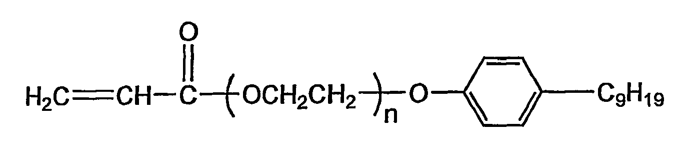

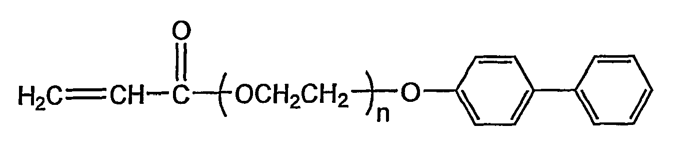

### (In the formulae, n is an integer of 1 to 1,000.)

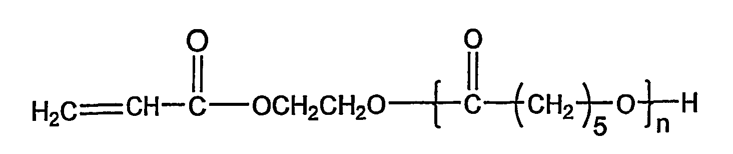

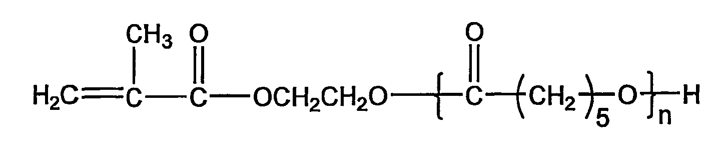

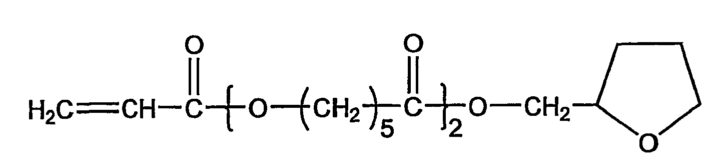

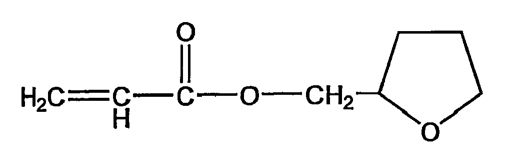

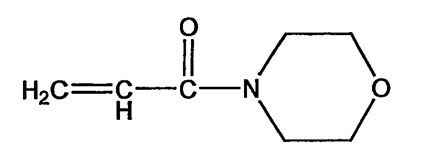

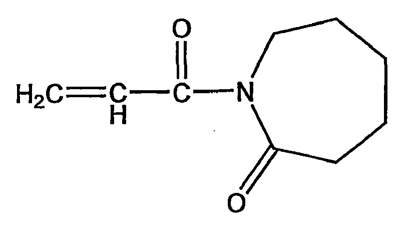

### (In the formulae, n is an integer of 1 to 1,000.)

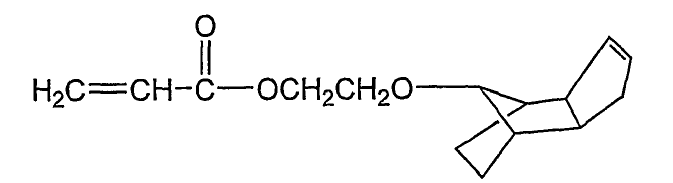

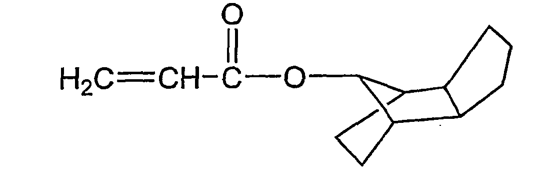

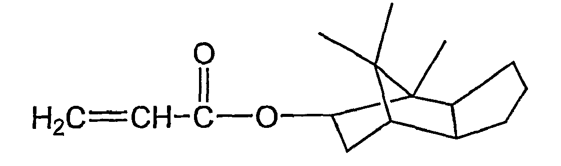

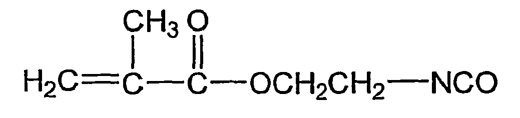

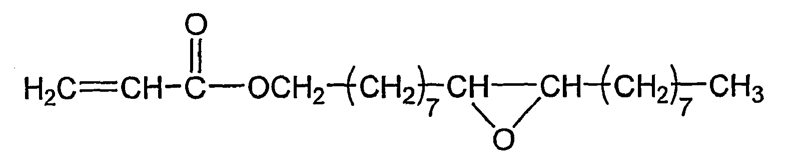

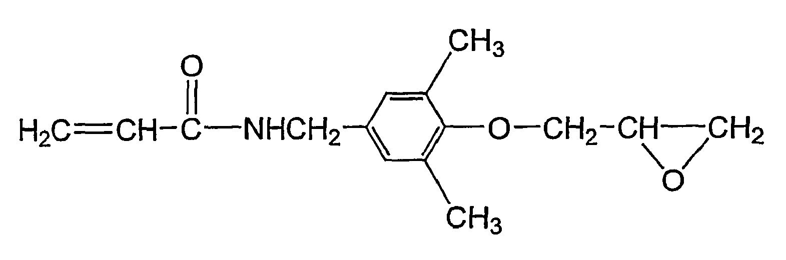

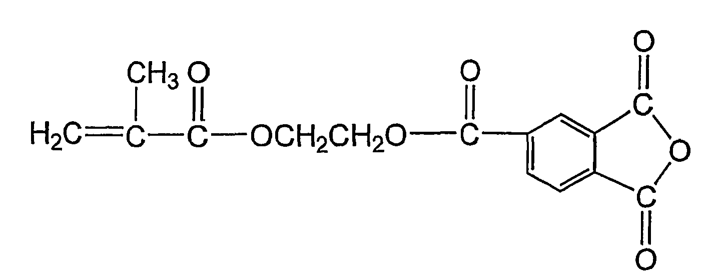

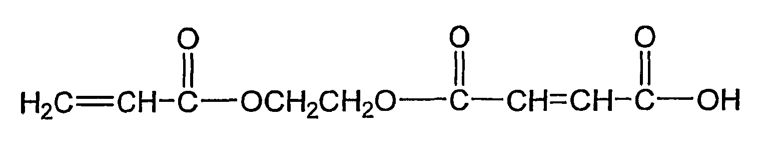

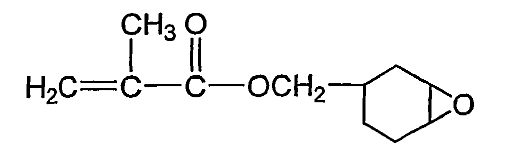

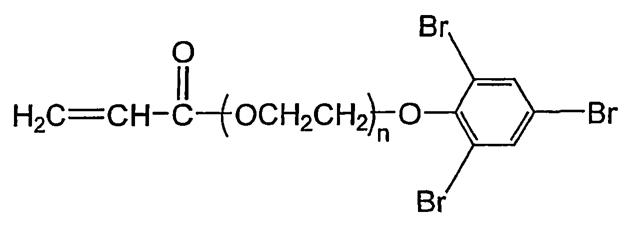

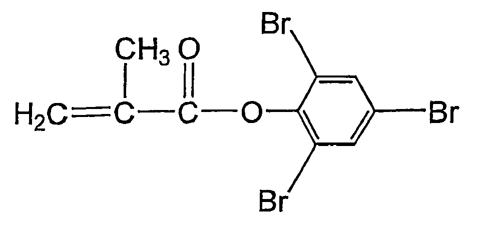

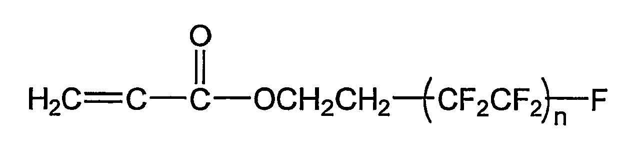

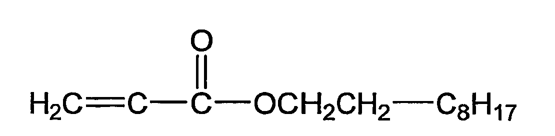

### (In the formulae, n is an integer of 1 to 1,000.)

Examples of the styrene monomer include styrene and α-methylstyrene. Examples of the acrylamide monomer include acrylamide and N,N-dimethylacrylamide. Examples of the conjugated diene monomer include butadiene and isoprene. Examples of the vinyl ketone monomer include methyl vinyl ketone.

Examples of the polyfunctional monomer include neopentyl glycol polypropoxy diacrylate, trimethylolpropanepolyethoxy triacrylate, bisphenol F polyethoxy diacrylate, bisphenol A polyethoxy diacrylate, dipentaerythritol polyhexanolide hexacrylate, tris(hydroxyethyl) isocyanurate polyhexanolide triacrylate, tricyclodecane dimethylol diacrylate 2-(2-acryloyloxy-1,1-dimethyl)-5-ethyl-5-acryloyloxymethyl-1,3-dioxane, tetrabromo bisphenol A diethoxy diacrylate, 4,4-dimercaptodiphenyl sulfide dimethacrylate, polytetraethylene glycol diacrylate, 1,9-nonanediol diacrylate, and ditrimethylolpropane tetraacrylate.

Examples of the oligomer include epoxy acrylate resins, such as bisphenol A epoxy acrylate resins, phenol novolac epoxy acrylate resins, and cresol novolac epoxy acrylate resins; COOH group-modified epoxy acrylate resins, urethane acrylate resins each produced by allowing a urethane resin obtained by reaction of a polyol (e.g., polytetramethylene glycol, polyesterdiol derived from ethylene glycol and adipic acid, ε-caprolactone-modified polyester diol, polypropylene glycol, polyethylene glycol, polycarbonate diol, hydroxyl group-terminated hydrogenated polyisoprene, hydroxyl group-terminated polybutadiene, or hydroxyl group-terminated polyisobutylene) with an organic isocyanate (e.g., tolylene diisocyanate, isophorone diisocyanate, diphenylmethane diisocyanate, hexamethylene diisocyanate, or xylylene diisocyanate) to react with a hydroxyl group-containing (meth)acrylate {e.g., hydroxyethyl (meth)acrylate, hydroxypropyl (meth)acrylate, hydroxybutyl (meth)acrylate, or pentaerythritol triacrylate}; resins derived from the above-mentioned polyol by introduction of a (meth)acrylic group via ester bonding; and polyester acrylate resins.

These monomers and oligomers are selected appropriately depending on the initiator and curing conditions employed.

Furthermore, the number-average molecular weight of the acrylic functional group containing monomer and/or oligomer is preferably 2,000 or less, and more preferably 1,000 or less, in view of good compatibility.

As the method for crosslinking the polymerizable carbon-carbon double bond-containing polymer, use of active energy rays, such as UV or electron beams is preferred.

When crosslinking is performed by means of active energy rays, a photopolymerization initiator is preferably incorporated.

The photopolymerization initiator which may be used in the present invention is not particularly limited, but is preferably a radical photopolymerization initiator or an anionic photopolymerization initiator, and particularly preferably a radical photopolymerization initiator. Examples thereof include acetophenone, propiophenone, benzophenone, xanthol, fluorene, benzaldehyde, anthraquinone, triphenylamine, carbazole, 3-methylacetophenone, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl) ketone, benzyl methoxy ketal, and 2-chlorothioxanthone. These initiators may be used alone or in combination with another compound. More specifically, examples include combinations with amines, such as diethanolmethylamine, dimethylethanolamine, and triethanolamine, optionally further combined with an iodonium salt, such as diphenyliodonium chloride, and combinations with a dye, such as methylene blue, and an amine.

Furthermore, a near-infrared-absorbing cationic dye may be used as a near-infrared photopolymerization initiator. As the near-infrared-absorbing cationic dye, preferably, a near-infrared-absorbing cationic dye-borate anion complex that is excited by light energy in the region of 650 to 1,500 nm, such as the one disclosed in Japanese Unexamined Patent Application Publication No. 3-111402 or 5-194619, is used, and more preferably, a boron-containing sensitizer is used together therewith.

The photopolymerization initiator is used such that the system is only slightly photofunctionalized, and the amount of use is not particularly limited. Preferably, the photopolymerization initiator is used in an amount of 0.001 to 10 parts by weight based on 100 parts by weight of the polymer in the composition.

The method for curing the active energy ray-curable composition of the present invention is not particularly limited. For example, curing may be performed by irradiation of light or electron beams using a high-pressure mercury lamp, low-pressure mercury lamp, electron beam irradiation device, halogen lamp, light-emitting diode, semiconductor laser, or the like depending on the properties of the photopolymerization initiator.

Furthermore, as the method for crosslinking the polymerizable carbon-carbon double bond-containing polymer, curing by heat is preferred.

When crosslinking is performed by means of active energy rays, a thermal polymerization initiator is preferably incorporated.

The thermal polymerization initiator which may be used in the present invention is not particularly limited. Examples thereof include azo initiators, peroxides, persulfate salts, and redox initiators.

Examples of suitable azo initiators include, but are not limited to, 2,2'-azobis(4-methoxy-2,4-dimethylvaleronitrile) (VAZO 33), 2,2'-azobis(2-amidinopropane) dihydrochloride (VAZO 50), 2,2'-azobis(2,4-dimethylvaleronitrile) (VAZO 52), 2,2'-azobis(isobutyronitrile) (VAZO 64), 2,2'-azobis-2-methylbutyronitrile (VAZO 67), 1,1-azobis(1-cyclohexanecarbonitrile) (VAZO 88) (all available from DuPont Chemical), 2,2'-azobis(2-cyclopropylpropionitrile), and 2,2'-azobis(methyl isobutyrate) (V-601) (available from Wako Pure Chemical Industries).

Examples of suitable peroxide initiators include, but are not limited to, benzoyl peroxide, acetyl peroxide, lauroyl peroxide, decanoyl peroxide, dicetyl peroxydicarbonate, di(4-tert-butylcyclohexyl) peroxydicarbonate (Perkadox 16S) (available from Akzo Nobel), di(2-ethylhexyl) peroxydicarbonate, tert-butyl peroxypivalate (Lupersol 11) (available from Elf Atochem), tert-butyl peroxy-2-ethylhexanoate (Trigonox 21-C50) (available from Akzo Nobel), and dicumyl peroxide.

Examples of suitable persulfate initiators include, but are not limited to, potassium persulfate, sodium persulfate, and ammonium persulfate.

Examples of suitable redox (oxidation-reduction) initiators include, but are not limited to, combinations of the above-described persulfate initiators and a reducing agent, such as sodium hydrogen metasulfite or sodium hydrogen sulfite; systems based on an organic peroxide and a tertiary amine, such as the system based on benzoyl peroxide and dimethylaniline; and systems based on an organic hydroperoxide and a transition metal, such as the system based on cumene hydroperoxide and cobalt naphthenate

Examples of the other initiators include, but are not limited to, pinacols, such as tetraphenyl-1,1,2,2-ethanediol.

Preferably, the thermal radical polymerization initiator is selected from the group consisting of azo initiators and peroxide initiators. More preferred are 2,2'-azobis(methyl isobutyrate), tert-butyl peroxypivalate, and di(4-tert-butylcyclohexyl) peroxydicarbonate, and mixtures of these.

The thermal polymerization initiator which is used in the present invention is present in a catalytically effective amount, and such an amount is not limited. Typically, the thermal polymerization initiator is used in an amount of about 0.01 to 5 parts by weight, and preferably about 0.025 to 2 parts by weight, based on 100 parts by weight of the total of the polymer having at least one terminal acrylic functional group and the additional monomer and oligomer mixture. When a mixture of initiators is used, the total amount of the mixture of initiators is selected as if only one initiator were used.

The method for curing the thermosetting composition of the present invention is not particularly limited. The curing temperature depends on the thermal polymerization initiator used, and types of the polymer (I), the compound added, etc. The curing temperature is preferably in a range of 50°C to 250°C and more preferably 70°C to 200°C. The curing time depends on the polymerization initiator, monomer, solvent, and reaction temperature employed, but is usually in a range of one minute to 10 hours.

### <Adhesion-imparting agent>

In the composition of the present invention, a silane coupling agent or an adhesion-imparting agent other than the silane coupling agent may be incorporated. By the incorporation of the adhesion-imparting agent, it is possible to reduce the risk that the sealant is detached from an adherend, such as a siding board, due to a change in joint width or the like by external force. Furthermore, depending on the case, use of a primer for improving adhesion becomes unnecessary, thus simplifying the operation. As the silane coupling agent, silane coupling agents each containing a functional group, such as an amino group, a mercapto group, an epoxy group, a carboxyl group, a vinyl group, an isocyanato group, an isocyanurate group, or a halogen, can be exemplified. Specific examples thereof include isocyanato group-containing silanes, such as γ-isocyanatopropyltrimethoxysilane, γ-isocyanatopropyltriethoxysilane, γ-isocyanatopropylmethyldiethoxysilane, and γ-isocyanatopropylmethyldimethoxysilane; amino group-containing silanes, such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane; mercapto group-containing silanes, such as γ-mercaptopropyltrimethoxysilane, γ-mercaptopropyltriethoxysilane, γ-mercaptopropylmethyldimethoxysilane, and γ-mercaptopropylmethyldiethoxysilane; epoxy group-containing silanes, such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; carboxysilanes such as β-carboxyethyltriethoxysilane, β-carboxyethylphenylbis(2-methoxyethoxy)silane, and N-β-(carboxymethyl)aminoethyl-γ-aminopropyltrimethoxysilane; vinyl unsaturated group-containing silanes, such as vinyltrimethoxysilane, vinyltriethoxysilane, γ-methacryloyloxypropylmethyldimethoxysilane, and γ-acryloyloxypropylmethyltriethoxysilane; halogen-containing silanes, such as γ-chloropropyltrimethoxysilane; and isocyanurate silanes, such as tris(trimethoxysilyl) isocyanurate. Also usable as the silane coupling agent are modified derivatives of these, for example, amino-modified silyl polymers, silylated amino polymers, unsaturated amino silane complexes, phenylamino long-chain alkylsilanes, aminosilylated silicones, block isocyanatosilane, and silylated polyesters.

In the present invention, the silane coupling agent is used usually in an amount of 0.1 to 20 parts, and particularly preferably 0.5 to 10 parts, based on 100 parts of the crosslinkable silyl group-containing vinyl polymer. With respect to the effect of the silane coupling agent incorporated into the curable composition of the present invention, remarkable adhesion-improving effects are shown under non-primer or primer-treatment conditions when the composition is applied to various adherends, for example, inorganic bases, such as glass, aluminum, stainless steel, zinc, copper, and mortar, and organic bases, such as polyvinyl chloride, acrylics, polyesters, polyethylenes, polypropylenes, and polycarbonates. When the composition is used under non-primer conditions, the effects of improving adhesion to various adherends are particularly remarkable.

Specific examples of the adhesion-imparting agent other than the silane coupling agent include, but are not limited to, epoxy resins, phenolic resins, sulfur, alkyl titanates, and aromatic polyisocyanates.

The adhesion-imparting agents described above may be used alone or in combination of two or more. By adding any of these adhesion-imparting agents to the composition, it is possible to improve adhesion to adherends. Although not particularly limited, in order to improve adhesion, in particular adhesion to a surface of a metal adherend, such as an oil pan, among the adhesion-imparting agents described above, the silane coupling agent is preferably combined in an amount of 0.1 to 20 parts by weight.

The type and amount of use of the adhesion-imparting agent can be selected depending on the type of Y and the number **a** of the vinyl polymer represented by general formula (1) or (6) in the present invention, and the curability and mechanical and physical properties in the present invention can be controlled depending on purposes and applications. Since the adhesion-imparting agent particularly affects curability and elongation, the selection thereof must be carried out carefully.

### <Plasticizer>

The curable composition of the present invention may be incorporated with any of various types of plasticizers as required. If the plasticizer is used together with a filler, which will be described below, the elongation of the resulting cured object can be increased, and a large amount of filler can be mixed, thus being more advantageous. However, the plasticizer is not always required to be added. The plasticizer which can be used is not particularly limited, and for example, may be selected from the following plasticizers depending on the purposes, such as adjustment of physical properties and adjustment of properties: phthalic acid esters, such as dibutyl phthalate, diheptyl phthalate, di(2-ethylhexyl) phthalate, and butyl benzyl phthalate; nonaromatic dibasic acid esters, such as dioctyl adipate, dioctyl sebacate, dibutyl sebacate, and isodecyl succinate; aliphatic esters, such as butyl oleate and methyl acetyl ricinoleate; polyalkylene glycol esters, such as diethylene glycol dibenzoate, triethylene glycol dibenzoate, and pentaerythritol esters; phosphates, such as tricresyl phosphate and tributyl phosphate; trimellitates; polystyrenes, such as polystyrene and poly-α-methylstyrene; polybutadiene, polybutene, polyisobutylene, butadiene-acrylonitrile, and polychloroprene; chlorinated paraffins; hydrocarbon oils, such as alkyldiphenyl and partially hydrogenated terphenyl; process oils; polyethers, such as polyether polyols, e.g., polyethylene glycol, polypropylene glycol, and polytetramethylene glycol, and derivatives of these polyether polyols resulting from conversion of hydroxyl groups thereof to ester groups, ether groups, or the like; epoxy group-containing plasticizers, such as epoxidized soybean oil and benzyl epoxystearate; polyester plasticizers obtained from a dibasic acid, such as sebacic acid, adipic acid, azelaic acid, or phthalic acid, and a dihydric alcohol, such as ethylene glycol, diethylene glycol, triethylene glycol, propylene glycol, or dipropylene glycol; and vinyl polymers obtained by polymerizing vinyl monomers by various methods, typically acrylic plasticizers.

Above all, by using a polymer plasticizer having a number-average molecular weight of 500 to 15,000, it is possible to adjust the viscosity and slump properties of the curable composition and the mechanical characteristics, such as tensile strength and elongation, of the cured object obtained by curing the composition. It is also possible to maintain the original physical properties for a longer period of time, compared with a low-molecular plasticizer which does not contain polymer components in the molecule, and it is possible to improve drying characteristics (also referred to as "paintability") when the cured object is coated with alkyd paint. Additionally, although nonlimiting, the polymer plasticizer may or may not contain a functional group.

Although the polymer plasticizer with a number-average molecular weight of 500 to 15,000 has been described above, the number-average molecular weight is preferably 800 to 10,000, and more preferably 1,000 to 8,000. If the molecular weight is too low, the plasticizer flows out with time due to heat or rainfall, and thus it is not possible to maintain the original physical properties for a long period of time. In some cases, paintability of alkyd paint cannot be improved. If the molecular weight is too high, viscosity increases, resulting in degradation in workability.

Among these polymer plasticizers, those which are compatible with the vinyl polymer are preferable. In particular, in view of compatibility, weatherability, and heat resistance, vinyl polymers are preferable. Among the vinyl polymers, (meth)acrylic polymers are preferable, and acrylic polymers are more preferable. Examples of the synthesis method for such acrylic polymers include conventional solution polymerization and a method for synthesizing an acrylic polymer in the absence of a solvent. The acrylic plasticizer synthesized by the latter method is more preferable for the purpose of the present invention because the plasticizer is produced in the absence of a solvent or a chain transfer agent by high-temperature continuous polymerization (refer to USP 4,414,370, Japanese Unexamined Patent Application Publication No. 59-6207, Japanese Examined Patent application Publication No. 5-58005, Japanese Unexamined Patent Application Publication No. 1-313522, and USP 5,010,166). Examples thereof include, but are not limited to, Toagosei UP series (refer to Kogyo Zairyo (Engineering Materials), October, 1999). Of course, as another synthesis method, living radical polymerization may be used. According to this method, a polymer having a narrow molecular-weight distribution and a low viscosity can be produced, thus being preferable. Furthermore, atom transfer radical polymerization is more preferable, although not limited thereto.

The molecular-weight distribution of the polymer plasticizer is not particularly limited, but a narrow molecular-weight distribution is preferable. The molecular-weight distribution is preferably less than 1.8, more preferably 1.7 or less, still more preferably 1.6 or less, even more preferably 1.5 or less, particularly preferably 1.4 or less, and most preferably 1.3 or less.

The plasticizers including the polymer plasticizers may be used alone or in combination of two or more, but are not always required. Furthermore, according to need, a polymer plasticizer is used, and within a range that does not adversely affect the physical properties, a low-molecular plasticizer may be used together.

Additionally, these plasticizers may be added during the production of the polymer.

The amount of the plasticizer used is not limited, but is 5 to 150 parts by weight, preferably 10 to 120 parts by weight, and more preferably 20 to 100 parts by weight, based on 100 parts by weight of the vinyl polymer. If the amount is less than 5 parts by weight, the effect of the plasticizer is not exhibited, and if the amount exceeds 150 parts by weight, the mechanical strength of the resulting cured object becomes insufficient.

### <Filler>

The curable composition of the present invention may be incorporated with various types of fillers as required. Examples of the filler include, but are not limited to, reinforcing fillers, such as wood flour, pulp, cotton chip, asbestos, glass fibers, carbon fibers, mica, walnut shell powder, chaff powder, graphite, diatomaceous earth, china clay, silica (e.g., fumed silica, precipitated silica, crystalline silica, fused silica, dolomite, silicic acid anhydride, and silicic acid hydrate), and carbon black; fillers, such as ground calcium carbonate, precipitated calcium carbonate, magnesium carbonate, diatomaceous earth, calcined clay, clay, talc, titanium oxide, bentonite, organic bentonite, ferric oxide, fine aluminum powder, flint powder, zinc oxide, active zinc white, zinc powder, zinc carbonate, and Shirasu balloons; and fibrous fillers, such as asbestos, glass fibers and glass filaments, carbon fibers, Kevlar fibers, and polyethylene fibers.

Among these fillers, preferred are precipitated silica, fumed silica, crystalline silica, fused silica, dolomite, carbon black, calcium carbonate, titanium oxide, talc, and the like.

In particular, in order to produce cured objects having high strength, a filler selected from the group consisting of fumed silica, precipitated silica, silicic acid anhydride, silicic acid hydrate, carbon black, surface-treated fine calcium carbonate, crystalline silica, fused silica, calcined clay, clay, active zinc white, etc., can be mainly used. Above all, ultrafine silica powder having a specific surface area (according to BET adsorption method) of 50 m²/g or more, usually 50 to 400 m²/g, and preferably about 100 to 300 m²/g is preferable. Silica whose surface is preliminarily subjected to hydrophobic treatment with an organosilicon compound, such as organosilane, organosilazane, or diorganopolysiloxane, is more preferable.

More specific examples of the highly reinforcing silica filler include, but are not limited to, Aerosil, which is a fumed silica, of Japan Aerosil Co., Ltd., and Nipsil, which is a precipitated silica, of Nippon Silica Industrial Co., Ltd.

Furthermore, in order to produce cured objects having low strength and high elongation, a filler mainly selected from the group consisting of titanium oxide, calcium carbonate, talc, ferric oxide, zinc oxide, Shirasu balloons, etc., can be used. In general, with respect to calcium carbonate, if the specific surface area is small, the effects of improving strength at break, elongation at break, adhesiveness, and weather-resistant adhesiveness of the resulting cured objects may often be insufficient. With an increase in specific surface area, the effects of improving strength at break, elongation at break, adhesiveness, and weather-resistant adhesiveness of the resulting cured objects become more significant.

Furthermore, surface-treated calcium carbonate treated with a surface treatment agent is more preferable. When surface-treated calcium carbonate is used, it is believed that the workability of the composition of the present invention is improved and the effects of improving adhesiveness and weather-resistant adhesiveness of the curable composition are more enhanced, compared with the use of calcium carbonate that is not surface-treated. Examples of the surface treatment agent include organic substances, such as fatty acids, fatty acid soaps, and fatty acid esters, various surfactants, and various coupling agents, such as silane coupling agents and titanate coupling agents. Specific examples thereof include, but are not limited to, fatty acids, such as caproic acid, caprylic acid, pelargonic acid, capric acid, undecanoic acid, lauric acid, myristic acid, palmitic acid, stearic acid, behenic acid, and oleic acid; sodium, potassium and other salts of such fatty acids; and alkyl esters of such fatty acids. Specific examples of the surfactants include sulfate-type anionic surfactants, such as polyoxyethylene alkyl ether sulfates and long-chain alcohol sulfates, and sodium, potassium and other salts thereof; and sulfonic acid-type anionic surfactants, such as alkylbenzenesulfonic acids, alkylnaphthalenesulfonic acids, paraffinsulfonic acids, α-olefinsulfonic acids, alkylsulfosuccinic acids, and the like, and sodium, potassium and other salts thereof. The surface treatment agent is used for the treatment preferably in an amount of 0.1% to 20% by weight, and more preferably in an amount of 1% to 5% by weight, relative to calcium carbonate. If the amount for the treatment is less than 0.1% by weight, the effects of improving workability, adhesiveness, and weather-resistant adhesiveness may be insufficient, and if the amount exceeds 20% by weight, the storage stability of the curable composition may be degraded.

Although not particularly limited, when calcium carbonate is used and when thixotropy of the compound and the effects of improving strength at break, elongation at break, adhesiveness, weather-resistant adhesiveness, and the like of the resulting cured objects are particularly desired, preferably precipitated calcium carbonate is used.

On the other hand, ground calcium carbonate may be added to decrease the viscosity of the compound, increase the volume, and reduce the cost. As the ground calcium carbonate, followings may be used as required.

Ground calcium carbonate is produced by mechanically grinding and processing naturally occurring chalk (whiting), marble, limestone, or the like. While grinding is performed by a dry process or a wet process, products obtained by wet grinding often degrade the storage stability of the curable composition of the present invention, thus being not often preferred. Ground calcium carbonate products with various average particle sizes are obtained by classification. Although not particularly limited, when the effects of improving the strength at break, elongation at break, adhesiveness, and weather-resistant adhesiveness of the resulting cured objects are desired, the specific surface area is preferably 1.5 m²/g to 50 m²/g, more preferably 2 m²/g to 50 m²/g, further more preferably 2.4 m²/g to 50 m²/g, and particularly preferably 3 m²/g to 50 m²/g. If the specific surface area is less than 1.5 m²/g, the improving effects may not be sufficient. Of course, when ground calcium carbonate is used simply to decrease the viscosity or increase the volume, the ranges of the specific surface area are not limited to those described above.

The specific surface area is defined as a value measured by the air permeation method according to JIS K 5101 (method in which the specific surface area is calculated based on the air permeability of a powder-packed layer). As the measurement apparatus, a specific surface area measurement apparatus model SS-100 manufactured by Shimadzu Corporation is preferably used.

These fillers may be used alone or in combination of two or more depending on the purpose or need. Although not particularly limited, for example, if ground calcium carbonate and precipitated calcium carbonate with a specific surface area of 1.5 m²/g or more are combined as required, an increase in the viscosity of the compound can be moderately reduced, and the effects of improving strength at break, elongation at break, adhesiveness, and weather-resistant adhesiveness of the resulting cured objects can be greatly expected.

The amount of the filler added is preferably 5 to 1,000 parts by weight, more preferably 20 to 500 parts by weight, and particularly preferably 40 to 300 parts by weight, based on 100 parts by weight of the vinyl polymer. If the amount of the filler added is less than 5 parts by weight, the effects of improving strength at break, elongation at break, adhesiveness, and weather-resistant adhesiveness of the resulting cured objects may often be insufficient. If the amount exceeds 1,000 parts by weight, the workability of the curable composition may often be degraded. The fillers may be used alone or in combination of two or more.

### <Fine hollow particles>

Furthermore, for the purpose of weight saving and cost reduction without substantially degrading the physical properties, fine hollow particles may be used together with the reinforcing filler described above.

Such fine hollow particles (hereinafter referred to as "balloons") are not particularly limited. Examples thereof include inorganic or organic hollow particles with a diameter of 1 mm or less, preferably 500 µm or less, more preferably 200 µm or less, as described in "Kinosei filler no saishin gijutsu (Latest functional filler technology)" (CMC). In particular, fine hollow particles with a true specific gravity of 1.0 g/cm³ or less are preferably used, and more preferably, 0.5 g/cm³ or less.

Examples of the inorganic balloons include silicic acid-based balloons and non-silicic acid-based balloons. Examples of the silicic acid-based balloons include Shirasu balloons, perlite, glass balloons, silica balloons, and fly ash balloons, and examples of the non-silicic acid-based balloons include alumina balloons, zirconia balloons, and carbon balloons. Specific examples of the inorganic balloons, which are commercially available, include Shirasu balloons, such as Winlite manufactured by Ijichi Chemical and Sankilite manufactured by Sanki Kogyo; glass balloons, such as Caloon manufactured by Nippon Sheet Glass, Celstar Z-28 manufactured by Sumitomo 3M, MICRO BALLOON manufactured by EMERSON & CUMING, CELAMIC GLASSMODULES manufactured by PITTSBURGE CORNING, and GLASS BUBBLES manufactured by 3M; silica balloons, such as Q-CEL manufactured by Asahi Glass and E-SPHERES manufactured by Taiheiyo Cement; fly ash balloons, such as CEROSPHERES manufactured by PFAMARKETING and FILLITE manufactured by FILLITE U.S.A; alumina balloons, such as BW manufactured by Showa Denko; zirconia balloons, such as HOLLOW ZIRCONIUM SPHEES manufactured by ZIRCOA; and carbon balloons, such as Kureka Sphere manufactured by Kureha Chemical and Carbosphere manufactured by GENERAL TECHNOLOGIES.

Examples of the organic balloons include thermosetting resin balloons and thermoplastic resin balloons. Examples of thermosetting balloons include phenolic balloons, epoxy balloons, and urea balloons, and examples of thermoplastic balloons include saran balloons, polystyrene balloons, polymethacrylate balloons, poly(vinyl alcohol) balloons, and styrene-acrylic balloons. Balloons composed of crosslinked thermoplastic resins can also be used. Herein, the balloons may be expanded balloons, or mixtures containing foaming agents may be expanded to form balloons after compounding.

Specific examples of organic balloons, which are commercially available, include phenolic balloons, such as UCAR and PHENOLIC MICROBALLOONS manufactured by Union Carbide; epoxy balloons, such as ECCOSPHERES manufactured by EMERSON & CUMING; urea balloons, such as ECCOSPHERES VF-O manufactured by EMERSON & CUMING; saran balloons, such as SARAN MICROSPHERES manufactured by DOW CHEMICAL, Expancel manufactured by Nippon Filament, and Matsumoto Microsphere manufactured by Matsumoto Yushi-Seiyaku; polystyrene balloons, such as DYLITE EXPANDABLE POLYSTYRENE manufactured by ARCO POLYMERS and EXPANDABLE POLYSTYRENE BEADS manufactured by BASF WYANDOTE; and crosslinkable styrene-acrylic acid balloons, such as SX863(P) manufactured by Japan synthetic Rubber.

These balloons may be used alone, or two or more of these may be mixed for use. Further usable are the balloons whose surfaces are treated with a fatty acid, a fatty acid ester, rosin, rosin acid lignin, a silane coupling agent, a titanium coupling agent, an aluminum coupling agent, polypropylene glycol, or the like in order to improve dispersibility and the workability of the compound. These balloons are used for the purposes of saving weight and reducing cost without degrading flexibility and elongation/strength among the physical properties when the compound is cured.

Although not particularly limited, the balloon content is preferably 0.1 to 50 parts, and more preferably 0.1 to 30 parts, based on 100 parts by weight of the vinyl polymer. If the content is less than 0.1 parts, the effect of saving weight may be small, while if the content is more than 50 parts, tensile strength, among mechanical characteristics, of the resulting cured object may often be decreased. When the specific gravity of the balloon is 0.1 or more, the balloon content is preferably 3 to 50 parts, and more preferably 5 to 30 parts.

### <Physical property-adjusting agent>

A physical property-adjusting agent for adjusting the tensile properties of the resulting cured object may be added to the curable composition of the present invention as required.

Examples of the physical property-adjusting agent include, but are not limited to, alkylalkoxysilanes, such as methyltrimethoxysilane, dimethyldimethoxysilane, trimethylmethoxysilane, and n-propyltrimethoxysilane; functional group-containing alkoxysilanes, such as alkylisopropenoxysilanes, e.g., dimethyldiisopropenoxysilane, methyltriisopropenoxysilane, and γ-glycidoxypropylmethyldiisopropenoxysilane, γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, and γ-mercaptopropylmethyldimethoxysilane; silicone varnishes; and polysiloxanes. By using the physical property-adjusting agent, when the composition of the present invention is cured, hardness can be increased or decreased and elongation at break can be increased. The above-described physical property-adjusting agents may be used alone or in combination of two or more.

### <Silanol-containing compound>

In the composition of the present invention, according to need, a silanol-containing compound may be incorporated in order to change physical properties of the resulting cured object or the like. The silanol-containing compound refers to a compound having one silanol group per molecule and/or a compound capable of forming a compound having one silanol group per molecule by reaction with moisture. Either one of the compounds may be used or both compounds may be used simultaneously.

Examples of the compound having one silanol group per molecule, which is one of the silanol-containing compounds, include, but are not limited to, compounds represented by the formula (R")₃SiOH (wherein R"s may be the same or different and each represent a substituted or unsubstituted alkyl group or aryl group), such as (CH₃)₃SiOH, (CH₃CH₂)₃SiOH, (CH₃CH₂CH₂)₃SiOH, (n-Bu)₃SiOH, (sec-Bu)₃SiOH, (tert-Bu)₃SiOH, (tert-Bu) Si(CH₃)₂OH, (C₅H₁₁)₃SiOH, (C₆H₁₃)₃SiOH, (C₆H₅)₃SiOH, (C₆H₅)₂Si(CH₃)OH, (C₆H₅)Si(CH₃)₂OH, (C₆H₅)₂Si(C₂H₅)OH, C₆H₅Si(C₂H₅)₂OH, C₆H₅CH₂Si(C₂H₅)₂OH, and C₁₀H₇Si(CH₃)₂OH (wherein C₆H₅ represents a phenyl group, and C₁₀H₇ represents a naphthyl group);
silanol group-containing cyclic polysiloxane compounds, such as the followings: 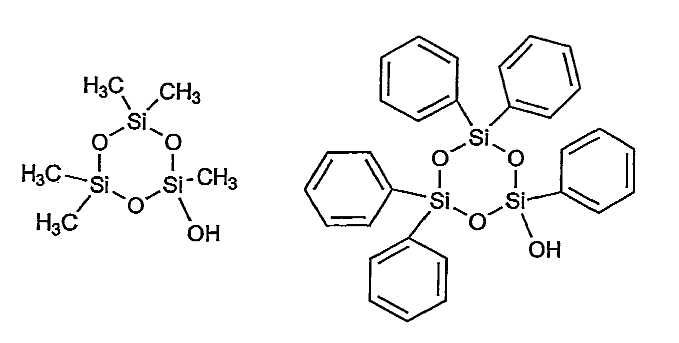 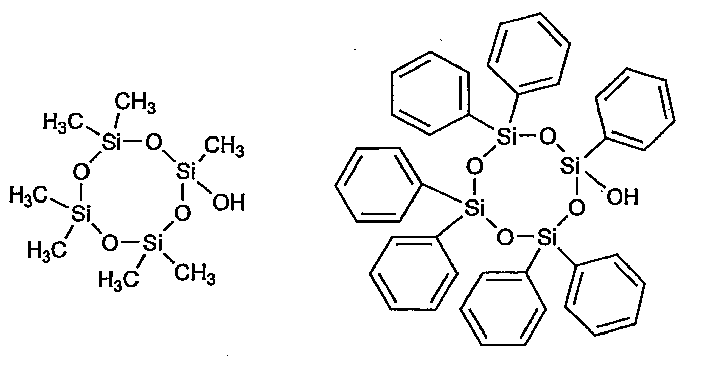 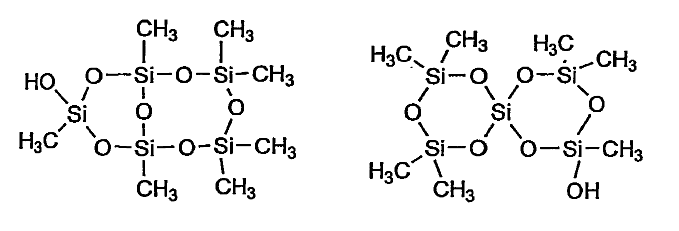 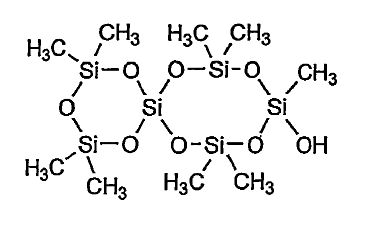
silanol group-containing linear polysiloxane compounds, such as the followings: 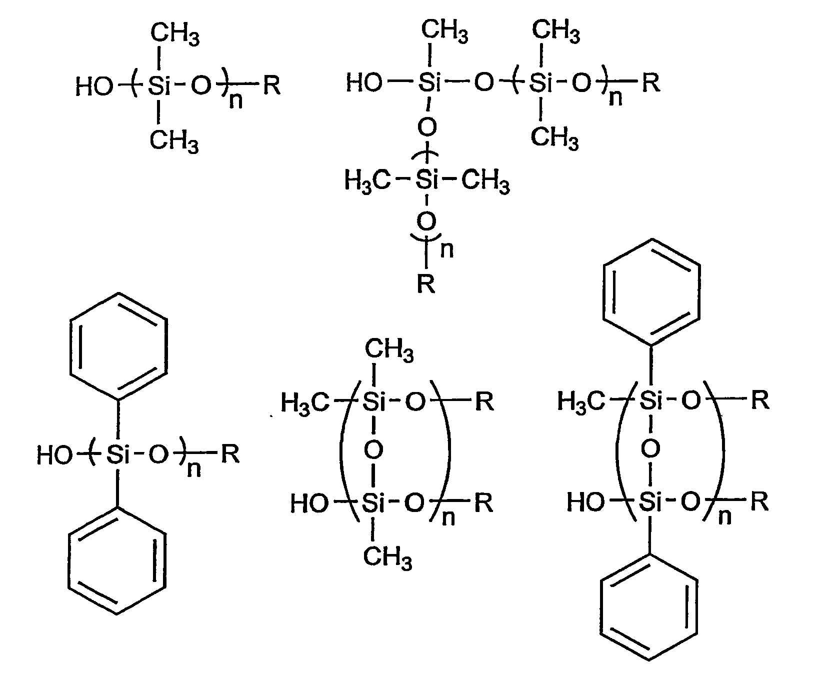
(wherein n is an integer of 1 to 1,000);
compounds each having a silanol group bonded to an end of a polymer main chain composed of silicon and carbon, such as the followings: 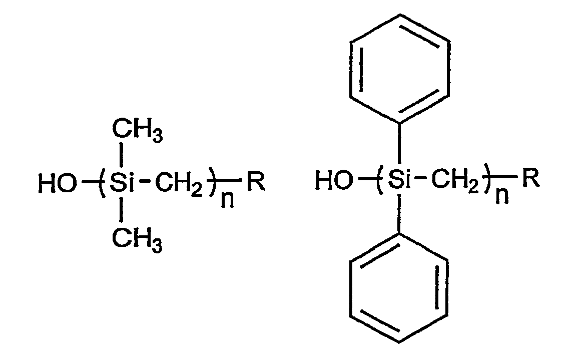 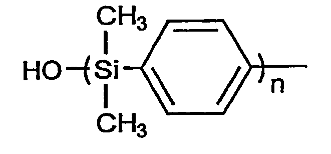 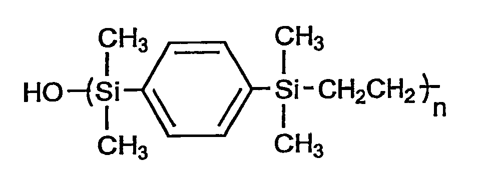
(wherein n is an integer of 1 to 1,000);
compounds each having a silanol group bonded to an end of a main chain of a polysilane, such as the followings: 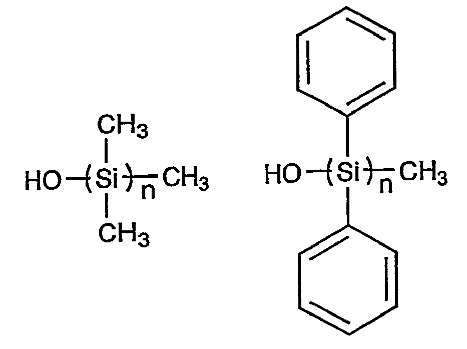
(wherein n is an integer of 1 to 1,000); and
compounds each having a silanol group bonded to an end of a polymer main chain composed of silicon, carbon, and oxygen, such as the followings: 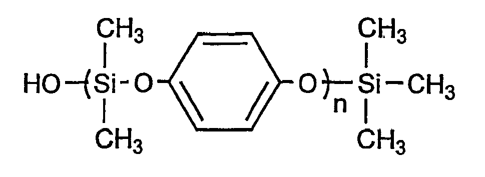 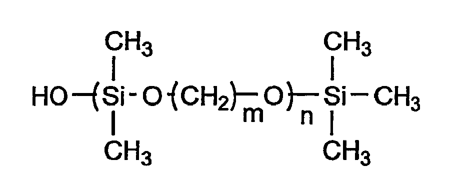
(wherein m is an integer of 1 to 1,000, and n is an integer of 1 to 1,000). Among these, preferred are compounds represented by general formula (45):

(R⁵⁸)₃SiOH (45)

wherein R⁵⁸ represents a monovalent hydrocarbon group having 1 to 20 carbon atoms, and R⁵⁸s may be the same or different).

R²⁷ is preferably a methyl group, an ethyl group, a vinyl group, a tert-butyl group, or a phenyl group, and more preferably a methyl group.

Above all, small-molecular-weight (CH₃)₃SiOH or the like is preferable from the standpoints of ease of availability and the effect.

The compound having one silanol group per molecule is believed to decrease the number of crosslinking points by reaction with the crosslinkable silyl group of the vinyl polymer or a siloxane bond generated by crosslinking, thus imparting flexibility to the cured object.

Furthermore, the compound capable of forming a compound having one silanol group per molecule by reaction with moisture, which is one of the components in the present invention, is not particularly limited. Preferably, the compound (hydrolysis product) having one silanol group per molecule generated by reaction with moisture is a compound represented by general formula (45) described above.
Besides compounds represented by general formula (46), which will be described below, preferred examples thereof include the following compounds:

N,O-bis(trimethylsilyl)acetamide, N-(trimethylsilyl)acetamide, bis(trimethylsilyl)trifluoroacetamide, N-methyl-N-trimethylsilyltrifluoroacetamide, bistrimethylsilyl urea, N-(tert-butyldimethylsilyl)-N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyl trifluoromethanesulfonate, trimethylsilyl phenoxide, trimethylsilylated n-octanol, trimethylsilylated 2-ethylhexanol, tris-trimethylsilylated glycerol, tris-trimethylsilylated trimethylolpropane, tris-trimethylsilylated pentaerythritol, tetra-trimethylsilylated pentaerythritol, (CH₃)₃SiNHSi(CH₃)₃, (CH₃)₃SiNSi(CH₃)₂, 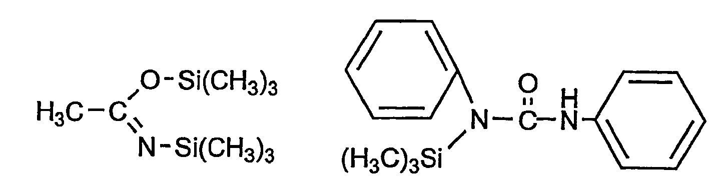 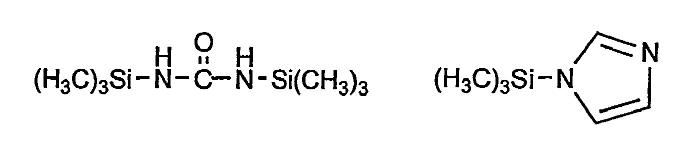 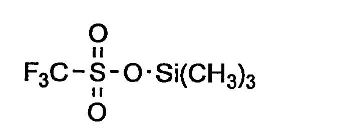
In view of the amount of the silanol group contained in the hydrolysis product, (CH₃)₃SiNHSi(CH₃)₃ is particularly preferable.

Furthermore, the compound capable of forming a compound having one silanol group per molecule by reaction with moisture, which is one of the components in the present invention, is not particularly limited. Besides the compounds described above, preferred are compounds represented general formula (46):

((R⁵⁸)₃SiO)ₙR⁵⁹ (46)

(wherein R⁵⁸ is the same as that described above; n is a positive number; and R⁵⁹ represents a group obtained by eliminating active hydrogen partially or entirely from an active hydrogen-containing compound).

R⁵⁸ is preferably a methyl group, an ethyl group, a vinyl group, a tert-butyl group, or a phenyl group, and more preferably a methyl group.

The (R⁵⁸)₃Si group is particularly preferably a trimethylsilyl group in which all of the three R⁵⁸s are methyl groups. Furthermore, n is preferably 1 to 5.

Examples of the active hydrogen-containing compound from which R⁵⁹ is derived include, but are not limited to, alcohols, such as methanol, ethanol, n-butanol, i-butanol, tert-butanol, n-octanol, 2-ethylhexanol, benzyl alcohol, ethylene glycol, diethylene glycol, polyethylene glycol, propylene glycol, dipropylene glycol, polypropylene glycol, propanediol, tetramethylene glycol, polytetramethylene glycol, glycerol, trimethylolpropane, and pentaerythritol; phenols, such as phenol, cresol, bisphenol A, and hydroquinone; carboxylic acids, such as formic acid, acetic acid, propionic acid, lauric acid, palmitic acid, stearic acid, behenic acid, acrylic acid, methacrylic acid, oleic acid, linoleic acid, linolenic acid, sorbic acid, oxalic acid, malonic acid, succinic acid, adipic acid, maleic acid, benzoic acid, phthalic acid, terephthalic acid, and trimellitic acid; ammonia; amines, such as methylamine, dimethylamine, ethylamine, diethylamine, n-butylamine, and imidazole; acid amides, such as acetamide and benzamide; ureas, such as urea and N,N'-diphenylurea; and ketones, such as acetone, acetylacetone, and 2,4-heptadione.

The compound capable of forming a compound having one silanol group per molecule by reaction with moisture represented by general formula (46) described above can be obtained, for example, by allowing the active hydrogen-containing compound or the like to react with a compound having a group reactive with an active hydrogen, such as a halogen group, together with a (R⁵⁸)₃Si group (wherein R⁵⁸ is the same as that described above), which is also referred to as a silylation agent, such as trimethylsilyl chloride or dimethyl(tert-butyl) chloride, although not limited thereto.

Specific examples of the compound represented by general formula (46) include, but are not limited to, allyloxytrimethylsilane, N,O-bis(trimethylsilyl)acetamide, N-(trimethylsilyl)acetamide, bis(trimethylsilyl)trifluoroacetamide, N-methyl-N-trimethylsilyltrifluoroacetamide, bistrimethylsilyl urea, N-(tert-butyldimethylsilyl)-N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyltrifluoromethanesulfonate, trimethylsilyl phenoxide, trimethylsilylated n-octanol, trimethylsilylated 2-ethylhexanol, tris-trimethylsilylated glycerol, tris-trimethylsilylated trimethylolpropane, tris-trimethylsilylated pentaerythritol, and tetra-trimethylsilylated pentaerythritol. These may be used alone or in combination of two or more.

Other preferred examples include compounds represented by general formula (((R⁶⁰)₃SiO) (R⁶¹O)ₛ)ₜZ (wherein R⁶⁰s may be the same or different and each represent a substituted or unsubstituted monovalent hydrocarbon group or a hydrogen atom; R⁶¹ represents a divalent hydrocarbon group having 1 to 8 carbon atoms; s and t each are a positive integer, s being 1 to 6, and s x t being equal to or greater than 5; and Z represents a monovalent to hexavalent organic group), such as CH₃O(CH₂CH(CH₃)O)₅Si(CH₃)₃, CH₂=CHCH₂(CH₂CH(CH₃)O)₅Si(CH₃)₃, (CH₃)₃SiO(CH₂CH(CH₃)O)₅Si(CH₃)₃, and (CH₃)₃SiO(CH₂CH(CH₃)O)₇Si(CH₃)₃. These may be used alone or in combination of two or more.

With respect to the compound capable of forming a compound having one silanol group per molecule by reaction with moisture, from the standpoint that storage stability, weatherability, etc. are not adversely affected, the active hydrogen-containing compound generated after hydrolysis is preferably a phenol, an acid amide, or an alcohol, and more preferably, a phenol or an alcohol in which the active hydrogen-containing compound is a hydroxyl group.

Among the compounds described above, preferred are N,O-bis(trimethylsilyl)acetamide, N-(trimethylsilyl)acetamide, trimethylsilyl phenoxide, trimethylsilylated n-octanol, trimethylsilylated 2-ethylhexanol, tris-trimethylsilylated glycerol, tris-trimethylsilylated trimethylolpropane, tris-trimethylsilylated pentaerythritol, and tetra-trimethylsilylated pentaerythritol.

The compound capable of forming a compound having one silanol group per molecule by reaction with moisture forms a compound having one silanol group per molecule by reaction with moisture during storage, during curing, or after curing. As described above, the resulting compound having one silanol group per molecule is believed to decrease the number of crosslinking points by reaction with the crosslinkable silyl group of the vinyl polymer or a siloxane bond generated by crosslinking, thus imparting flexibility to the cured object.

The amount of the silanol-containing compound used can be adjusted appropriately depending on desired physical properties of the cured object. The silanol-containing compound can be used in an amount of 0.1 to 50 parts by weight, preferably 0.3 to 20 parts by weight, and more preferably 0.5 to 10 parts by weight, based on 100 parts by weight of the vinyl polymer. If the amount is less than 0.1 parts by weight, the effect of addition is not shown. If the amount exceeds 50 parts by weight, crosslinking becomes insufficient, and the strength of the cured object and the gel fraction decrease excessively.

The timing of addition of the silanol-containing compound to the vinyl polymer is not particularly limited. The silanol-containing compound may be added during the production of the vinyl polymer or during the preparation of the curable composition.

### <Thixotropy-imparting agent (anti-sagging agent)>

In the curable composition of the present invention, a thixotropy-imparting agent (anti-sagging agent) may be incorporated as required in order to prevent sagging and to improve workability.

Furthermore, the anti-sagging agent is not particularly limited. Examples thereof include polyamide waxes; hydrogenated castor oil derivatives; and metal soaps, such as calcium stearate, aluminum stearate, and barium stearate. These thixotropy-imparting agents (anti-sagging agents) may be used alone or in combination of two or more.

### <Photo-curable material>

In the curable composition of the present invention, a photo-curable material may be incorporated as necessary. In the photo-curable material, the molecular structure is chemically changed by the action of light in a short period of time to cause changes in physical properties, such as curing. By using such a photo-curable material, surface tackiness (also referred to as residual tackiness) of the cured object obtained by curing the curable composition can be decreased. The photo-curable material is a substance which can be cured by application of light. A typical photo-curable material can be cured by allowing it to stand, for example, in a sunny indoor spot (near a window) for one day at room temperature. As the compound of this type, organic monomers, oligomers, resins, or compositions containing these compounds, and many others are known. Examples thereof include, but are not limited to, unsaturated acrylic compounds, polyvinyl cinnamates, and azide-treated resins.

Examples of the unsaturated acrylic compound include monomers and oligomers having an unsaturated group represented by general formula (47) below, and mixtures of these.

CH₂=CHR⁶²CO(O)- (47)

In the formula, R⁶² represents hydrogen, an alkyl group having 1 to 10 carbon atoms, an aryl group having 6 to 20 carbon atoms, or an aralkyl group having 7 to 10 carbon atoms.

Specific examples of the unsaturated acrylic compound include (meth)acrylates of low-molecular-weight alcohols, such as ethylene glycol, glycerol, trimethylolpropane, pentaerythritol, and neopentyl alcohol; (meth)acrylates of bisphenol A, acids, such as isocyanuric acid, or alcohols obtained by denaturing the low-molecular-weight alcohols described above or the like with ethylene oxide or propylene oxide; (meth)acrylates of polyols, such as hydroxyl group-terminated polyether polyols having a polyether main chain, polymer polyols obtained by radically polymerizing vinyl monomers in polyols having a polyether main chain, hydroxyl group-terminated polyester polyols having a polyester main chain, and polyols having a vinyl or (meth)acrylic polymer main chain containing a hydroxyl group; epoxy acrylate oligomers obtained by reaction of an epoxy resin, such as bisphenol A or novolac epoxy resin with (meth)acrylic acid; and urethane acrylate oligomers each having a urethane bond and a (meth)acrylic group in its molecular chain, and obtained by reaction with a polyol, polyisocyanate, a hydroxyl group-containing (meth)acrylate, or the like.

The polyvinyl cinnamate is a photosensitive resin having a cinnamoyl group as a photosensitive group, and examples thereof include polyvinyl cinnamate obtained by esterification of polyvinyl alcohol with cinnamic acid, and many other polyvinyl cinnamate derivatives.

Azide-treated resins are known as photosensitive resins having azido groups as photosensitive groups, and typical examples include sensitizing rubber solutions in which azide compounds are added as sensitizers. In addition, "Kankosei jushi (Photosensitive resins)" (published on March 17, 1972, by Insatsu Gakkai Shuppanbu, from page 93, from page 106, and from page 117), describes detailed examples. These may be used alone or in combination, and as necessary, with an addition of an intensifier.

Among the photo-curable materials described above, unsaturated acrylic compounds are preferable because of ease of handling.

The photo-curable material is used in an amount of preferably 0.01 to 20 parts by weight based on 100 parts by weight of the vinyl polymer. If the amount is less than 0.01 parts by weight, the effect is low. If the amount exceeds 20 parts by weight, physical properties may be adversely affected. In some cases, the effect can be enhanced by the addition of an intensifier, such as a ketone or a nitro compound, or an accelerator, such as an amine.

### <Air oxidative curing material>

In the curable composition of the present invention, an air oxidative curing material may be incorporated as necessary. The air oxidative curing material is a compound having an unsaturated group which can be crosslinked and cured by oxygen in air. By incorporating the air oxidative curing material, it is possible to decrease the surface tackiness (also referred to as residual tackiness) of the cured object obtained by curing the curable composition.

The air oxidative curing material in the present invention is a substance curable when brought into contact with air, more specifically, curable by reaction with oxygen in air. A typical air oxidative curing material can be cured, for example, by allowing it to stand in air indoors for one day.

Examples of the air oxidative curing material include drying oil, such as tung oil and linseed oil; various types of alkyd resin obtained by modification of such drying oil; acrylic polymers, epoxy resins, and silicone resins modified with drying oil; 1,2-polybutadiene, 1,4-polybutadiene, and polymers and copolymers of C5 to C8 dienes;
and modified products of the polymers and copolymers (maleic acid-modified products, boiled oil-modified products, etc). In particular, tung oil, liquid products among diene polymers (liquid diene polymers), and modified products thereof are preferable.

Specific examples of the liquid diene polymer include liquid polymers obtained by polymerizing or copolymerizing diene compounds, such as butadiene, chloroprene, isoprene, and 1,3-pentadiene; polymers, such as NBR and SBR, obtained by copolymerizing such diene compounds with monomers copolymerizable with the diene compounds, such as acrylonitrile and styrene, such that the diene compounds predominate; and modified products of these compounds (maleic acid-modified products, boiled oil-modified products, etc). These may be used alone or in combination of two or more. Among these liquid diene compounds, liquid polybutadiene is preferable.

The air oxidative curing material may be used alone or in combination of two or more. In some cases, the effect may be enhanced by using the air oxidative curing material together with a catalyst which accelerates oxidative curing reaction or a metal dryer. Examples of such a catalyst or metal dryer include metal salts, such as cobalt naphthenate, lead naphthenate, zirconium naphthenate, cobalt octylate, and zirconium octylate; and amine compounds.

The air oxidative curing material is used in an amount of preferably 0.01 to 20 parts by weight based on 100 parts by weight of the vinyl polymer. If the amount of use is less than 0.01 parts by weight, the effect is low. If the amount of use exceeds 20 parts by weight, physical properties may be adversely affected.

### <Antioxidant>

In the composition of the present invention, an antioxidant may be incorporated as necessary. Various types of antioxidant have been known, for example, as described in "Antioxidant Handbook" published by Taiseisha, "Kobunshizairyo no rekka to anteika (Degradation and stabilization of polymer materials)" published by CMC Chemical (235-242), etc., although not limited thereto.

Examples include thioether-based antioxidants, such as MARK PEP-36 and MARK AO-23 (both manufactured by Adeka Argus Chemical), and phosphorus-based antioxidants, such as Irgafos 38, Irgafos 168, and Irgafos P-EPQ (all of which are manufactured by Nihon Ciba-Geigy). In particular, the hindered phenol compounds described below are preferable.

Examples of the hindered phenol compounds include 2,6-di-tert-butyl-4-methylphenol, 2,6-di-tert-butyl-4-ethylphenol, mono(or di or tri)(α-methylbenzyl)phenol, 2,2'-methylenebis(4-ethyl-6-tert-butylphenol), 2,2'-methylenebis (4-methyl-6-tert-butylphenol), 4,4'-butylidenebis(3-methyl-6-tert-butylphenol), 4,4'-thiobis(3-methyl-6-tertbutylphenol), 2,5-di-tert-butylhydroquinone, 2,5-di-tert-amylhydroquinone, triethylene glycol-bis-[3-(3-tert-butyl-5-methyl-4-hydroxyphenyl)propionate], 1,6-hexanediol-bis[3-(3,5-di-tert-butyl-4-hydroxyphenyl)propionate], 2,4-bis-(n-octylthio)-6-(4-hydroxy-3,5-di-tert-butylanilino)-1,3,5-triazine, pentaerythritol-tetrakis[3-(3,5-di-tert-butyl-4-hydroxyphenyl)propionate], 2,2-thio-diethylenebis[3-(3,5-di-tert-butyl-4-hydroxyphenyl)propionate], octadecyl-3-(3,5-di-tert-butyl-4-hydroxyphenyl)propionate, N,N'-hexamethylenebis(3,5-di-tert-butyl-4-hydroxyhydrocinnamamide), 3,5-di-tert-butyl-4-hydroxybenzylphosphonate-diethyl ester, 1,3,5-trimethyl-2,4,6-tris (3,5-di-tert-butyl-4-hydroxybenzyl)benzene, calcium bis[ethyl(3,5-di-tert-butyl-4-hydroxybenzyl)phosphonate], tris-(3,5-di-tert-butyl-4-hydroxybenzyl)isocyanurate, 2,4-2,4-bis[(octylthio)methyl]o-cresol, N,N'-bis[3-(3,5-di-tert-butyl-4-hydroxyphenyl)propionyl]hydrazine, tris(2,4-di-tert-butylphenyl)phosphite, 2-(5-methyl-2-hydroxyphenyl)benzotriazole, 2-[2-hydroxy-3,5-bis(α,α-dimethylbenzyl)phenyl]-2H-benzotriazole, 2-(3,5-di-tert-butyl-2-hydroxyphenyl)benzotriazole, 2-(3-tert-butyl-5-methyl-2-hydroxyphenyl)-5-chlorobenzotriazole, 2-(3,5-di-tert-butyl-2-hydroxyphenyl)-5-chlorobenzotriazole, 2-(3,5-di-tert-amyl-2-hydroxyphenyl)benzotriazole, 2-(2'-hydroxy-5'-tert-octylphenyl)-benzotriazole, methyl-3-[3-tert-butyl-5-(2H-benzotriazol-2-yl)-4-hydroxyphenyl]propionate-polyethylene glycol (molecular weight: about 300) condensates, hydroxyphenylbenzotriazole derivatives, 2-(3,5-di-tert-butyl-4-hydroxybenzyl)-2-n-butylmalonic acid bis(1,2,2,6,6-pentamethyl-4-piperidyl), and 2,4-di-tert-butylphenyl-3,5-di-tert-butyl-4-hydroxybenzoate.

Examples of trade names include, but are not limited to, NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, NOCRAC DAH (all of which are manufactured by Ouchishinko Chemical Industrial Co., Ltd.), MARK AO-30, MARK AO-40, MARK AO-50, MARK AO-60, MARK AO-616, MARK AO-635, MARK AO-658, MARK AO-80, MARK AO-15, MARK AO-18, MARK 328, and MARK AO-37 (all of which are manufactured by Adeka Argus Chemical), IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, and IRGANOX-1425WL (all of which are manufactured by Nihon Ciba-Geigy), and Sumilizer GM and Sumilizer GA-80 (both manufactured by Sumitomo Chemical).

The antioxidant may be used together with the light stabilizer which will be described below. By using the antioxidant and the light stabilizer together, the effect is further enhanced, and in particular, heat resistance is often improved, thus being particularly preferable. It may also be possible to use TINUVIN C353, TINUVIN B75 (both manufactured by Nihon Ciba-Geigy), or the like in which an antioxidant and a light stabilizer are preliminarily mixed.

The antioxidant is used preferably in an amount of 0.1 to 10 parts by weight based on 100 parts by weight of the vinyl polymer. If the amount is less than 0.1 parts by weight, the effect of improving weatherability is low. If the amount exceeds 5 parts by weight, there is substantially no difference in the effect, which is uneconomical.

### <Light stabilizer>

In the curable composition of the present invention, a light stabilizer may be incorporated as necessary. Various types of light stabilizer have been known, for example, as described in "Antioxidant Handbook" published by Taiseisha, "Kobunshizairyo no rekka to anteika (Degradation and stabilization of polymer materials)" published by CMC Chemical (235-242), etc., although not limited thereto.

Although not limited thereto, among the light stabilizers, ultraviolet absorbers are preferable. Examples thereof include benzotriazole-based compounds, such as TINUVIN P, TINUVIN 234, TINUVIN 320, TINUVIN 326, TINUVIN 327, TINUVIN 329, and TINUVIN 213 (all of which are manufactured by Nihon Ciba-Geigy), triazine-based compounds, such as TINUVIN 1577, benzophenone-based compounds, such as CHIMASSORB 81, and benzoate-based compounds, such as TINUVIN 120 (manufactured by Nihon Ciba-Geigy).

Hindered amine compounds are also preferable, and examples thereof include dimethyl succinate-1-(2-hydroxyethyl)-4-hydroxy-2,2,6,6-tetramethylpiperidine polycondensates, poly[{6-(1,1,3,3-tetramethylbutyl)amino-1,3,5-triazine-2,4-diyl}{(2,2,6,6-tetramethyl-4-piperidyl)imino}], N,N'-bis(3-aminopropyl)ethylenediamine-2,4-bis[N-butyl-N-(1,2,2,6,6-pentamethyl-4-piperidyl)amino]-6-chloro-1,3,5-triazine condensates, bis(2,2,6,6-tetramethyl-4-piperidyl) sebacate, and bis(2,2,6,6-tetramethyl-4-piperidinyl) succinate. Examples of trade names include, but are not limited to, TINUVIN 622LD, TINUVIN 144, CHIMASSORB 944LD, CHIMASSORB 119FL, and Irgafos 168 (all of which are manufactured by Nihon Ciba-Geigy), MARK LA-52, MARK LA-57, MARK LA-62, MARK LA-67, MARK LA-63, MARK LA-68, MARK LA-82, and MARK LA-87, (all of which are manufactured by Adeka Argus Chemical), and Sanol LS-770, Sanol LS-765, Sanol LS-292, Sanol LS-2626, Sanol LS-1114, Sanol LS-744, and Sanol LS-440 (all of which are manufactured by Sankyo).

Furthermore, the combination of an ultraviolet absorber and a hindered amine compound may often produce a higher effect. Thus, the ultraviolet absorber and the hindered amine compound may be used together, and in some cases, are preferably used together.

The light stabilizer may be used together with the antioxidant described above. By using the light stabilizer and the antioxidant together, the effect is further enhanced, and in particular, weatherability is often improved, thus being particularly preferable. It may also be possible to use TINUVIN C353, TINUVIN B75 (both manufactured by Nihon Ciba-Geigy), or the like in which a light stabilizer and an antioxidant are preliminarily mixed.

The light stabilizer is used preferably in an amount of 0.1 to 10 parts by weight based on 100 parts by weight of the vinyl polymer. If the amount is less than 0.1 parts by weight, the effect of improving weatherability is low. If the amount exceeds 5 parts by weight, there will be substantially no difference in the effect, which is uneconomical.

### Other additives

The curable composition of the present invention may be incorporated with various types of additives as required in order to adjust physical properties of the curable composition or the resulting cured object. Examples of such additives include a flame retardant, a curability-adjusting agent, a radical inhibitor, a metal deactivator, an antiozonant, a phosphorus-containing peroxide decomposer, a lubricant, a pigment, a foaming agent, a photo-curable resin, a chain extender, a foam control agent, and a crosslinking agent. These additives may be used alone or in combination of two or more.

Specific examples of such additives are described, for example, in Japanese Examined Patent Application Publication Nos. 4-69659 and 7-108928, and Japanese Unexamined Patent Application Publication Nos. 63-254149 and 64-22904.

The curable composition of the present invention can be prepared as a one-component curable composition in which all the components are preliminarily mixed, hermetically sealed, and stored, and which is cured by moisture in air after being applied to a desired place. Alternatively, the curable composition of the present invention can be prepared as a two-component curable composition in which a mixture of components, such as a curing catalyst, a filler, a plasticizer, and water, is separately prepared as a curing agent, and the mixture and the polymer composition are mixed before use. In the case of two-component curable composition, a colorant can be added at the time of mixing the two components. Thus, it is easy to meet the multicolor requirements in the market. For example, when sealants matching the colors of siding boards are supplied, it is possible to have a great stock of colors with minimum inventory. Thus, the two-component curable composition is more suitable for low-rise buildings and the like. If a colorant in the paste form, for example, prepared by mixing a pigment, a plasticizer, and if required, a filler, is used, the work is facilitated. Furthermore, by adding a retarding agent during mixing of the two components, the curing rate can be finely adjusted at the working site.

### <<Cured object>>

### <Applications>

The curable composition of the present invention can be used in various applications. Examples thereof include, but are not limited to, sealing materials, such as elastic sealants for construction and sealants for double glass, materials for electrical and electronic components, such as sealants used for back surfaces of solar cells, electrical insulating materials, such as insulating coatings for electric wires and cables, pressure-sensitive adhesives, adhesives, elastic adhesives, reactive hot-melt adhesives, paint, powdered paint, coating materials, foams, sealing materials for can lids, potting materials for electrical and electronic use, films, gaskets, casting materials, various molding materials, artificial marble, sealants used for rust-proofing and water-proofing of edges (cut sections) of wire glass and laminated glass, vibration-proof, damping, soundproof, and earthquake-proof materials used for automobiles, ships and vessels, home electric appliance, etc., and liquid sealing materials used for automobile parts, electrical parts, various types of mechanical parts, etc.

### [Examples]

Examples of the present invention together with comparative examples will be described below. However, the invention is not limited to the examples.

In the following examples and comparative examples, "part(s)" and "%" mean "part(s) by weight" and "% by weight", respectively. In the examples, the term "triamine" means "pentamethyldiethylenetriamine".

In the following examples, the "number-average molecular weight" and the "molecular-weight distribution (ratio of weight-average molecular weight to number-average molecular weight)" was calculated on the basis of a polystyrene standard sample using gel permeation chromatography (GPC). In the GPC, a GPC column packed with crosslinked polystyrene gel (shodex GPC K-804; manufactured by Showa Denko) was used, and chloroform was used as a GPC solvent.

### (Production Example 1)

A reactor equipped with an agitator was charged with CuBr (4.2 g) and acetonitrile (27.3 g), and stirring was performed in a nitrogen atmosphere at 65°C for 15 minutes. n-Butyl acrylate (100 g), diethyl 2,5-dibromoadipate (8.8 g), and acetonitrile (16.6 g) were added thereto, and stirring was performed to achieve thorough mixing. Triamine (0.17 g) was added to the mixture to initiate polymerization. While stirring at 70°C, n-butyl acrylate (400 g) was continuously added dropwise. Triamine (0.68 g) was added in portions during dropwise addition of the n-butyl acrylate.

When the monomer reaction rate reached 96%, the residual monomer and acetonitrile were removed by volatilization at 80°C, and then 1,7-octadiene (53.7 g), acetonitrile (132 g), and triamine (1.69 g) were added thereto. Subsequently, stirring was performed at 70°C to prepare a mixture containing an alkenyl group-containing polymer.

The acetonitrile and unreacted 1,7-octadiene in the mixture were removed by volatilization by heating, and dilution was performed with methylcyclohexane. The insoluble polymerization catalyst was precipitated by centrifugation and removed. An adsorbent in an amount of 6 parts (Kyowaad 500SH 3 parts and Kyowaad 700SL 3 parts; both manufactured by Kyowa Chemical Co., Ltd.) relative to 100 parts of the polymer was added to the polymer methylcyclohexane solution, and stirring was performed under heating in an atmosphere of a mixed gas of oxygen and nitrogen. Insolubles were removed, and the polymer solution was concentrated to obtain an alkenyl group-containing polymer (polymer [1]).

The resulting polymer [1] was devolatilized (at a reduced pressure of 10 torr or less) under stirring at 180°C for 12 hours. Furthermore, 100 parts of the polymer was diluted with 400 parts of methylcyclohexane, solids were removed, and the resulting solution was concentrated to obtain a polymer [2]. The number-average molecular weight of the polymer [2] was 24,800, and the molecular-weight distribution was 1.36. The average number of alkenyl groups introduced into the polymer per molecule was 1.8.

Methyl orthoformate (1 mole equivalent relative to the alkenyl group), a platinum catalyst (10 mg in terms of platinum metal relative to 1 kg of the polymer), and 1-(2-trimethoxysilylethynyl)-1,1,3,3-tetramethyldisiloxane (1.5 mole equivalents relative to the alkenyl group) were added in that order to the polymer [2], followed by mixing, and stirring was performed at 100°C for 0.5 hours in a nitrogen atmosphere. The disappearance of the alkenyl group due to the reaction was confirmed by ¹H-NMR, and the reaction mixture was concentrated to prepare a target methoxysilyl group-containing polymer [P1]. The number-average molecular weight was 27,900, and the molecular-weight distribution was 1.32.

The average number of silyl groups introduced into the polymer per molecule was 1.7.

### (Production Example 2)

A 300-mL flask equipped with a reflux tube and an agitator was charged with CuBr (1.01 g, 7 mmol), and the reactor was nitrogen-purged. Acetonitrile (11.5 mL) was added thereto, and stirring was performed in an oil bath at 70°C for 15 minutes. Butyl acrylate (33.6 mL, 234 mmol), ethyl acrylate (46.7 mL, 431 mmol), 2-methoxyethyl acrylate (34.9 mL, 272 mmol), diethyl 2,5-dibromoadipate (2.81 g, 7.8 mmol), and triamine (0.05 mL, 0.04 g, 0.2 mmol) were added to the mixture, and a reaction was initiated. The reaction was carried out while stirring at 70°C, and triamine (0.20 mL, 0.16 g, 0.9 mmol) was further added during the reaction. 180 Minutes after the reaction started, at a monomer conversion rate of 98%, 5-hexen-1-ol (14.1 mL, 11.7 g, 117 mmol) and triamine (0.49 mL, 0.41 g, 2.3 mmol) were added to the mixture, and stirring was continued at 80°C for 480 minutes.

After volatiles in the reaction mixture were removed by distillation under reduced pressure, dilution was performed with toluene (500 g), and solids were removed by filtration. Subsequently, acidic aluminum silicate (5 g, manufactured by Kyowa Chemical, Kyowaad 700SL) and basic aluminum silicate (5 g, manufactured by Kyowa Chemical, Kyowaad 500SH) were charged, and the mixture was stirred under a nitrogen stream at 100°C for 4 hours. The aluminum silicate was filtered off, and the toluene was distilled off from the filtrate under reduced pressure. Thereby, a hydroxyl group-terminated copolymer (butyl acrylate/ethyl acrylate/methoxyethyl acrylate copolymer having a hydroxyl group at a terminus: polymer [P2]) was prepared. The resulting copolymer had a number-average molecular weight of 17,800 as determined by GPC measurement (polystyrene equivalent basis) and a molecular weight distribution of 1.16. The average number of hydroxyl groups introduced into the copolymer per molecule was about 2.5 as determined by ¹H-NMR analysis.

### (Example 1)

To 100 parts of the polymer [P1] prepared in Production Example 1 and 100 parts of the polymer [P2] prepared in Production Example 2, 12 parts of isophorone diisocyanate, 2.8 parts of 1,4-butanediol, 0.8 parts of trimethylolpropane, and 3 parts of TINUVIN B 75 (manufactured by Ciba Specialty Chemicals) were mixed. Using a tetravalent Sn catalyst (0.5 parts of a mixture of equivalent amounts of dibutyltin oxide and dioctyl phthalate), the polymer mixture was cured at room temperature for 7 days and then at 50°C for 7 days, and a cured sheet was produced.

### (Example 2)

To 100 parts of the polymer [P1] prepared in Production Example 1 and 100 parts of polyoxypropylene glycol having a number-average molecular weight of about 3,000 (manufactured by Mitsui Takeda Chemicals; ACTOCOL P-23), 52.6 parts of 4,4'-diphenylmethane diisocyanate, 5.0 parts of 1,4-butanediol, 0.9 parts of trimethylolpropane, and 3 parts of TINUVIN B 75 (manufactured by Ciba Specialty Chemicals) were mixed. Using a tetravalent Sn catalyst (0.5 parts of a mixture of equivalent amounts of dibutyltin oxide and dioctyl phthalate), the polymer mixture was cured at room temperature for 7 days and then at 50°C for 7 days, and a cured sheet was produced.

### (Comparative Example 1)

A cured sheet was produced as in Example 2 except that the polymer [P1] was not used.

### (Evaluation)

With respect to the cured objects produced in Example 2 and Comparative Example 1, weatherability was tested with a sunshine weatherometer (Type WEL-SUN-DC manufactured by Suga Test Instruments, at a black panel temperature of 63°C, 18 minutes of rain in 2 hours of exposure). After the weatherability test was carried out for 200 hours, the surface state was observed. In Example 2, there was no change. However, in Comparative Example 2, the original shape was lost because of melting.

In the curable composition containing the vinyl polymer having a crosslinkable functional group and the organic polymer having a group reactive with an isocyanato group, good weatherability was exhibited.

### Industrial Applicability

The present invention provides a curable composition containing a vinyl polymer having a crosslinkable functional group and an organic polymer having a group reactive with an isocyanato group. It is possible to provide a composition having balanced physical properties in which characteristics of both polymers are exploited.

## Claims

1. A curable composition comprising the following two components:
(A) a vinyl polymer (I) having a crosslinkable functional group; and
(B) an organic polymer (II) having a group reactive with an isocyanato group and having a different main chain structure from that of the component (A).

2. The curable composition according to Claim 1, wherein the crosslinkable functional group of the vinyl polymer (I) is an active hydrogen.

3. The curable composition according to Claim 1, wherein vinyl polymer (I) has a crosslinkable functional group other than an active hydrogen.

4. The curable composition according to any one of Claims 1 to 3, wherein the vinyl polymer (I) and the organic polymer (II) have different functional groups.

5. The curable composition according to any one of Claims 1 to 4, wherein the group reactive with the isocyanato group in the organic polymer (II) is an active hydrogen.

6. The curable composition according to Claim 5, wherein the active hydrogen in the organic polymer (II) is a hydroxyl group.

7. The curable composition according to Claim 5, wherein the active hydrogen in the organic polymer (II) is an amino group.

8. The curable composition according to Claim 5, wherein the active hydrogen in the organic polymer (II) is a carboxyl group.

9. The curable composition according to any one of Claims 1 to 4, wherein the group reactive with the isocyanato group in the organic polymer (II) is an epoxy group.

10. The curable composition according to any one of Claims 1 to 4, wherein the organic polymer (II) is a urethane prepolymer prepared by reaction of an active hydrogen-containing compound with an organic polyisocyanate.

11. The curable composition according to any one of Claims 1 to 10, wherein the main chain of the organic polymer (II) is a polyether polymer.

12. The curable composition according to any one of Claims 1 to 10, wherein the main chain of the organic polymer (II) is a polyester polymer.

13. The curable composition according to any one of Claims 1 to 10, wherein the main chain of the organic polymer (II) is a vinyl polymer produced by polymerizing mainly a monomer selected from the group consisting of (meth)acrylic monomers, acrylonitrile monomers, aromatic vinyl monomers, fluorine-containing vinyl monomers, and silicon-containing vinyl monomers.

14. The curable composition according to Claim 13, wherein the main chain of the organic polymer (II) is a (meth)acrylic polymer.

15. The curable composition according to Claim 14, wherein the main chain of the organic polymer (II) is a (meth)acrylic polymer produced by continuous polymerization.

16. The curable composition according to Claim 14 or 15, wherein the main chain of the organic polymer (II) is an acrylic polymer.

17. The curable composition according to Claim 16, wherein the main chain of the organic polymer (II) is an acrylate polymer.

18. The curable composition according to any one of Claims 1 to 17, wherein the molecular-weight distribution of the vinyl polymer (I) is less than 1.8.

19. The curable composition according to any one of Claims 1 to 18, wherein the main chain of the vinyl polymer (I) is produced by polymerizing mainly a monomer selected from the group consisting of (meth)acrylic monomers, acrylonitrile monomers, aromatic vinyl monomers, fluorine-containing vinyl monomers, and silicon-containing vinyl monomers.

20. The curable composition according to Claim 19, wherein the main chain of the vinyl polymer (I) is a (meth)acrylic polymer.

21. The curable composition according to Claim 20, wherein the main chain of the vinyl polymer (I) is an acrylic polymer.

22. The curable composition according to Claim 21, wherein the main chain of the vinyl polymer (I) is an acrylate polymer.

23. The curable composition according to any one of Claims 1 to 22, wherein the crosslinkable functional group of the vinyl polymer (I) is located at an end of the main chain.

24. The curable composition according to any one of Claims 1 to 23, wherein the crosslinkable functional group of the vinyl polymer (I) is a crosslinkable silyl group.

25. The curable composition according to any one of Claims 1 to 23, wherein the crosslinkable functional group of the vinyl polymer (I) is an alkenyl group.

26. The curable composition according to any one of Claims 1 to 23, wherein the crosslinkable functional group of the vinyl polymer (I) is a hydroxyl group.

27. The curable composition according to any one of Claims 1 to 23, wherein the crosslinkable functional group of the vinyl polymer (I) is an amino group.

28. The curable composition according to any one of Claims 1 to 23, wherein the crosslinkable functional group of the vinyl polymer (I) is a group having a polymerizable carbon-carbon double bond.

29. The curable composition according to any one of Claims 1 to 23, wherein the crosslinkable functional group of the vinyl polymer (I) is an epoxy group.

30. The curable composition according to any one of Claims 1 to 23, wherein the crosslinkable functional group of the vinyl polymer (I) is an amino group.

31. The curable composition according to any one of Claims 1 to 30, wherein the main chain of the vinyl polymer (I) is produced by living radical polymerization.

32. The curable composition according to Claim 31, wherein the living radical polymerization is atom transfer radical polymerization.

33. The curable composition according to Claim 32, wherein the atom transfer radical polymerization is carried out using, as a catalyst, a transition metal complex with an element selected from Groups 7, 8, 9, 10, and 11 of the periodic table as a central metal.

34. The curable composition according to Claim 33, wherein the metal complex used as the catalyst is selected from the group consisting of copper complexes, nickel complexes, ruthenium complexes, and iron complexes.

35. The curable composition according to Claim 34, wherein the metal complex used as the catalyst is a copper complex.

36. The curable composition according to any one of Claims 1 to 35, further comprising a polyisocyanate compound.

37. The curable composition according to any one of Claims 1 to 36, wherein the crosslinkable functional group of the vinyl polymer (I) is a hydroxyl group, the group reactive with the isocyanato group in the organic polymer (II) is a hydroxyl group, and the main chain of the organic polymer (II) is a polyether polymer.

38. The curable composition according to any one of Claims 1 to 36, wherein the crosslinkable functional group of the vinyl polymer (I) is a crosslinkable silyl group, the group reactive with the isocyanato group in the organic polymer (II) is a hydroxyl group, and the main chain of the organic polymer (II) is a polyether polymer.

39. The curable composition according to any one of Claims 1 to 36, wherein the crosslinkable functional group of the vinyl polymer (I) is an epoxy group, the group reactive with the isocyanato group in the organic polymer (II) is a hydroxyl group, and the main chain of the organic polymer (II) is a polyether polymer.

40. The curable composition according to any one of Claims 1 to 36, wherein the crosslinkable functional group of the vinyl polymer (I) is an amino group, the group reactive with the isocyanato group in the organic polymer (II) is a hydroxyl group, and the main chain of the organic polymer (II) is a polyether polymer.

41. An adhesive comprising the curable composition according to any one Claims 1 to 40.

42. A reactive hot-melt adhesive comprising the curable composition according to any one of Claims 1 to 40.

43. A sealing material comprising the curable composition according to any one of Claims 1 to 40.

44. A liquid gasket comprising the curable composition according to any one of Claims 1 to 40.

45. A curable composition comprising the following two components:
(A) a vinyl polymer (I) having a crosslinkable silyl group; and
(B) an organic polymer (II) having a hydroxyl group and having a different main chain structure from that of the component (A).

46. The curable composition according to Claim 45, wherein the main chain of the organic polymer (II) is a polyether polymer.

47. An adhesive comprising the curable composition according to Claim 45 or 46.

48. A reactive hot-melt adhesive comprising the curable composition according to Claim 45 or 46.

49. A sealing material comprising the curable composition according to Claim 45 or 46.

50. A liquid gasket comprising the curable composition according to Claim 45 or 46.
